(19)

Europäisches Patentamt

European Patent Office

Office européen des brevets

(11) **EP 4 494 870 A1**

(12) **EUROPEAN PATENT APPLICATION**
published in accordance with Art. 153(4) EPC

(43) Date of publication:
**22.01.2025 Bulletin 2025/04**

(21) Application number: **23770847.4**

(22) Date of filing: **15.03.2023**

(51) International Patent Classification (IPC):
*B32B 27/32* (2006.01)    *B27M 3/00* (2006.01)
*B32B 27/00* (2006.01)    *C08K 3/01* (2018.01)
*C08L 23/12* (2006.01)    *E04F 13/07* (2006.01)
*E04F 15/02* (2006.01)    *E04F 15/16* (2006.01)

(52) Cooperative Patent Classification (CPC):
**B27M 3/00; B32B 27/00; B32B 27/32; C08K 3/01;
C08L 23/12;** E04F 13/07; E04F 15/02; E04F 15/16

(86) International application number:
**PCT/JP2023/010126**

(87) International publication number:
**WO 2023/176894 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 JP 2022040399
23.03.2022 JP 2022047417
23.03.2022 JP 2022047418
28.03.2022 JP 2022051701
31.03.2022 JP 2022060563
05.04.2022 JP 2022062928
15.04.2022 JP 2022067539
24.01.2023 JP 2023009035**

(71) Applicant: **Toppan Holdings Inc.
Tokyo 110-0016 (JP)**

(72) Inventors:
• **NOGUCHI Shota**
  **Tokyo 110-0016 (JP)**
• **TORIUMI Shingo**
  **Tokyo 110-0016 (JP)**
• **HASHIMOTO Sayaka**
  **Tokyo 110-0016 (JP)**
• **AKASHI Aya**
  **Tokyo 110-0016 (JP)**
• **KUWAMURA Kensuke**
  **Tokyo 110-0016 (JP)**
• **TOGASAKI Hiromasa**
  **Tokyo 110-0016 (JP)**

(74) Representative: **TBK
Bavariaring 4-6
80336 München (DE)**

(54) **DECORATIVE SHEET AND DECORATIVE MATERIAL**

(57)    A decorative sheet and a decorative material capable of at least preventing a decrease in surface hardness even when formed using plant-derived materials are provided. A decorative sheet (1) according to a first embodiment includes: a colored substrate layer (2); an adhesive layer (4); and a transparent resin layer (5), which are laminated in this order, wherein the transparent resin layer (5) is a resin layer formed of a resin composition containing biomass-derived polypropylene which is obtained by polymerizing a monomer containing biomass-derived propylene.

FIG.1

EP 4 494 870 A1

## Description

[Technical Field]

The present invention relates to decorative sheets and decorative materials.

[Background Art]

Decorative sheets using olefin-based resins have been proposed as an alternative to polyvinyl chloride decorative sheets, an example of which is disclosed in PTL 1.

[Citation List]

[Patent Literature]

PTL 1: JP 2014-188941 A

[Summary of Invention]

[Technical Problem]

In recent years, against the background of environmental issues, there has been a demand to change the materials for decorative sheets from conventional petroleum-derived materials to plant-derived materials. However, when decorative sheets are formed using biomass polyolefins such as biomass polyethylene as a plant-derived material, there is a problem that the surface hardness is insufficient for use as decorative sheets.
In view of the above problem, the present invention has been made to provide a decorative sheet and a decorative material capable of at least preventing a decrease in surface hardness even when formed using plant-derived materials.

[Solution to Problems]

In order to solve the above problem, an aspect of the present invention is a decorative sheet including: a colored thermoplastic resin layer; an adhesive layer; and a transparent thermoplastic resin layer, which are laminated in this order, wherein the transparent thermoplastic resin layer is a resin layer formed of a resin composition containing biomass-derived polypropylene which is obtained by polymerizing a monomer containing biomass-derived propylene.
Further, another aspect of the present invention is a decorative sheet including: a colored thermoplastic resin layer; an adhesive layer; a transparent thermoplastic resin layer; and a surface protective layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, and the surface protective layer is a resin layer formed of a resin composition containing a biomass-derived material.
Further, another aspect of the present invention is a decorative sheet including: a colored thermoplastic resin layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene.
Further, another aspect of the present invention is a decorative sheet including: a colored thermoplastic resin layer; a pattern layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, and the pattern layer contains a colorant and a biomass-derived material.
Further, another aspect of the present invention is a decorative sheet including: a colored thermoplastic resin layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, the colored thermoplastic resin layer further contains an inorganic substance, and the colored thermoplastic resin layer has a specific gravity in the range of 0.91 or greater and 1.3 or less.
Further, another aspect of the present invention is a decorative sheet including at least a thermoplastic resin layer, wherein the thermoplastic resin layer is a resin layer formed of a resin composition containing biomass-derived polypropylene which is obtained by polymerizing a monomer containing biomass-derived propylene, the thermoplastic resin layer being colored or colorless transparent.

Further, another aspect of the present invention is a decorative sheet including at least a transparent thermoplastic resin layer, with no laminate layer made of any other film disposed on front and rear sides of the transparent thermoplastic resin layer, wherein the transparent thermoplastic resin layer is a resin layer formed of a resin composition containing biomass-derived polypropylene which is obtained by polymerizing a monomer containing biomass-derived propylene.

Further, another aspect of the present invention is a decorative sheet including: a colored thermoplastic resin layer; an adhesive layer; and a transparent thermoplastic resin layer, which are laminated in this order, wherein the transparent thermoplastic resin layer is formed of a resin composition containing biomass-derived polypropylene which is obtained by polymerizing a monomer containing biomass-derived propylene, and contains a nucleating agent that has been subjected to nanosizing treatment.

[Advantageous Effects of Invention]

According to an aspect of the present invention, it is possible to provide a decorative sheet and a decorative material capable of at least preventing a decrease in surface hardness even when formed using biomass-derived polypropylene, which is a plant-derived material.

[Brief Description of Drawings]

Fig. 1 is a cross-sectional view schematically illustrating a configuration of a decorative sheet and decorative material according to first to fifth embodiments of the present invention.
Fig. 2 is a cross-sectional view schematically illustrating a configuration of a decorative sheet and decorative material according to a sixth embodiment of the present invention.
Fig. 3 is a cross-sectional view schematically illustrating a configuration of a decorative sheet according to a seventh embodiment of the present invention.
Fig. 4 is a cross-sectional view schematically illustrating a configuration of a decorative material to which a decorative sheet according to a seventh embodiment of the present invention is applied.
Fig. 5 is a cross-sectional view schematically illustrating a configuration of a decorative sheet according to an eighth embodiment of the present invention.
Fig. 6 is a cross-sectional view schematically illustrating a configuration of a decorative material to which a decorative sheet according to an eighth embodiment of the present invention is applied.

[Description of Embodiments]

With reference to the drawings, embodiments (first to eighth embodiments) of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

<First Embodiment>

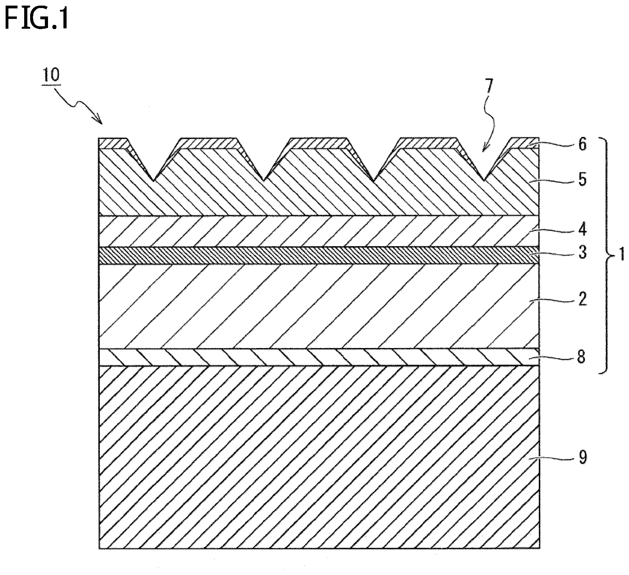

With reference to Fig. 1, a configuration of a decorative sheet 10 will be described.
The decorative material 10 include a decorative sheet 1 and a substrate material 9 as shown in Fig. 1. The detailed configuration of the decorative sheet 1 will be described later.
The substrate material 9 has a board-like shape and is formed using, for example, a wooden board, an inorganic board, a metal plate, or the like, with the decorative sheet 1 laminated on a first surface (upper surface in Fig. 1) of the substrate material 9. That is, the decorative material 10 includes the substrate material 9 and the decorative sheet 1 laminated on the first surface of the substrate material 9.

(Configuration of Decorative Sheet)

As shown in Fig. 1, the decorative sheet 1 includes a colored substrate layer (colored thermoplastic resin layer) 2, a pattern layer 3, an adhesive layer 4, a transparent resin layer (transparent thermoplastic resin layer) 5, a surface protective layer 6, an uneven portion 7 and a primer layer 8.

<Colored Substrate Layer>

The colored substrate layer 2 is a resin layer formed of a thermoplastic resin, and is a colored resin layer formed of a resin composition containing a polyolefin. More specifically, the colored substrate layer 2 is a colored resin layer formed of a resin composition containing, for example, polyethylene or polypropylene.

The colored substrate layer 2 may have a density of 0.90 g/cm$^3$ to 1.40 g/cm$^3$, and preferably 0.90 g/cm$^3$ to 1.10 g/cm$^3$. The density of the colored substrate layer 2 is measured according to the method specified by Method A in JIS K 7112-1980 after being subjected to annealing described in JIS K 6760-1995. The density of the colored substrate layer 2 of 0.90 g/cm$^3$ or greater can increase the rigidity of the colored substrate layer 2. Further, the density of the colored substrate layer 2 of 1.40 g/cm$^3$ or less can increase the transparency, flexibility and mechanical strength of the colored substrate layer 2.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 30 μm or greater and 70 μm or less, more preferably 40 μm or greater and 65 μm or less, and still more preferably 50 μm or greater and 60 μm or less. The reason for this is that the thickness of the colored substrate layer 2 of 30 μm or greater can absorb unevenness and steps in the underlying floor materials or the like, improving the installation finish of the decorative sheet 1. Further, the thickness of the colored substrate layer 2 of 70 μm or less can prevent an unnecessary increase in thickness of the colored substrate layer 2, reducing the production cost of the decorative sheet 1.

The colored substrate layer 2 may be a colored resin layer formed of a resin composition containing a biomass-derived (plant-derived) polyolefin, or may be a colored resin layer formed of a resin composition containing a fossil fuel-derived polyolefin.

<Pattern Layer>

The pattern layer 3 is a layer laminated on a first surface (upper surface in Fig. 1) of the colored substrate layer 2 and adding a pattern for imparting design properties. Further, the pattern layer 3 may be omitted if it can be substituted by coloring due to the colored substrate layer 2.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

Examples of the binder resin include, but are not limited to, urethane-based resins, acrylic-based resins, vinyl chloride acetate-based resins, polyimide-based resins, nitrocellulose, and mixtures thereof.

Examples of the pattern include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

The pattern layer 3 may have a thickness preferably in the range of 1 μm or greater and 10 μm of less. The thickness of the pattern layer 3 of 1 μm or greater can ensure clear printing. Further, the thickness of the pattern layer 3 of 10 μm or less can improve printing workability during production of the decorative sheet 1, and thus reduce the production cost.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Adhesive Layer>

The adhesive layer 4 is a layer laminated on a first surface (upper surface in Fig. 1) of the pattern layer 3 and used for bonding the pattern layer 3 to the transparent resin layer 5.

Examples of the materials used for the adhesive layer 4 include urethane, acrylic, ethylene-vinyl acetate copolymer, vinyl chloride-vinyl acetate copolymer, polyester and polyolefin-based materials. In particular, polyolefin-based resins are preferred from the viewpoint of adhesion to the transparent resin layer 5.

<Transparent Resin Layer>

The transparent resin layer 5 is a layer laminated on a first surface (upper surface in Fig. 1) of the adhesive layer 4, and the transparent resin layer 5 is a resin layer formed of a thermoplastic resin, and is a transparent resin layer formed of a resin composition containing biomass-derived (plant-derived) polypropylene. That is, the transparent resin layer 5 may be a transparent resin layer formed of a resin composition containing biomass-derived polypropylene, and may further contain fossil fuel-derived polypropylene in addition to the biomass-derived polypropylene.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.

The raw material monomer for polypropylene does not necessarily have to contain 100 mass% of biomass-derived propylene.

The raw material monomer for biomass-derived polypropylene may further contain fossil fuel-derived propylene.

By using biomass-derived propylene as the raw material, it is theoretically possible to produce polypropylene formed of 100% biomass-derived components.

The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} \, (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.

In the present embodiment, the biomass degree of the biomass-derived polypropylene or the decorative sheet containing the biomass-derived polypropylene may not necessarily have to be 100.

In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene, such as homopolypropylene, random polypropylene or block polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain the biomass-derived propylene in an amount of 5 mass% or greater, preferably 5 mass% to 99 mass%, and more preferably 25 mass% to 75 mass%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, and more preferably 25 mass% to 75 mass%, and contains fossil fuel-derived polypropylene in an amount of preferably 1 mass% to 95 mass%, and more preferably 25 mass% to 75 mass%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

As described above, the transparent resin layer 5 may contain the biomass-derived propylene in an amount of 5 mass% or greater, preferably 5 mass% to 99 mass%, more preferably 25 mass% to 75 mass%, and most preferably 40 mass% to 75%, relative to the entire transparent resin layer 5. The concentration of the biomass-derived propylene in the transparent resin layer 5 of 5 mass% or greater can reduce the amount of fossil fuels used compared to conventional products, which makes it possible to provide a carbon-neutral decorative sheet.

The transparent resin layer 5 may have a density of $0.90 \text{ g/cm}^3$ to $0.96 \text{ g/cm}^3$, and preferably $0.90 \text{ g/cm}^3$ to $0.91 \text{ g/cm}^3$. The density of the transparent resin layer 5 is measured according to the method specified by Method A in JIS K 7112-1980 after being subjected to annealing described in JIS K 6760-1995. The density of the transparent resin layer 5 of $0.90 \text{ g/cm}^3$ or greater can increase the rigidity of the transparent resin layer 5. Further, the density of the transparent resin layer 5 of $0.96 \text{ g/cm}^3$ or less can improve transparency, extrusion suitability and mechanical strength of the transparent resin layer 5.

The transparent resin layer 5 may have a biomass degree in the range of 10% or greater and 90% or less relative to the entire transparent resin layer 5.

The method of producing the transparent resin layer 5 is not particularly limited, and any known method can be used. In the present embodiment, extrusion molding is preferred.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 may have a thickness preferably in the range of 10 $\mu$m or greater and 150 $\mu$m or less, more preferably 51 $\mu$m or greater and 120 $\mu$m or less, and still more preferably 55 $\mu$m or greater and 100 $\mu$m or less. The reason for this is that the thickness of the transparent resin layer 5 composed of biomass-derived polypropylene of 10 $\mu$m or greater can ensure good embossing to be formed and absorb unevenness and steps in the underlying floor materials or the like, improving the installation finish of the decorative sheet 1. Further, the thickness of the transparent resin layer 5 of 150 $\mu$m or less can prevent an unnecessary increase in thickness of the transparent resin layer 5, reducing the production cost of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

In the present embodiment, the transparent resin layer 5 and the colored substrate layer 2 preferably satisfy the following specific relationship in density and thickness.

In the present embodiment, a density d1 of the transparent resin layer 5 and a density d2 of the colored substrate layer 2 preferably satisfy d2>d1. The reason for this is that the transparent resin layer 5 requires shapeability and the colored substrate layer 2 requires productivity.

The ratio (d2/d1) between the density d1 of the transparent resin layer 5 and the density d2 of the colored substrate layer 2 is preferably in the range of 1.1 or greater and 1.5 or less, more preferably in the range of 1.1 or greater and 1.3 or less, and still more preferably in the range of 1.1 or greater and 1.2 or less. With the density ratio between the transparent resin layer and the colored substrate layer within the above ranges, it is possible to provide the decorative sheet with required extrusion suitability and bending processability even when biomass-derived polypropylene is used as the constituent resin of the transparent resin layer 5.

In the present embodiment, a thickness t1 of the transparent resin layer 5 and a thickness t2 of the colored substrate layer 2 preferably satisfy t1≥t2. The reason for this is that the transparent resin layer 5 needs to be thick and the colored substrate layer 2 does not need to be as thick as the transparent resin layer 5.

The ratio (t1/t2) between the thickness t1 of the transparent resin layer 5 and the thickness t2 of the colored substrate layer 2 is preferably in the range of 1.1 or greater and 3 or less, more preferably in the range of 1.1 or greater and 2 or less, and still more preferably in the range of 1.1 or greater and 1.5 or less.

The biomass-derived polypropylene constituting the transparent resin layer 5 may contain a nucleating agent.

The nucleating agent may be added to the polypropylene in an amount preferably in the range of 500 ppm or greater and 2,000 ppm or less, and more preferably in the range of 1,500 ppm or greater and 2,000 ppm or less, relative to the mass of the polypropylene.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 preferably has transparency (colorless transparency, colored transparency or translucency) to the extent that the pattern of the pattern layer 3 can be seen through the surface (top surface) of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

<Surface Protective Layer>

The surface protective layer 6 is a layer laminated on a first surface (upper surface in Fig. 1) of the transparent resin layer 5 and imparting functions, such as weatherability, scratch resistance, stain resistance and design properties, to the decorative sheet 1.

The surface protective layer 6 can be made of a thermosetting resin or an ionizing radiation-curable resin, and may be formed using, for example, an acrylic-based resin composition.

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents, antifungal agents and antiviral agents.

<Uneven Portion>

The uneven portion 7 is formed of recesses provided at a plurality of positions on the transparent resin layer 5 and the surface protective layer 6.

<Primer Layer>

The primer layer 8 is a layer that serves as a primer and improves corrosion resistance and adhesion between the colored substrate layer 2 and the substrate material 9.

The primer layer 8 is laminated on a second surface (lower surface in Fig. 1) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The primer layer 8 may have a thickness, for example, in the range of 1 $\mu$m or greater and 10 $\mu$m of less.

The embodiment described above is an example of the present invention, and the present invention is not limited to the embodiment described above. In addition to the above embodiment, various modifications can be made according to the design and the like without departing from the technical idea of the present invention.

(Effects of Present Embodiment)

According to the decorative sheet 1 of the present embodiment, the following effects can be achieved.

(1) The transparent resin layer 5 is a resin layer formed of a resin composition containing biomass-derived polypropylene which is obtained by polymerizing a monomer containing biomass-derived propylene.

This increases the strength compared to, for example, a configuration formed of polyethylene or the like, making it possible to form a transparent resin layer 5 having high scratch resistance and the like.

As a result, a decorative sheet 1 capable of preventing a decrease in surface hardness can be provided even when it is formed of biomass-derived polypropylene, which is a plant-derived material.

Furthermore, a transparent resin layer 5 having high transparency equivalent to, for example, that of a configuration formed of polyethylene or the like can be formed even when it has a configuration formed of biomass-derived polypropylene, which is a plant-derived material.

(2) The transparent resin layer 5 contains biomass-derived polypropylene in an amount in the range of 5 mass% or greater and 99 mass% or less relative to a total mass of the transparent resin layer 5.

As a result, a transparent resin layer 5 having higher environmental suitability can be formed.

(3) The colored substrate layer 2 has a thickness in the range of 30 $\mu$m or greater and 70 $\mu$m or less, and the transparent resin layer 5 has a thickness in the range of 10 $\mu$m or greater and 150 $\mu$m or less.

As a result, the installation finish of the decorative sheet 1 can be improved, and a transparent resin layer 5 and a colored substrate layer 2 with good shapeability and high production efficiency can be formed.

(4) The transparent resin layer 5 contains biomass-derived propylene and has a density in the range of 0.90 g/cm$^3$ or greater and 0.96 g/cm$^3$ or less.

As a result, a transparent resin layer 5 having higher hardness can be formed.

(5) The colored substrate layer 2 has a density in the range of 0.90 g/cm$^3$ or greater and 1.40 g/cm$^3$ or less.

As a result, a colored substrate layer 2 having good concealing properties and sufficient flexibility as a decorative sheet can be formed.

(6) The colored substrate layer 2 is a resin layer formed of a resin composition containing a polyolefin.

As a result, a colored substrate layer 2 having sufficient flexibility as a decorative sheet can be formed.

Further, according to the decorative material 10 of the present embodiment, the following effects can be achieved.

(7) The decorative material 10 includes the substrate material 9 and the decorative sheet 1 laminated on at least a first surface of the substrate material 9.

As a result, a decorative material 10 capable of preventing a decrease in surface hardness can be provided even when it is formed of biomass-derived polypropylene, which is a plant-derived material.

<Modifications>

(1) In the embodiment, the decorative material 10 has a configuration in which the decorative sheet 1 is laminated on the first surface of the substrate material 9, but the configuration is not limited thereto. That is, the decorative material 10 may have a configuration in which the decorative sheet 1 is laminated not only on the first surface of the substrate material 9 but also on a second surface (lower surface in Fig. 1) of the substrate material 9.

[Examples]

Referring to the present embodiment, decorative materials of Examples 1-1 to 1-11 and decorative materials of Comparative Examples 1-1 to 1-2 will be described below.

(Example 1-1)

After a first surface of a substrate was subjected to a corona discharge treatment, a pattern layer printed with a urethane-based printing ink, a urethane-based adhesive layer, a maleic anhydride-modified polyethylene resin layer (transparent adhesive layer), a transparent resin layer and a surface protective layer mainly composed of an acrylic-based resin composition were laminated in this order on the first surface of the substrate. Further, after a second surface of the substrate was subjected to a corona discharge treatment, a primer layer (thickness: 1 $\mu$m to 2 $\mu$m) made of polyester urethane resin was formed on the second surface. Thus, a decorative sheet of Example 1-1 (total thickness: 135 $\mu$m) was obtained.

The substrate used in Example 1-1 was a colored substrate layer (thickness: 55 $\mu$m) made of a petroleum-derived polyethylene resin composition. The colored substrate layer was obtained by calendering the above resin composition. In Example 1-1, the colored substrate layer had a density of 1.20 g/cm$^3$.

The transparent resin layer used was a transparent resin layer (thickness: 70 $\mu$m) formed of a resin composition containing biomass-derived polypropylene. The transparent resin layer was obtained by laminating the above resin with an extruder. In Example 1-1, the transparent resin layer had a density of 0.91 g/cm$^3$. Further, the biomass-derived polypropylene content in the transparent resin layer was 90 mass% relative to a total mass of the transparent resin layer.

(Example 1-2)

A decorative sheet of Example 1-2 was obtained in the same manner as in Example 1-1 except that the biomass-derived polypropylene content in the transparent resin layer was changed to 5 mass% relative to a total mass of the transparent resin layer.

(Example 1-3)

A decorative sheet of Example 1-3 was obtained in the same manner as in Example 1-1 except that the biomass-derived polypropylene content in the transparent resin layer was changed to 99 mass% relative to a total mass of the transparent resin layer.

(Example 1-4)

A decorative sheet of Example 1-4 was obtained in the same manner as in Example 1-1 except that the thickness of the colored substrate layer was changed to 30 $\mu$m and the thickness of the transparent resin layer was changed to 10 $\mu$m.

(Example 1-5)

A decorative sheet of Example 1-5 was obtained in the same manner as in Example 1-1 except that the thickness of the colored substrate layer was changed to 70 $\mu$m and the thickness of the transparent resin layer was changed to 150 $\mu$m.

(Example 1-6)

A decorative sheet of Example 1-6 was obtained in the same manner as in Example 1-1 except that the density of the transparent resin layer was changed to 0.90 g/cm$^3$.

(Example 1-7)

A decorative sheet of Example 1-7 was obtained in the same manner as in Example 1-1 except that the density of the transparent resin layer was changed to 0.96 g/cm$^3$.

(Example 1-8)

A decorative sheet of Example 1-8 was obtained in the same manner as in Example 1-1 except that the density of the colored substrate layer was changed to 0.90 g/cm$^3$.

(Example 1-9)

A decorative sheet of Example 1-9 was obtained in the same manner as in Example 1-1 except that the density of the colored substrate layer was changed to 1.40 g/cm$^3$.

(Example 1-10)

A decorative sheet of Example 1-10 was obtained in the same manner as in Example 1-1 except that the density of the transparent resin layer was changed to 1.00 g/cm$^3$.

(Example 1-11)

A decorative sheet of Example 1-11 was obtained in the same manner as in Example 1-1 except that the density of the colored substrate layer was changed to 1.50 g/cm$^3$.

(Comparative Example 1-1)

A decorative sheet of Comparative Example 1-1 was obtained in the same manner as in Example 1-1 except that the biomass-derived polypropylene used for forming the transparent resin layer was changed to petroleum-derived polypropylene.

(Comparative Example 1-2)

A decorative sheet of Comparative Example 1-2 was obtained in the same manner as in Example 1-1 except that the biomass-derived polypropylene used for forming the transparent resin layer was changed to petroleum-derived polyethylene.

(Performance Evaluation, Evaluation Results)

The decorative sheets of Examples 1-1 to 1-11 and the decorative sheets of Comparative Examples 1-1 and 1-2 were examined for "design properties," "surface strength," "extrusion suitability," "bending processability" and "petroleum dependency." The evaluation methods used were as follows.

<Design Properties>

In the examples and comparative examples, the decorative sheets in which a pattern of the pattern layer was clearly seen without distortion (the intended pattern can be clearly seen) were rated "good," and the decorative sheets in which part of the pattern layer appeared to be missing were rated "poor."
In this example, "good" was judged as a pass.

<Surface Hardness>

A test was performed according to JIS K 5600-5-4 scratch hardness (pencil method).
A pencil with a load was slid against the decorative sheets of the respective examples and comparative examples, and it was observed whether the surface protective layer was dented (scratched).
The decorative sheets having sufficient scratch resistance were rated "good," and the decorative sheets having poor scratch resistance were rated "poor."
In this example, "good" was judged as a pass. In the table, "good (6B)" means that the surface protective layer was not dented (scratched) when tested with 6B.

<Extrusion Suitability>

The decorative sheets having no problem during extrusion molding on the production line (successfully molded) were rated "good," the decorative sheets having some problems during extrusion molding (possibly defective) were rated "fair," and the decorative sheets having problems in the majority of extrusion molding (highly likely to be defective) were rated "poor."

In this example, "good" was judged as a pass. Further, if the evaluation was "fair," there is no problem in use.

<Bending Processability>

Decorative sheets bonded to an MDF (that is, decorative materials) were used for evaluation, and those having no problem with V-cut processability (bending processability) (substantially no cracking, whitening, or the like occurred in the surface protective layer at the top of the fold) were rated "good," those having substantially no problem with V-cut processability (slight cracking, whitening, or the like occurred in the surface protective layer at the top of the fold) were rated "fair," and those having problems with V-cut processability (significant cracking, whitening, or the like occurred in the surface protective layer at the top of the fold) were rated "poor."

In this example, "good" was judged as a pass. Further, if the evaluation was "fair," there is no problem in use.

<Petroleum Dependency>

The dependence on fossil fuels in producing decorative sheets was evaluated.

[Table 1]

| Item | Ex. 1-1 | Ex. 1-2 | Ex. 1-3 | Ex. 1-4 | Ex. 1-5 | Ex. 1-6 | Ex. 1-7 | Ex. 1-8 | Ex. 1-9 | Ex. 1-10 | Ex. 1-11 |
|---|---|---|---|---|---|---|---|---|---|---|---|
| Design properties | good | good | good | good | good | good | good | good | good | good | good |
| Surface strength | good (6B) | good (6B) | good (6B) | good (6B) | good (6B) | good (6B) | good (6B) | good (6B) | good (6B) | good (6B) | good (6B) |
| Extrusion suitability | good | good | good | good | good | good | good | good | good | fair | good |
| Bending processability | good | good | good | good | good | good | good | good | good | good | fair |
| Petroleum dependency | low | low | low | low | low | low | low | low | low | low | low |

| Item | Comp. Ex. 1-1 | Comp. Ex. 1-2 |
|---|---|---|
| Design properties | good | good |
| Surface strength | good (6B) | good (6B) |
| Extrusion suitability | good | good |
| Bending processability | good | good |
| Petroleum dependency | high | high |

As a result of evaluating various performances using the above methods, the decorative sheets of Examples 1-1 to 1-11 exhibited excellent performance for all the evaluation items. On the other hand, the decorative sheets of Comparative Examples 1-1 and 1-2 exhibited poor performance for at least some of the evaluation items.

Further, the invention according to the first embodiment can have, for example, the following configurations.

(1) A decorative sheet including: a colored thermoplastic resin layer; an adhesive layer; and a transparent thermoplastic resin layer, which are laminated in this order, wherein the transparent thermoplastic resin layer is a resin layer formed of a resin composition containing biomass-derived polypropylene which is obtained by polymerizing a monomer containing biomass-derived propylene.

(2) The decorative sheet according to the above (1), wherein the transparent thermoplastic resin layer contains the biomass-derived polypropylene in an amount in the range of 5 mass% or greater and 99 mass% or less relative to a total mass of the transparent thermoplastic resin layer.

(3) The decorative sheet according to the above (1) or (2), wherein the colored thermoplastic resin layer has a thickness in the range of 30 $\mu$m or greater and 70 $\mu$m or less, and the transparent thermoplastic resin layer has a thickness in the range of 10 $\mu$m or greater and 150 $\mu$m or less.

(4) The decorative sheet according to any one of the above (1) to (3), wherein the transparent thermoplastic resin layer contains the biomass-derived propylene and has a density in the range of 0.90 g/cm$^3$ or greater and 0.96 g/cm$^3$ or less.

(5) The decorative sheet according to any one of the above (1) to (4), wherein the colored thermoplastic resin layer has a density in the range of 0.90 g/cm$^3$ or greater and 1.40 g/cm$^3$ or less.

(6) The decorative sheet according to any one of the above (1) to (5), wherein the colored thermoplastic resin layer is a resin layer formed of a resin composition containing a polyolefin.

(7) A decorative material including: a substrate material; and the decorative sheet according to any one of the above (1) to (6), the decorative sheet being laminated on at least a first surface of the substrate material.

<Second Embodiment>

A second embodiment of the present invention will now be described.

With reference to the drawings, the second embodiment of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

With reference to Fig. 1, a configuration of a decorative sheet 10 will be described.

The decorative material 10 include a decorative sheet 1 and a substrate material 9 as shown in Fig. 1. The detailed configuration of the decorative sheet 1 will be described later.

The substrate material 9 has a board-like shape and is formed using, for example, a wooden board, an inorganic board, a metal plate, or the like, with the decorative sheet 1 laminated on a first surface (upper surface in Fig. 1) of the substrate material 9. That is, the decorative material 10 includes the substrate material 9 and the decorative sheet 1 laminated on the first surface of the substrate material 9.

(Configuration of Decorative Sheet)

As shown in Fig. 1, the decorative sheet 1 includes a colored substrate layer (colored thermoplastic resin layer) 2, a pattern layer 3, an adhesive layer 4, a transparent resin layer (transparent thermoplastic resin layer) 5, a surface protective layer 6, an uneven portion 7 and a primer layer 8.

<Colored Substrate Layer>

The colored substrate layer 2 is a resin layer formed of a thermoplastic resin, and is a colored resin layer formed of a resin composition containing biomass-derived (plant-derived) polypropylene.
The composition of the colored substrate layer 2 will be specifically described below.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.
The raw material monomer for polypropylene does not necessarily have to contain 100 mass% of biomass-derived propylene.
The raw material monomer for biomass-derived polypropylene may further contain fossil fuel-derived propylene.
By using biomass-derived propylene as the raw material, it is theoretically possible to produce polypropylene formed of 100% biomass-derived components.
The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.
In the present embodiment, the biomass degree of the biomass-derived polypropylene or the decorative sheet containing the biomass-derived polypropylene may not necessarily have to be 100.
In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.
The method of polymerizing a propylene polymer can be appropriately selected according to the type and branching of the desired polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.
Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain the biomass-derived propylene in an amount of 5 mass% or greater, preferably 5 mass% to 99 mass%, and more preferably 25 mass% to 75 mass%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene and fossil fuel-derived propylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, and more preferably 25 mass% to 75 mass%, and contains fossil fuel-derived polypropylene in an amount of preferably 1 mass% to 95 mass%, and more preferably 25 mass% to 75 mass%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

As described above, the colored substrate layer 2 may contain the biomass-derived propylene in an amount of 5 mass% or greater, preferably 5 mass% to 99 mass%, more preferably 25 mass% to 75 mass%, and most preferably 40 mass% to 75%, relative to the entire colored substrate layer 2. The concentration of the biomass-derived propylene in the colored substrate layer 2 of 5 mass% or greater can reduce the amount of fossil fuels used compared to conventional products, which makes it possible to provide a carbon-neutral decorative sheet.

The colored substrate layer 2 may have a density of 0.90 $g/cm^3$ to 1.20 $g/cm^3$, and preferably 0.98 $g/cm^3$ to 1.10 $g/cm^3$. The density of the colored substrate layer 2 is measured according to the method specified by Method A in JIS K 7112-1980 after being subjected to annealing described in JIS K 6760-1995. The density of the colored substrate layer 2 of 0.90 $g/cm^3$ or greater can increase the rigidity of the colored substrate layer 2. Further, the density of the colored substrate layer 2 of 1.20 $g/cm^3$ or less can increase the transparency and mechanical strength of the colored substrate layer 2.

The colored substrate layer 2 may contain, as the biomass-derived polypropylene, any of biomass-derived homopolypropylene, biomass-derived random polypropylene and biomass-derived block polypropylene.

The colored substrate layer 2 may have a biomass degree in the range of 10% or greater and 90% or less relative to the entire colored substrate layer 2.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 30 $\mu$m or greater and 150 $\mu$m or less, more preferably 51 $\mu$m or greater and 120 $\mu$m or less, and still more preferably 55 $\mu$m or greater and 100 $\mu$m or less. The reason for this is that the thickness of the colored substrate layer 2 composed of biomass-derived polypropylene of 30 $\mu$m or greater can absorb unevenness and steps in the underlying floor materials or the like, improving the installation finish of the decorative sheet 1. Further, the thickness of the colored substrate layer 2 of 150 $\mu$m or less can prevent an unnecessary increase in thickness of the colored substrate layer 2, reducing the production cost of the decorative sheet 1.

In the present embodiment, biomass-derived polypropylene has been described as the biomass-derived resin constituting the colored substrate layer 2, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the colored substrate layer 2.

<Pattern Layer>

The pattern layer 3 is a layer laminated on a first surface (upper surface in Fig. 1) of the colored substrate layer 2 and adding a pattern for imparting design properties. Further, the pattern layer 3 may be omitted if it can be substituted by coloring due to the colored substrate layer 2.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

Examples of the binder resin include, but are not limited to, urethane-based resins, acrylic-based resins, vinyl chloride acetate-based resins, polyimide-based resins, nitrocellulose, and mixtures thereof.

Examples of the pattern include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

The pattern layer 3 may have a thickness preferably in the range of 1 μm or greater and 10 μm of less. The thickness of the pattern layer 3 of 1 μm or greater can ensure clear printing. Further, the thickness of the pattern layer 3 of 10 μm or less can improve printing workability during production of the decorative sheet 1, and thus reduce the production cost.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Adhesive Layer>

The adhesive layer 4 is a layer laminated on a first surface (upper surface in Fig. 1) of the pattern layer 3 and used for bonding the pattern layer 3 to the transparent resin layer 5.

Examples of the materials used for the adhesive layer 4 include urethane, acrylic, ethylene-vinyl acetate copolymer, vinyl chloride-vinyl acetate copolymer, polyester and polyolefin-based materials. In particular, polyolefin-based resins are preferred from the viewpoint of adhesion to the transparent resin layer 5.

transparent Resin Layer>

The transparent resin layer 5 is a layer laminated on a first surface (upper surface in Fig. 1) of the adhesive layer 4, and is a transparent resin layer formed of a resin composition containing the above-mentioned biomass-derived (plant-derived) polypropylene. More specifically, the transparent resin layer 5 is a resin layer formed of a resin composition containing biomass-derived polypropylene which is obtained by polymerizing a monomer containing the above-mentioned biomass-derived propylene. That is, the transparent resin layer 5 may be formed using a resin composition containing biomass-derived polypropylene used for the colored substrate layer 2. Further, it may further contain fossil fuel-derived polypropylene.

The transparent resin layer 5 may contain the above-mentioned biomass-derived propylene in an amount of 5 mass% or greater, preferably 5 mass% to 99 mass%, more preferably 25 mass% to 75 mass%, and most preferably 40 mass% to 75%, relative to the entire transparent resin layer 5. The concentration of the biomass-derived propylene in the transparent resin layer 5 of 5 mass% or greater can reduce the amount of fossil fuels used compared to conventional products, which makes it possible to provide a carbon-neutral decorative sheet.

The transparent resin layer 5 may have a density of 0.90 $g/cm^3$ to 0.96 $g/cm^3$, preferably 0.90 $g/cm^3$ to 0.93 $g/cm^3$, and more preferably 0.90 $g/cm^3$ to 0.91 $g/cm^3$. The density of the transparent resin layer 5 is measured according to the method specified by Method A in JIS K 7112-1980 after being subjected to annealing described in JIS K 6760-1995. The density of the transparent resin layer 5 of 0.90 $g/cm^3$ or greater can increase the rigidity of the transparent resin layer 5. Further, the density of the transparent resin layer 5 of 0.96 $g/cm^3$ or less can improve transparency and mechanical strength of the transparent resin layer 5.

The transparent resin layer 5 may have a thickness of 10 μm to 150 μm, preferably 55 μm to 100 μm, and more preferably 60 μm to 80 μm.

The transparent resin layer 5 may have a biomass degree in the range of 10% or greater and 90% or less relative to the entire transparent resin layer 5.

The method of producing the transparent resin layer 5 is not particularly limited, and any known method can be used. In the present embodiment, extrusion molding is preferred, and extrusion molding by a T-die method or blown film extrusion is more preferred.

In the present embodiment, the transparent resin layer 5 and the colored substrate layer 2 preferably satisfy the following specific relationship in density, thickness and biomass degree (concentration of biomass-derived propylene).

In the present embodiment, a density d1 of the transparent resin layer 5 and a density d2 of the colored substrate layer 2 preferably satisfy d2>d1. The reason for this is that the transparent resin layer 5 requires shapeability and the colored substrate layer 2 requires productivity.

The ratio (d2/d1) between the density d1 of the transparent resin layer 5 and the density d2 of the colored substrate layer 2 is preferably in the range of 1.1 or greater and 1.5 or less, more preferably in the range of 1.1 or greater and 1.3 or less, and still more preferably in the range of 1.1 or greater and 1.2 or less. With the density ratio between the transparent resin layer and the colored substrate layer within the above ranges, it is possible to provide the decorative sheet with required extrusion suitability and bending processability even when biomass-derived polypropylene is used.

In the present embodiment, a thickness t1 of the transparent resin layer 5 and a thickness t2 of the colored substrate layer 2 preferably satisfy t1≥t2. The reason for this is that the transparent resin layer 5 needs to be thick and the colored substrate layer 2 does not need to be as thick as the transparent resin layer 5.

The ratio (t1/t2) between the thickness t1 of the transparent resin layer 5 and the thickness t2 of the colored substrate layer 2 is preferably in the range of 1.1 or greater and 3 or less, more preferably in the range of 1.1 or greater and 2 or less, and still more preferably in the range of 1.1 or greater and 1.5 or less.

In the present embodiment, a biomass-derived propylene concentration C1 in the transparent resin layer 5 and a biomass-derived propylene concentration C2 in the colored substrate layer 2 preferably satisfy C1>C2. The reason for this is that the transparent resin layer 5 needs to be thick and have a large propylene content, and increasing the biomass degree of the transparent resin layer 5 can reduce the fossil fuel content.

The biomass-derived polypropylene constituting the transparent resin layer 5 may contain a nucleating agent.

The nucleating agent may be added to the polypropylene in an amount preferably in the range of 500 ppm or greater and 2,000 ppm or less, and more preferably in the range of 1,500 ppm or greater and 2,000 ppm or less, relative to the mass of the polypropylene.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 preferably has transparency (colorless transparency, colored transparency or translucency) to the extent that the pattern of the pattern layer 3 can be seen through the surface (top surface) of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

<Surface Protective Layer>

The surface protective layer 6 is a layer laminated on a first surface (upper surface in Fig. 1) of the transparent resin layer 5 and imparting functions, such as weatherability, scratch resistance, stain resistance and design properties, to the decorative sheet 1.

The surface protective layer 6 is a resin layer formed of a resin composition containing a biomass-derived material, and may be formed of, for example, a urethane (meth)acrylate, which is a resin composition containing at least a polyol, an isocyanate compound and a hydroxy (meth)acrylate. In the surface protective layer 6, at least one of the polyol, the isocyanate compound and the hydroxy (meth)acrylate constituting the urethane (meth)acrylate contains a biomass-derived component. That is, the surface protective layer 6 contains a biomass-derived component. At least one of the polyol, the isocyanate compound and the hydroxy (meth)acrylate may contain a biomass-derived component or may not contain a biomass-derived component. In the following description, the urethane (meth)acrylate containing a biomass-derived component is also referred to as a bio-urethane (meth)acrylate.

The urethane (meth)acrylate may be obtained by, for example, reacting a polyol and an isocyanate with a hydroxy (meth)acrylate. In the bio-urethane (meth)acrylate, the polyol can be a plant-derived polyol or the isocyanate can be a plant-derived isocyanate, or both the polyol and isocyanate can be plant-derived.

The polyol can be a polyester polyol which is a reaction product of a polyfunctional alcohol and a polyfunctional carboxylic acid, a polyether polyol which is a reaction product of a polyfunctional alcohol and a polyfunctional isocyanate, or a polycarbonate polyol which is a reaction product of a polyfunctional alcohol and a carbonate. Each polyol will be described below.

<Polyester Polyol>

When the polyester polyol contains a biomass-derived component, at least one of the polyfunctional alcohol and the polyfunctional carboxylic acid contains a biomass-derived component. Examples of the polyester polyol containing a biomass-derived component include the following.

- · Reaction products of biomass-derived polyfunctional alcohols and biomass-derived polyfunctional carboxylic acids
- · Reaction products of fossil fuel-derived polyfunctional alcohols and biomass-derived polyfunctional carboxylic acids
- · Reaction products of biomass-derived polyfunctional alcohols and fossil fuel-derived polyfunctional carboxylic acids

Examples of the biomass-derived polyfunctional alcohols include aliphatic polyfunctional alcohols obtained from plant raw materials such as corn, sugar cane, cassava and sago palm. Examples of the biomass-derived aliphatic polyfunctional alcohols include polypropylene glycol (PPG), neopentyl glycol (NPG), ethylene glycol (EG), diethylene glycol (DEG), butylene glycol (BG) and hexamethylene glycol obtained from plant raw materials by the methods described below. These may be used singly or in combination.

The biomass-derived polypropylene glycol is produced from glycerol via 3-hydroxypropionic aldehyde (HPA) by a fermentation process in which plant raw materials are decomposed to produce glucose. The polypropylene glycol produced by a bioprocess such as the fermentation method described above is preferred from the viewpoint of safety since it yields useful by-products such as lactic acids compared to polypropylene glycol produced by an EO process, and is also preferred in terms of reducing the production cost.

The biomass-derived butylene glycol can be produced by producing glycol from plant raw materials and fermenting it to produce succinic acid, and hydrogenating the resulting succinic acid.

The biomass-derived ethylene glycol can be produced, for example, from bioethanol obtained by a conventional method, via ethylene.

Examples of the fossil fuel-derived polyfunctional alcohols include compounds containing two or more, preferably two to eight hydroxyl groups per molecule. The fossil fuel-derived polyfunctional alcohols are not particularly limited and any conventionally known compounds can be used, and specific examples thereof include polypropylene glycol (PPG), neopentyl glycol (NPG), ethylene glycol (EG), diethylene glycol (DEG), butylene glycol (BG), hexamethylene glycol, as well as triethylene glycol, dipropylene glycol, 1,4-cyclohexane dimethanol, trimethylolpropane, glycerin, 1,9-nonanediol, 3-methyl-1,5-pentanediol, polyether polyol, polycarbonate polyol, polyolefin polyol and acrylic polyol. These may be used singly or in combination of two or more.

Examples of the biomass-derived polyfunctional carboxylic acids include aliphatic polyfunctional carboxylic acids obtained from plant raw materials such as renewable plant-derived oils, such as soybean oil, linseed oil, tung oil, coconut oil, palm oil and castor oil, and reused oils obtained by recycling waste edible oils mainly composed of these oils. Examples of the biomass-derived aliphatic polyfunctional carboxylic acids include sebacic acid, succinic acid, phthalic acid, adipic acid, glutaric acid and dimer acid. For example, the sebacic acid is produced by alkaline pyrolysis of ricinoleic acid obtained from castor oil, with heptyl alcohol as a by-product. In the present invention, it is particularly preferred to use biomass-derived succinic acid or biomass-derived sebacic acid. These may be used singly or in combination of two or more.

Examples of the fossil fuel-derived polyfunctional carboxylic acids include aliphatic polyfunctional carboxylic acids and aromatic polyfunctional carboxylic acids. The fossil fuel-derived aliphatic polyfunctional carboxylic acids are not particularly limited and any conventionally known compounds can be used, and examples thereof include adipic acid, dodecanedioic acid, tetrahydrophthalic anhydride, hexahydrophthalic anhydride, maleic anhydride, itaconic anhydride, sebacic acid, succinic acid, glutaric acid, dimer acid, and ester compounds thereof. Further, the fossil fuel-derived aromatic polyfunctional carboxylic acids are not particularly limited and any conventionally known compounds can be used, and examples thereof include isophthalic acid, terephthalic acid, naphthalenedicarboxylic acid, phthalic anhydride, trimellitic acid, pyromellitic acid, and ester compounds thereof. These may be used singly or in combination of two or more.

<Polyether Polyol>

When the polyether polyol contains a biomass-derived component, at least one of the polyfunctional alcohol and the polyfunctional isocyanate contains a biomass-derived component. Examples of the polyether polyol containing a biomass-derived component include the following.

- · Reaction products of biomass-derived polyfunctional alcohols and biomass-derived polyfunctional isocyanates
- · Reaction products of fossil fuel-derived polyfunctional alcohols and biomass-derived polyfunctional isocyanates
- · Reaction products of biomass-derived polyfunctional alcohols and fossil fuel-derived polyfunctional isocyanates

Examples of the biomass-derived polyfunctional alcohols and fossil fuel-derived polyfunctional alcohols include those described above in relation to the polyester polyol.

The biomass-derived polyfunctional isocyanates can be obtained by acid-amidating plant-derived dicarboxylic acids, reducing them to convert to terminal amino groups, and reacting them with phosgene to convert the amino groups to isocyanate groups. Examples of the biomass-derived polyfunctional isocyanates include biomass-derived diisocyanates. Examples of the biomass-derived diisocyanates include dimer acid diisocyanate (DDI), octamethylene diisocyanate and decamethylene diisocyanate. Further, the plant-derived diisocyanates can also be obtained by using plant-derived amino acids as raw materials and converting the amino groups to isocyanate groups. For example, lysine diisocyanate (LDI) can be obtained by methyl-esterifying the carboxyl groups of lysine, and then converting the amino groups to isocyanate groups. Further, 1,5-pentamethylene diisocyanate can be obtained by decarboxylating the carboxyl groups of lysing, and then converting the amino groups to isocyanate groups.

Other synthesis methods of 1,5-pentamethylene diisocyanate include phosgenation processes and carbamate processes. More specifically, a phosgenation process is a method for synthesizing 1,5-pentamethylene diisocyanate by reacting 1,5-pentamethylene diamine or its salt directly with phosgene, or by suspending pentamethylene diamine hydrochloride in an inert solvent and reacting it with phosgene. Further, a carbamate process is a method for synthesizing 1,5-pentamethylene diisocyanate by carbamating 1,5-pentamethylene diamine or its salt to produce pentamethylene dicarbamate (PDC), which is then pyrolyzed. Examples of the polyisocyanates suitably used in the present invention include 1,5-pentamethylene diisocyanate polyisocyanates manufactured by Mitsui Chemicals, Inc.

The fossil fuel-derived polyfunctional isocyanates are not particularly limited and any conventionally known compounds can be used, and examples thereof include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), durylene diisocyanate, tolidine diisocyanate, xylylene diisocyanate (XDI), 1,5-naphthalene diisocyanate, benzidine diisocyanate, o-nitrobenzidine diisocyanate and 4,4'-diisocyanate dibenzyl. Examples further include aliphatic diisocyanates such as methylene diisocyanate, 1,4-tetramethylene diisocyanate, 1,6-hexamethylene diisocyanate and 1,10-decamethylene diisocyanate; and alicyclic diisocyanates such as 1,4-cyclohexylene diisocyanate, 4,4-methylenebis(cyclohexyl isocyanate), 1,5-tetrahydronaphthalene diisocyanate, isophorone diisocyanate, hydrogenated MDI and hydrogenated XDI. These may be used singly or in combination of two or more.

<Polycarbonate Polyol>

When the polycarbonate polyol contains a biomass-derived component, the polycarbonate polyol can be a reaction product of a polyfunctional alcohol containing a biomass-derived component and a fossil fuel-derived carbonate. Alternatively, the polycarbonate polyol can be a reaction product of a polyfunctional alcohol containing a fossil fuel-derived component and a carbonate containing a biomass-derived component. Examples of the carbonates include dimethyl carbonate, dipropyl carbonate, diethyl carbonate, diethylene carbonate, dibutyl carbonate, ethylene carbonate and diphenyl carbonate. These can be used singly or in a combination of two or more.

Examples of the biomass-derived polyfunctional alcohols include those described above in relation to the polyester polyol.

<Isocyanate Compound>

Next, the isocyanate compound will be described. Examples of the isocyanate compound containing a biomass-derived component can be biomass-derived polyfunctional isocyanates described above in relation to the polyether polyol.

<Hydroxy (Meth)acrylate>

Next, the hydroxy (meth)acrylate will be described. Examples of the hydroxy (meth)acrylate include hydroxy (meth)acrylates having one (meth)acryloyl group, such as hydroxyethyl (meth)acrylate, hydroxypropyl (meth)acrylate, hydroxybutyl (meth)acrylate and 2-hydroxy-3-phenoxypropyl (meth)acrylate; hydroxy (meth)acrylates having two or more (meth)acryloyl groups, such as glycerin di(meth)acrylate, pentaerythritol tri(meth)acrylate, ditrimethylolpropane tri(meth)acrylate, dipentaerythritol penta(meth)acrylate and sorbitol penta(meth)acrylate. These may be used singly or in combination of two or more.

Furthermore, the surface protective layer 6 may contain nitrocellulose in addition to the above-mentioned bio-urethane (meth)acrylate. That is, the surface protective layer 6 may be formed of the above-mentioned bio-urethane (meth)acrylate, or may formed by adding nitrocellulose to the bio-urethane (meth)acrylate.

<Nitrocellulose>

Nitrocellulose is a nitro-substituted cellulose resin in which some of the hydroxyl groups of the cellulose backbone are nitrated. The cellulose backbone of nitrocellulose resin is a biomass material. As the nitrocellulose, general nitrocellulose can be used without any problems, and in particular, it is preferred to use nitrocellulose substituted with an average of 1.3 to 2.7 nitro groups per glucose unit constituting the cellulose backbone.

Nitrocellulose is classified into L type and H type according to the molecular weight. From the viewpoint of solubility in organic solvents, the L type is preferably used.

The surface protective layer 6 has a biomass degree of preferably 5% or greater, more preferably 5% or greater and 50% or less, and still more preferably 10% or greater and 50% or less. The biomass degree within the above ranges can reduce the amount of fossil fuels used, reducing the environmental impact. The surface protective layer 6 has a dry mass of preferably 0.1 g/m$^2$ or greater and 15 g/m$^2$ or less, more preferably 3 g/m$^2$ or greater and 10 g/m$^2$ or less, and still more preferably 6 g/m$^2$ or greater and 9 g/m$^2$ or less. The surface protective layer 6 may have a thickness of preferably 0.1 $\mu$m or greater and 10 $\mu$m or less, more preferably 3 $\mu$m or greater and 10 $\mu$m or less, and still more preferably 6 $\mu$m or greater and 9 $\mu$m or less.

Regarding "biomass degree," for example, in the case of bio-urethane (meth)acrylate, it can be determined as a value obtained by measuring the biomass-derived carbon content by radiocarbon (C14) measurement as described above.

Further, regarding "biomass degree," for example, in the case of nitrocellulose, in which each glucose unit (formula weight = 172) constituting the cellulose backbone, which is the starting material, contains three hydroxyl groups, one to three of these hydroxyl groups can be nitrated (hydrogen is substituted with a nitro group (non-biomass material, formula weight = 46). If the original cellulose backbone consists of 100 mass% biomass material, and the number of substituted nitro groups per glucose unit averages n, the proportion (mass%) of the biomass material in the total nitrocellulose molecule can be calculated by (172-n) $\times$ 100 / (172-n + 46n).

The proportion of the biomass material in the total nitrocellulose molecule is approximately 78.8 mass% when each glucose unit constituting the cellulose backbone is substituted with an average of one nitro group, approximately 64.9 mass% when substituted with two nitro groups , and approximately 55.0 mass% when substituted with three nitro groups (values calculated using the above formula).

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents and antifungal agents.

<Uneven Portion>

The uneven portion 7 is formed of recesses provided at a plurality of positions on the transparent resin layer 5 and the surface protective layer 6.

<Primer Layer>

The primer layer 8 is a layer that serves as a primer and improves corrosion resistance and adhesion between the colored substrate layer 2 and the substrate material 9.

The primer layer 8 is laminated on a second surface (lower surface in Fig. 1) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The primer layer 8 may have a thickness, for example, in the range of 1 $\mu$m or greater and 10 $\mu$m of less.

The embodiment described above is an example of the present invention, and the present invention is not limited to the embodiment described above. In addition to the above embodiment, various modifications can be made according to the design and the like without departing from the technical idea of the present invention.

(Effects of Present Embodiment)

According to the decorative sheet 1 of the present embodiment, the following effects can be achieved.

(1) Each of the colored substrate layer 2 and the transparent resin layer 5 is a resin layer formed of a resin composition containing biomass-derived polypropylene which is obtained by polymerizing a monomer containing biomass-derived propylene, and the surface protective layer 6 is a resin layer formed of a resin composition containing a biomass-derived material.

This increases the strength compared to, for example, a configuration formed of polyethylene or the like, making it possible to form a colored substrate layer 2 and a transparent resin layer 5 having high scratch resistance and the like.

As a result, a decorative sheet 1 capable of preventing a decrease in surface hardness can be provided even when it is formed of biomass-derived polypropylene, which is a plant-derived material.

Furthermore, a transparent resin layer 5 having high transparency equivalent to, for example, that of a configuration formed of polyethylene or the like can be formed even when it has a configuration formed of biomass-derived polypropylene, which is a plant-derived material.

(2) The colored substrate layer 2 contains biomass-derived polypropylene in an amount in the range of 5 mass% or greater and 99 mass% or less relative to a total mass of the colored substrate layer 2, and the transparent resin layer 5 contains biomass-derived polypropylene in an amount in the range of 5 mass% or greater and 99 mass% or less relative to a total mass of the transparent resin layer 5.

As a result, a transparent resin layer 5 and a transparent resin layer 2 having higher environmental suitability can be formed.

(3) The colored substrate layer 2 has a thickness in the range of 30 $\mu$m or greater and 150 $\mu$m or less and a specific gravity in the range of 0.90 or greater and 1.20 or less, and the transparent resin layer 5 has a thickness in the range of 10 $\mu$m or greater and 150 $\mu$m or less and a specific gravity in the range of 0.90 or greater and 0.96 or less.

As a result, a transparent resin layer 5 and a colored substrate layer 2 having higher hardness can be formed.

(4) The surface protective layer 6 contains biomass-derived urethane (meth)acrylate as a biomass-derived material.

As a result, a surface protective layer 6 having higher environmental suitability can be formed.

(5) The biomass-derived urethane (meth)acrylate constituting the surface protective layer 6 is a reaction product of a polyol, an isocyanate compound and a hydroxy (meth)acrylate, and at least one of the polyol, the isocyanate compound and the hydroxy (meth)acrylate contains a biomass-derived component.

As a result, a surface protective layer 6 having higher environmental suitability can be formed.

Further, according to the decorative material 10 of the present embodiment, the following effects can be achieved.

(6) The decorative material 10 includes the substrate material 9 and the decorative sheet 1 laminated on at least a first surface of the substrate material 9.

As a result, a decorative material 10 capable of preventing a decrease in surface hardness can be provided even when it is formed of biomass-derived polypropylene, which is a plant-derived material.

<Modifications>

(1) In the embodiment, the decorative material 10 has a configuration in which the decorative sheet 1 is laminated on the first surface of the substrate material 9, but the configuration is not limited thereto. That is, the decorative material 10 may have a configuration in which the decorative sheet 1 is laminated not only on the first surface of the substrate material 9 but also on a second surface (lower surface in Fig. 1) of the substrate material 9.

[Examples]

Referring to the present embodiment, decorative materials of Examples 2-1 to 2-9 and decorative materials of Comparative Examples 2-1 to 2-4 will be described below.

(Example 2-1)

After a first surface of a substrate was subjected to a corona discharge treatment, a pattern layer printed with a urethane-based printing ink, a urethane-based adhesive layer, a maleic anhydride-modified polyethylene resin layer (transparent adhesive layer), a transparent resin layer and a surface protective layer mainly composed of a resin composition containing bio-urethane (meth)acrylate as a biomass-derived material were laminated in this order on the first surface of the substrate. Further, after a second surface of the substrate was subjected to a corona discharge treatment, a primer layer (thickness: 1 $\mu$m to 2 $\mu$m) made of polyester urethane resin was formed on the second surface. Thus, a decorative sheet of Example 2-1 (total thickness: 135 $\mu$m) was obtained.

The substrate used in Example 2-1 was a colored substrate layer (thickness: 70 $\mu$m) formed of a resin composition containing biomass-derived polypropylene and an inorganic pigment (titanium oxide). The colored substrate layer was obtained by calendering the above resin composition. The colored substrate layer thus formed had a density (specific gravity) of 0.99 g/cm$^3$ and a grammage of 69.3 g/m$^2$. Further, the biomass-derived polypropylene content in the colored substrate layer was 75 mass% relative to a total mass of the colored substrate layer. That is, the biomass degree of the colored substrate layer was 75.

The transparent resin layer used was a transparent resin layer (thickness: 70 $\mu$m) formed of a resin composition containing biomass-derived polypropylene and a UV absorber. The transparent resin layer was obtained by laminating the above resin composition with an extruder. The transparent resin layer thus formed had a density (specific gravity) of 0.91 g/cm$^3$ and a grammage of 63.0 g/m$^2$. Further, the biomass-derived polypropylene content in the transparent resin layer was 90 mass% relative to a total mass of the transparent resin layer. That is, the biomass degree of the transparent resin layer was 90%.

The bio-urethane (meth)acrylate content in the surface protective layer was 5 mass% relative to a total mass of the surface protective layer. Further, the polyol, the isocyanate compound and the hydroxy (meth)acrylate constituting the bio-urethane (meth)acrylate all contain a biomass-derived component.

(Example 2-2)

A decorative sheet of Example 2-2 was obtained in the same manner as in Example 2-1 except that the biomass-derived polypropylene content in the colored substrate layer was changed to 5 mass% relative to a total mass of the colored substrate layer, and the biomass-derived polypropylene content in the transparent resin layer was changed to 5 mass% relative to a total mass of the transparent resin layer.

(Example 2-3)

A decorative sheet of Example 2-3 was obtained in the same manner as in Example 2-1 except that the biomass-derived polypropylene content in the colored substrate layer was changed to 99 mass% relative to a total mass of the colored substrate layer, and the biomass-derived polypropylene content in the transparent resin layer was changed to 99 mass% relative to a total mass of the transparent resin layer.

(Example 2-4)

A decorative sheet of Example 2-4 was obtained in the same manner as in Example 2-1 except that the thickness and the specific gravity of the colored substrate layer were changed to 30 $\mu$m and 0.90, respectively, and the thickness and the specific gravity of the transparent resin layer were changed to 10 $\mu$m and 0.90, respectively.

(Example 2-5)

A decorative sheet of Example 2-5 was obtained in the same manner as in Example 2-1 except that the thickness and the specific gravity of the colored substrate layer were changed to 150 $\mu$m and 1.20, respectively, and the thickness and the specific gravity of the transparent resin layer were changed to 150 $\mu$m and 0.96, respectively.

(Example 2-6)

A decorative sheet of Example 2-6 was obtained in the same manner as in Example 2-1 except that, among the polyol, isocyanate compound and hydroxy (meth)acrylate constituting the bio-urethane (meth)acrylate contained in the surface protective layer, only the polyol contained a biomass-derived component.

(Example 2-7)

A decorative sheet of Example 2-7 was obtained in the same manner as in Example 2-1 except that, among the polyol, isocyanate compound and hydroxy (meth)acrylate constituting the bio-urethane (meth)acrylate contained in the surface protective layer, only the isocyanate compound contained a biomass-derived component.

(Example 2-8)

A decorative sheet of Example 2-8 was obtained in the same manner as in Example 2-1 except that, among the polyol, isocyanate compound and hydroxy (meth)acrylate constituting the bio-urethane (meth)acrylate contained in the surface protective layer, only the hydroxy (meth)acrylate contained a biomass-derived component.

(Comparative Example 2-1)

A decorative sheet of Comparative Example 2-1 was obtained in the same manner as in Example 2-1 except that the biomass-derived polypropylene used for forming the transparent resin layer was changed to petroleum-derived polypropylene, and the biomass-derived polypropylene used for forming the colored substrate layer was changed to petroleum-derived polypropylene (manufactured by RIKEN TECHNOS CORPORATION).

(Comparative Example 2-2)

A decorative sheet of Comparative Example 2-2 was obtained in the same manner as in Comparative Example 2-1 except that the bio-urethane (meth)acrylate used for forming the surface protective layer was changed to urethane (meth)acrylate containing no biomass-derived component, that is, petroleum-derived urethane (meth)acrylate.

(Performance Evaluation, Evaluation Results)

The decorative sheets of Examples 2-1 to 2-8 and the decorative sheets of Comparative Examples 2-1 and 2-2 were examined for "design properties," "surface strength," "extrusion suitability," "bending processability" and "petroleum dependency." The evaluation methods used were as follows.

<Design Properties>

In the examples and comparative examples, the decorative sheets in which a pattern of the pattern layer was clearly seen without distortion (the intended pattern can be clearly seen) were rated "good," and the decorative sheets in which part of the pattern layer appeared to be missing were rated "poor." Further, the decorative sheets in which a pattern was clearly seen but required improvement were rated "fair."
In this example, "good" was judged as a pass.

<Surface Hardness>

A test was performed according to JIS K 5600-5-4 scratch hardness (pencil method).
A pencil with a load was slid against the decorative sheets of the respective examples and comparative examples, and it was observed whether the surface protective layer was dented (scratched).
The decorative sheets having sufficient scratch resistance were rated "good," the decorative sheets having particularly good results were rated "excellent," and the decorative sheets having poor scratch resistance were rated "poor." Further, the decorative sheets having sufficient scratch resistance but requiring improvement were rated "fair."
In this example, "excellent" and "good" were judged as a pass. In the table, "good (6B)" means that the surface protective layer was not dented (scratched) when tested with 6B.

<Productivity: Extrusion Suitability>

The decorative sheets having no problem during extrusion molding on the production line (successfully molded) were rated "good," and the decorative sheets having problems during extrusion molding (possibly defective) were rated "poor." Further, the decorative sheets having sufficient extrusion moldability but requiring improvement were rated "fair."
In this example, "good" was judged as a pass.

<Post-Processability: Bending Processability>

Decorative sheets bonded to an MDF (that is, decorative materials) were used for evaluation, and those having no problem with V-cut processability (bending processability) were rated "good," those having particularly good results were rated "excellent," and those having problems with V-cut processability were rated "poor." Further, the decorative sheets having sufficient bending processability but requiring improvement were rated "fair."
In this example, "excellent" and "good" were judged as a pass.

<Petroleum Dependency>

The dependence on fossil fuels in producing decorative sheets was evaluated.

[Table 2]

| Item | Ex. 2-1 | Ex. 2-2 | Ex. 2-3 | Ex. 2-4 | Ex. 2-5 | Ex. 2-6 | Ex. 2-7 | Ex. 2-8 |
|---|---|---|---|---|---|---|---|---|
| Design properties | good | good | good | good | good | good | good | good |
| Surface strength (pencil hardness test) | good (6B) | good (6B) | good (6B) | good (6B) | good (6B) | good (6B) | good (6B) | good (6B) |
| Productivity (extrusion suitability) | good | good | good | good | good | good | good | good |
| Post-processability (bending processability) | good | good | excellent | good | excellent | good | excellent | good |
| Petroleum dependency | low | low | low | low | low | low | low | low |

| Item | Comp. Ex. 2-1 | Comp. Ex. 2-2 |
|---|---|---|
| Design properties | good | good |
| Surface strength (pencil hardness test) | good (6B) | good (6B) |
| Productivity (extrusion suitability) | good | good |
| Post-processability (bending processability) | good | good |
| Petroleum dependency | high | high |

As a result of evaluating various performances using the above methods, the decorative sheets of Examples 2-1 to 2-8 exhibited excellent performance for all the evaluation items. On the other hand, the decorative sheets of Comparative Examples 2-1 and 2-2 exhibited poor performance for at least some of the evaluation items.

Further, the invention according to the second embodiment can have, for example, the following configurations.

(1) A decorative sheet including: a colored thermoplastic resin layer; an adhesive layer; a transparent thermoplastic resin layer; and a surface protective layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, and the surface protective layer is a resin layer formed of a resin composition containing a biomass-derived material.

(2) The decorative sheet according to the above (1), wherein the colored thermoplastic resin layer contains the biomass-derived polypropylene in an amount in the range of 5 mass% or greater and 99 mass% or less relative to a total mass of the colored thermoplastic resin layer, and the transparent thermoplastic resin layer contains the biomass-derived polypropylene in an amount in the range of 5 mass% or greater and 99 mass% or less relative to a total mass of the transparent thermoplastic resin layer.

(3) The decorative sheet according to the above (1) or (2), wherein the colored thermoplastic resin layer has a thickness in the range of 30 $\mu$m or greater and 150 $\mu$m or less and a specific gravity in the range of 0.90 or greater and 1.20 or less, and the transparent thermoplastic resin layer has a thickness of 10 $\mu$m or greater and 150 $\mu$m or less and a specific gravity in the range of 0.90 or greater and 0.96 or less.

(4) The decorative sheet according to any one of the above (1) to (3), wherein the surface protective layer contains biomass-derived urethane (meth)acrylate as the biomass-derived material.

(5) The decorative sheet according to the above (4), wherein the biomass-derived urethane (meth)acrylate is a reaction product of a polyol, an isocyanate compound and a hydroxy (meth)acrylate, and at least one of the polyol, the isocyanate compound and the hydroxy (meth)acrylate contains a biomass-derived component.

(6) A decorative material including: a substrate material; and the decorative sheet according to any one of the above (1) to (5), the decorative sheet being laminated on at least a first surface of the substrate material.

<Third Embodiment>

Next, a third embodiment of the present invention will be described.

With reference to the drawings, the third embodiment of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

With reference to Fig. 1, a configuration of a decorative sheet 10 will be described.

The decorative material 10 include a decorative sheet 1 and a substrate material 9 as shown in Fig. 1. The detailed configuration of the decorative sheet 1 will be described later.

The substrate material 9 has a board-like shape and is formed using, for example, a wooden board, an inorganic board, a metal plate, or the like, with the decorative sheet 1 laminated on a first surface (upper surface in Fig. 1) of the substrate material 9. That is, the decorative material 10 includes the substrate material 9 and the decorative sheet 1 laminated on the first surface of the substrate material 9.

(Configuration of Decorative Sheet)

As shown in Fig. 1, the decorative sheet 1 includes a colored substrate layer (colored thermoplastic resin layer) 2, a pattern layer 3, an adhesive layer 4, a transparent resin layer (transparent thermoplastic resin layer) 5, a surface protective layer 6, an uneven portion 7 and a primer layer 8.

<Colored Substrate Layer>

The colored substrate layer 2 is a resin layer formed of a thermoplastic resin, and is a colored resin layer formed of a resin composition containing biomass-derived (plant-derived) polypropylene.

The composition of the colored substrate layer 2 will be specifically described below.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.

The raw material monomer for polypropylene does not necessarily have to contain 100 mass% of biomass-derived propylene.

The raw material monomer for biomass-derived polypropylene may further contain fossil fuel-derived propylene.

By using biomass-derived propylene as the raw material, it is theoretically possible to produce polypropylene formed of 100% biomass-derived components.

The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.

In the present embodiment, the biomass degree of the biomass-derived polypropylene or the decorative sheet containing the biomass-derived polypropylene may not necessarily have to be 100.

In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain the biomass-derived propylene in an amount of 5 mass% or greater, preferably 5 mass% to 99 mass%, and more preferably 25 mass% to 75 mass%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene and fossil fuel-derived polypropylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, and more preferably 25 mass% to 75 mass%, and contains fossil fuel-derived polypropylene in an amount of preferably 1 mass% to 95 mass%, and more preferably 25 mass% to 75 mass%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

As described above, the colored substrate layer 2 may contain the biomass-derived propylene in an amount of 5 mass% or greater, preferably 5 mass% to 99 mass%, more preferably 25 mass% to 75 mass%, and most preferably 40 mass% to 75%, relative to the entire colored substrate layer 2. The concentration of the biomass-derived propylene in the colored substrate layer 2 of 5 mass% or greater can reduce the amount of fossil fuels used compared to conventional products, which makes it possible to provide a carbon-neutral decorative sheet.

The colored substrate layer 2 may have a density of 0.90 g/cm$^3$ to 1.40 g/cm$^3$, and preferably 0.98 g/cm$^3$ to 1.10 g/cm$^3$. The density of the colored substrate layer 2 is measured according to the method specified by Method A in JIS K 7112-1980 after being subjected to annealing described in JIS K 6760-1995. The density of the colored substrate layer 2 of 0.90 g/cm$^3$ or greater can increase the rigidity of the colored substrate layer 2. Further, the density of the colored substrate layer 2 of 1.40 g/cm$^3$ or less can increase the transparency, flexibility and mechanical strength of the colored substrate layer 2.

The colored substrate layer 2 may contain, as the biomass-derived polypropylene, any of biomass-derived homopolypropylene, biomass-derived random polypropylene and biomass-derived block polypropylene.

The colored substrate layer 2 may have a biomass degree in the range of 10% or greater and 90% or less relative to the entire colored substrate layer 2.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 10 $\mu$m or greater and 150 $\mu$m or less, more preferably 51 $\mu$m or greater and 120 $\mu$m or less, and still more preferably 55 $\mu$m or greater and 100 $\mu$m or less. The reason for this is that the thickness of the colored substrate layer 2 composed of biomass-derived polypropylene of 10 $\mu$m or greater can absorb unevenness and steps in the underlying floor materials or the like, improving the installation finish of the decorative sheet 1. Further, the thickness of the colored substrate layer 2 of 150 $\mu$m or less can prevent an unnecessary increase in thickness of the colored substrate layer 2, reducing the production cost of the decorative sheet 1.

In the present embodiment, biomass-derived polypropylene has been described as the biomass-derived resin constituting the colored substrate layer 2, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the colored substrate layer 2.

<Pattern Layer>

The pattern layer 3 is a layer laminated on a first surface (upper surface in Fig. 1) of the colored substrate layer 2 and adding a pattern for imparting design properties. Further, the pattern layer 3 may be omitted if it can be substituted by coloring due to the colored substrate layer 2.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

Examples of the binder resin include, but are not limited to, urethane-based resins, acrylic-based resins, vinyl chloride acetate-based resins, polyimide-based resins, nitrocellulose, and mixtures thereof.

Examples of the pattern include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

The pattern layer 3 may have a thickness preferably in the range of 1 $\mu$m or greater and 10 $\mu$m of less. The thickness of the pattern layer 3 of 1 $\mu$m or greater can ensure clear printing. Further, the thickness of the pattern layer 3 of 10 $\mu$m or less can improve printing workability during production of the decorative sheet 1, and thus reduce the production cost.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Adhesive Layer>

The adhesive layer 4 is a layer laminated on a first surface (upper surface in Fig. 1) of the pattern layer 3 and used for bonding the pattern layer 3 to the transparent resin layer 5.

Examples of the materials used for the adhesive layer 4 include urethane, acrylic, ethylene-vinyl acetate copolymer, vinyl chloride-vinyl acetate copolymer, polyester and polyolefin-based materials. In particular, polyolefin-based resins are preferred from the viewpoint of adhesion to the transparent resin layer 5.

<Transparent Resin Layer>

The transparent resin layer 5 is a layer laminated on a first surface (upper surface in Fig. 1) of the adhesive layer 4, and is a transparent resin layer formed of a resin composition containing the above-mentioned biomass-derived (plant-derived) polypropylene. More specifically, the transparent resin layer 5 is a resin layer formed of a resin composition containing biomass-derived polypropylene which is obtained by polymerizing a monomer containing the above-mentioned biomass-derived propylene. That is, the transparent resin layer 5 may be formed using a resin composition containing biomass-derived polypropylene used for the colored substrate layer 2. Further, it may further contain fossil fuel-derived propylene and fossil fuel-derived polypropylene.

The transparent resin layer 5 may contain the above-mentioned biomass-derived propylene in an amount of 5 mass% or greater, preferably 5 mass% to 99 mass%, more preferably 25 mass% to 75 mass%, and most preferably 40 mass% to 75%, relative to the entire transparent resin layer 5. The concentration of the biomass-derived propylene in the transparent resin layer 5 of 5 mass% or greater can reduce the amount of fossil fuels used compared to conventional products, which makes it possible to provide a carbon-neutral decorative sheet.

The transparent resin layer 5 may have a density of $0.90\,\mathrm{g/cm^3}$ to $0.96\,\mathrm{g/cm^3}$, preferably $0.90\,\mathrm{g/cm^3}$ to $0.93\,\mathrm{g/cm^3}$, and more preferably $0.90\,\mathrm{g/cm^3}$ to $0.91\,\mathrm{g/cm^3}$. The density of the transparent resin layer 5 is measured according to the method specified by Method A in JIS K 7112-1980 after being subjected to annealing described in JIS K 6760-1995. The density of the transparent resin layer 5 of $0.90\,\mathrm{g/cm^3}$ or greater can increase the rigidity of the transparent resin layer 5. Further, the density of the transparent resin layer 5 of $0.96\,\mathrm{g/cm^3}$ or less can improve transparency and mechanical strength of the transparent resin layer 5.

The transparent resin layer 5 may have a thickness of 10 $\mu$m to 150 $\mu$m, preferably 55 $\mu$m to 100 $\mu$m, and more preferably 60 $\mu$m to 80 $\mu$m.

The transparent resin layer 5 may contain, as the biomass-derived polypropylene, biomass-derived homopolypropylene, biomass-derived random polypropylene or biomass-derived block polypropylene.

Further, the transparent resin layer 5 may have a biomass degree in the range of 10% or greater and 90% or less relative to the entire transparent resin layer 5.

The method of producing the transparent resin layer 5 is not particularly limited, and any known method can be used. In the present embodiment, extrusion molding is preferred, and extrusion molding by a T-die method or blown film extrusion is more preferred.

In the present embodiment, the transparent resin layer 5 and the colored substrate layer 2 preferably satisfy the following specific relationship in density, thickness and biomass degree (concentration of biomass-derived propylene).

In the present embodiment, a density d1 of the transparent resin layer 5 and a density d2 of the colored substrate layer 2 preferably satisfy d2>d1. The reason for this is that the transparent resin layer 5 requires shapeability and the colored substrate layer 2 requires productivity.

The ratio (d2/d1) between the density d1 of the transparent resin layer 5 and the density d2 of the colored substrate layer 2 is preferably in the range of 1.1 or greater and 1.5 or less, more preferably in the range of 1.1 or greater and 1.3 or less, and still more preferably in the range of 1.1 or greater and 1.2 or less. With the density ratio between the transparent resin layer and the colored substrate layer within the above ranges, it is possible to provide the decorative sheet with required extrusion suitability and bending processability even when biomass-derived polypropylene is used.

In the present embodiment, a thickness t1 of the transparent resin layer 5 and a thickness t2 of the colored substrate layer 2 preferably satisfy t1≥t2. The reason for this is that the transparent resin layer 5 needs to be thick and the colored substrate layer 2 does not need to be as thick as the transparent resin layer 5.

The ratio (t1/t2) between the thickness t1 of the transparent resin layer 5 and the thickness t2 of the colored substrate layer 2 is preferably in the range of 1.1 or greater and 3 or less, more preferably in the range of 1.1 or greater and 2 or less, and still more preferably in the range of 1.1 or greater and 1.5 or less.

In the present embodiment, a biomass-derived propylene concentration C1 in the transparent resin layer 5 and a biomass-derived propylene concentration C2 in the colored substrate layer 2 preferably satisfy C1>C2. The reason for this is that the transparent resin layer 5 needs to be thick and have a large propylene content, and increasing the biomass degree of the transparent resin layer 5 can reduce the fossil fuel content.

The biomass-derived polypropylene constituting the transparent resin layer 5 may contain a nucleating agent.

The nucleating agent may be added to the polypropylene in an amount preferably in the range of 500 ppm or greater and 2,000 ppm or less, and more preferably in the range of 1,500 ppm or greater and 2,000 ppm or less, relative to the mass of the polypropylene.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 preferably has transparency (colorless transparency, colored transparency or translucency) to the extent that the pattern of the pattern layer 3 can be seen through the surface (top surface) of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

<Surface Protective Layer>

The surface protective layer 6 is a layer laminated on a first surface (upper surface in Fig. 1) of the transparent resin layer 5 and imparting functions, such as weatherability, scratch resistance, stain resistance and design properties, to the decorative sheet 1.

The surface protective layer 6 can be made of a thermosetting resin or an ionizing radiation-curable resin, and may be formed using, for example, an acrylic-based resin composition.

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents and antifungal agents.

<Uneven Portion>

The uneven portion 7 is formed of recesses provided at a plurality of positions on the transparent resin layer 5 and the surface protective layer 6.

<Primer Layer>

The primer layer 8 is a layer that serves as a primer and improves corrosion resistance and adhesion between the colored substrate layer 2 and the substrate material 9.

The primer layer 8 is laminated on a second surface (lower surface in Fig. 1) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The primer layer 8 may have a thickness, for example, in the range of 1 $\mu$m or greater and 10 $\mu$m of less.

The embodiment described above is an example of the present invention, and the present invention is not limited to the embodiment described above. In addition to the above embodiment, various modifications can be made according to the design and the like without departing from the technical idea of the present invention.

(Effects of Present Embodiment)

According to the decorative sheet 1 of the present embodiment, the following effects can be achieved.

(1) Each of the colored substrate layer 2 and the transparent resin layer 5 is a resin layer formed of a resin composition containing biomass-derived polypropylene which is obtained by polymerizing a monomer containing biomass-derived propylene.

This increases the strength compared to, for example, a configuration formed of polyethylene or the like, making it possible to form a colored substrate layer 2 and a transparent resin layer 5 having high scratch resistance and the like.

As a result, a decorative sheet 1 capable of preventing a decrease in surface hardness can be provided even when it is formed of biomass-derived polypropylene, which is a plant-derived material.

Furthermore, a transparent resin layer 5 having high transparency equivalent to, for example, that of a configuration formed of polyethylene or the like can be formed even when it has a configuration formed of biomass-derived polypropylene, which is a plant-derived material.

(2) The colored substrate layer 2 contains biomass-derived polypropylene in an amount in the range of 5 mass% or greater and 99 mass% or less relative to a total mass of the colored substrate layer 2, and the transparent resin layer 5 contains biomass-derived polypropylene in an amount in the range of 5 mass% or greater and 99 mass% or less relative to a total mass of the transparent resin layer 5.

As a result, a transparent resin layer 5 and a transparent resin layer 2 having improved environmental suitability can be formed.

(3) The colored substrate layer 2 has a thickness in the range of 10 $\mu$m or greater and 150 $\mu$m or less, and the transparent resin layer 5 has a thickness in the range of 10 $\mu$m or greater and 150 $\mu$m or less.

As a result, a transparent resin layer 5 and a transparent resin layer 2 having higher production efficiency can be formed.

(4) The transparent resin layer 5 contains biomass-derived propylene and has a density in the range of 0.90 g/cm$^3$ or greater and 0.96 g/cm$^3$ or less.

As a result, a transparent resin layer 5 having higher hardness can be formed.

(5) The colored substrate layer 2 contains biomass-derived propylene and has a density in the range of 0.90 g/cm$^3$ or greater and 1.40 g/cm$^3$ or less.

As a result, a colored substrate layer 2 having good concealing properties and sufficient flexibility as a decorative sheet can be formed.

Further, according to the decorative material 10 of the present embodiment, the following effects can be achieved.

(6) The decorative material 10 includes the substrate material 9 and the decorative sheet 1 laminated on at least a first surface of the substrate material 9.

As a result, a decorative material 10 capable of preventing a decrease in surface hardness can be provided even when it is formed of biomass-derived polypropylene, which is a plant-derived material.

<Modifications>

(1) In the embodiment, the decorative material 10 has a configuration in which the decorative sheet 1 is laminated on the first surface of the substrate material 9, but the configuration is not limited thereto. That is, the decorative material 10 may have a configuration in which the decorative sheet 1 is laminated not only on the first surface of the substrate material 9 but also on a second surface (lower surface in Fig. 1) of the substrate material 9.

[Examples]

Referring to the present embodiment, decorative materials of Examples 3-1 to 3-9 and decorative materials of Comparative Examples 3-1 to 3-4 will be described below.

(Example 3-1)

After a first surface of a substrate was subjected to a corona discharge treatment, a pattern layer printed with a urethane-based printing ink, a urethane-based adhesive layer, a maleic anhydride-modified polyolefin resin layer (transparent adhesive layer), a transparent resin layer and a surface protective layer mainly composed of an acrylic-based resin composition were laminated in this order on the first surface of the substrate. Further, after a second surface of the substrate was subjected to a corona discharge treatment, a primer layer (thickness: 1 μm to 2 μm) made of polyester urethane resin was formed on the second surface. Thus, a decorative sheet of Example 3-1 (total thickness: 135 μm) was obtained.

The substrate used in Example 3-1 was a colored substrate layer (thickness: 55 μm) formed of a resin composition containing biomass-derived polypropylene. The colored substrate layer was obtained by calendering the above resin composition. The colored substrate layer thus formed had a density of 1.00 g/cm$^3$. Further, the biomass-derived polypropylene content in the colored substrate layer was 75 mass% relative to a total mass of the colored substrate layer.

The transparent resin layer used was a transparent resin layer (thickness: 70 μm) formed of a resin composition containing biomass-derived polypropylene. The transparent resin layer was obtained by laminating the above resin composition with an extruder. The transparent resin layer thus formed had a density of 0.90 g/cm$^3$. Further, the biomass-derived polypropylene content in the transparent resin layer was 90 mass% relative to a total mass of the transparent resin layer.

(Example 3-2)

A decorative sheet of Example 3-2 was obtained in the same manner as in Example 3-1 except that the biomass-derived polypropylene content in the colored substrate layer was changed to 5 mass% relative to a total mass of the colored substrate layer, and the biomass-derived polypropylene content in the transparent resin layer was changed to 5 mass% relative to a total mass of the transparent resin layer.

(Example 3-3)

A decorative sheet of Example 3-3 was obtained in the same manner as in Example 3-1 except that the biomass-derived polypropylene content in the colored substrate layer was changed to 99 mass% relative to a total mass of the colored substrate layer, and the biomass-derived polypropylene content in the transparent resin layer was changed to 99 mass% relative to a total mass of the transparent resin layer.

(Example 3-4)

A decorative sheet of Example 3-4 was obtained in the same manner as in Example 3-1 except that the thickness of the colored substrate layer was changed to 10 $\mu$m and the thickness of the transparent resin layer was changed to 10 $\mu$m.

(Example 3-5)

A decorative sheet of Example 3-5 was obtained in the same manner as in Example 3-1 except that the thickness of the colored substrate layer was changed to 150 $\mu$m and the thickness of the transparent resin layer was changed to 150 $\mu$m.

(Example 3-6)

A decorative sheet of Example 3-6 was obtained in the same manner as in Example 3-1 except that the density of the transparent resin layer was changed to 0.90 g/cm$^3$.

(Example 3-7)

A decorative sheet of Example 3-7 was obtained in the same manner as in Example 3-1 except that the density of the transparent resin layer was changed to 0.96 g/cm$^3$.

(Example 3-8)

A decorative sheet of Example 3-8 was obtained in the same manner as in Example 3-1 except that the density of the colored substrate layer was changed to 0.90 g/cm$^3$.

(Example 3-9)

A decorative sheet of Example 3-9 was obtained in the same manner as in Example 3-1 except that the density of the colored substrate layer was changed to 1.40 g/cm$^3$.

(Comparative Example 3-1)

A decorative sheet of Comparative Example 3-1 was obtained in the same manner as in Example 3-1 except that the biomass-derived polypropylene used for forming the transparent resin layer was changed to petroleum-derived polypropylene, and the biomass-derived polypropylene used for forming the colored substrate layer was changed to petroleum-derived polypropylene.

(Comparative Example 3-2)

A decorative sheet of Comparative Example 3-2 was obtained in the same manner as in Example 3-1 except that the biomass-derived polypropylene used for forming the colored substrate layer was changed to biomass-derived polyethylene.

(Comparative Example 3-3)

A decorative sheet of Comparative Example 3-3 was obtained in the same manner as in Example 3-1 except that the biomass-derived polypropylene used for forming the transparent resin layer was changed to biomass-derived polyethylene.

(Comparative Example 3-4)

A decorative sheet of Comparative Example 3-4 was obtained in the same manner as in Example 3-1 except that the biomass-derived polypropylene used for forming the transparent resin layer was changed to biomass-derived polyethylene, and the biomass-derived polypropylene used for forming the colored substrate layer was changed to biomass-derived polyethylene.

(Performance Evaluation, Evaluation Results)

The decorative sheets of Examples 3-1 to 3-9 and the decorative sheets of Comparative Examples 3-1 to 3-4 were examined for "design properties," "surface strength," "extrusion suitability," "bending processability" and "petroleum dependency." The evaluation methods used were as follows.

<Design Properties>

In the examples and comparative examples, the decorative sheets in which a pattern of the pattern layer was clearly seen without distortion (the intended pattern can be clearly seen) were rated "good," and the decorative sheets in which part of the pattern layer appeared to be missing were rated "poor." Further, the decorative sheets in which a pattern was clearly seen but required improvement were rated "fair."
In this example, "good" was judged as a pass.

<Surface Hardness>

A test was performed according to JIS K 5600-5-4 scratch hardness (pencil method).
A pencil with a load was slid against the decorative sheets of the respective examples and comparative examples, and it was observed whether the surface protective layer was dented (scratched).
The decorative sheets having sufficient scratch resistance were rated "good," the decorative sheets having particularly good results were rated "excellent," and the decorative sheets having poor scratch resistance were rated "poor." Further, the decorative sheets having sufficient scratch resistance but requiring improvement were rated "fair."
In this example, "excellent" and "good" were judged as a pass. In the table, "excellent (5B)" means that the surface protective layer was not dented (scratched) at all when tested with 5B.

<Extrusion Suitability>

The decorative sheets having no problem during extrusion molding on the production line (successfully molded) were rated "good," and the decorative sheets having problems during extrusion molding (possibly defective) were rated "poor." Further, the decorative sheets having sufficient extrusion moldability but requiring improvement were rated "fair."
In this example, "good" was judged as a pass.

<Bending Processability>

Decorative sheets bonded to an MDF (that is, decorative materials) were used for evaluation, and those having no problem with V-cut processability (bending processability) (substantially no cracking, whitening, or the like occurred in the surface protective layer at the top of the fold) were rated "good," those having particularly good results were rated "excellent," and those having problems with V-cut processability (cracking, whitening, or the like occurred in the surface protective layer at the top of the fold) were rated "poor." Further, the decorative sheets having sufficient bending processability but requiring improvement were rated "fair."
In this example, "excellent" and "good" were judged as a pass.

<Petroleum Dependency>

The dependence on fossil fuels in producing decorative sheets was evaluated.

[Table 3]

| Item | Ex. 3-1 | Ex. 3-2 | Ex. 3-3 | Ex. 3-4 | Ex. 3-5 | Ex. 3-6 | Ex. 3-7 | Ex. 3-8 | Ex. 3-9 |
|---|---|---|---|---|---|---|---|---|---|
| Design properties | good | good | good | good | good | good | good | good | good |
| Surface strength | excellent (5B) | excellent (5B) | excellent (5B) | excellent (5B) | excellent (5B) | excellent (5B) | excellent (5B) | excellent (5B) | excellent (5B) |
| Extrusion suitability | good | good | good | good | good | good | good | good | good |

(continued)

| Item | Ex. 3-1 | Ex. 3-2 | Ex. 3-3 | Ex. 3-4 | Ex. 3-5 | Ex. 3-6 | Ex. 3-7 | Ex. 3-8 | Ex. 3-9 |
|---|---|---|---|---|---|---|---|---|---|
| Bending processability | good | good | excellent | good | excellent | good | excellent | good | good |
| Petroleum dependency | low | low | low | low | low | low | low | low | low |

| Item | Comp. Ex. 3-1 | Comp. Ex. 3-2 | Comp. Ex. 3-3 | Comp. Ex. 3-4 |
|---|---|---|---|---|
| Design properties | good | good | good | good |
| Surface strength | excellent (5B) | excellent (5B) | fair (6B) | fair (6B) |
| Extrusion suitability | good | fair | fair | good |
| Bending processability | good | good | good | excellent |
| Petroleum dependency | high | low | low | low |

As a result of evaluating various performances using the above methods, the decorative sheets of Examples 3-1 to 3-9 exhibited excellent performance for all the evaluation items. On the other hand, the decorative sheets of Comparative Examples 3-1 to 3-4 exhibited poor performance for at least some of the evaluation items.

Further, the invention according to the third embodiment can have, for example, the following configurations.

(1) A decorative sheet including: a colored thermoplastic resin layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene.

(2) The decorative sheet according to the above (1), wherein the colored thermoplastic resin layer contains the biomass-derived polypropylene in an amount in the range of 5 mass% or greater and 99 mass% or less relative to a total mass of the colored thermoplastic resin layer, and the transparent thermoplastic resin layer contains the biomass-derived polypropylene in an amount in the range of 5 mass% or greater and 99 mass% or less relative to a total mass of the transparent thermoplastic resin layer.

(3) The decorative sheet according to the above (1) or (2), wherein the colored thermoplastic resin layer has a thickness in the range of 10 $\mu$m or greater and 150 $\mu$m or less, and the transparent thermoplastic resin layer has a thickness in the range of 10 $\mu$m or greater and 150 $\mu$m or less.

(4) The decorative sheet according to any one of the above (1) to (3), wherein the transparent thermoplastic resin layer contains the biomass-derived propylene and has a density in the range of 0.90 g/cm$^3$ or greater and 0.96 g/cm$^3$ or less.

(5) The decorative sheet according to any one of the above (1) to (4), wherein the colored thermoplastic resin layer contains the biomass-derived propylene and has a density in the range of 0.90 g/cm$^3$ or greater and 1.40 g/cm$^3$ or less.

(6) A decorative material including: a substrate material; and the decorative sheet according to any one of the above (1) to (5), the decorative sheet being laminated on at least a first surface of the substrate material.

<Fourth Embodiment>

Next, a fourth embodiment of the present invention will be described.

With reference to the drawings, the fourth embodiment of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

With reference to Fig. 1, a configuration of a decorative sheet 10 will be described.

The decorative material 10 include a decorative sheet 1 and a substrate material 9 as shown in Fig. 1. The detailed configuration of the decorative sheet 1 will be described later.

The substrate material 9 has a board-like shape and is formed using, for example, a wooden board, an inorganic board, a metal plate, or the like, with the decorative sheet 1 laminated on a first surface (upper surface in Fig. 1) of the substrate material 9. That is, the decorative material 10 includes the substrate material 9 and the decorative sheet 1 laminated on the first surface of the substrate material 9.

(Configuration of Decorative Sheet)

As shown in Fig. 1, the decorative sheet 1 includes a colored substrate layer (colored thermoplastic resin layer) 2, a pattern layer 3, an adhesive layer 4, a transparent resin layer (transparent thermoplastic resin layer) 5, a surface protective layer 6, an uneven portion 7 and a primer layer 8.

<Colored Substrate Layer>

The colored substrate layer 2 is a resin layer formed of a thermoplastic resin, and is a colored resin layer formed of a resin composition containing biomass-derived (plant-derived) polypropylene.
The composition of the colored substrate layer 2 will be specifically described below.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.
The raw material monomer for polypropylene does not necessarily have to contain 100 mass% of biomass-derived propylene.
The raw material monomer for biomass-derived polypropylene may further contain fossil fuel-derived propylene.
By using biomass-derived propylene as the raw material, it is theoretically possible to produce polypropylene formed of 100% biomass-derived components.
The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} \, (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.
In the present embodiment, the biomass degree of the biomass-derived polypropylene or the decorative sheet containing the biomass-derived polypropylene may not necessarily have to be 100.
In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.
The method can be appropriately selected according to the type of the propylene polymer. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.
Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain the biomass-derived propylene in an amount of 5 mass% or greater, preferably 5 mass% to 99 mass%, and more preferably 25 mass% to 75 mass%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, and more preferably 25 mass% to 75 mass%, and contains fossil fuel-derived polypropylene in an amount of preferably 1 mass% to 95 mass%, and more preferably 25 mass% to 75 mass%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

As described above, the colored substrate layer 2 may contain the biomass-derived propylene in an amount of 5 mass% or greater, preferably 5 mass% to 99 mass%, more preferably 25 mass% to 75 mass%, and most preferably 40 mass% to 75%, relative to the entire colored substrate layer 2. The concentration of the biomass-derived propylene in the colored substrate layer 2 of 5 mass% or greater can reduce the amount of fossil fuels used compared to conventional products, which makes it possible to provide a carbon-neutral decorative sheet.

The colored substrate layer 2 may have a density of 0.90 $g/cm^3$ to 1.40 $g/cm^3$, and preferably 0.98 $g/cm^3$ to 1.10 $g/cm^3$. The density of the colored substrate layer 2 is measured according to the method specified by Method A in JIS K 7112-1980 after being subjected to annealing described in JIS K 6760-1995. The density of the colored substrate layer 2 of 0.90 $g/cm^3$ or greater can increase the rigidity of the colored substrate layer 2. Further, the density of the colored substrate layer 2 of 1.40 $g/cm^3$ or less can increase the transparency and mechanical strength of the colored substrate layer 2.

The colored substrate layer 2 may contain, as the biomass-derived polypropylene, any of biomass-derived homopolypropylene, biomass-derived random polypropylene and biomass-derived block polypropylene.

The colored substrate layer 2 may have a biomass degree in the range of 10% or greater and 90% or less relative to the entire colored substrate layer 2.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 30 μm or greater and 70 μm or less, more preferably 51 μm or greater and 70 μm or less, and still more preferably 55 μm or greater and 70 μm or less. The reason for this is that the thickness of the colored substrate layer 2 composed of biomass-derived polypropylene of 30 μm or greater can absorb unevenness and steps in the underlying floor materials or the like, improving the installation finish of the decorative sheet 1. Further, the thickness of the colored substrate layer 2 of 70 μm or less can prevent an unnecessary increase in thickness of the colored substrate layer 2, reducing the production cost of the decorative sheet 1.

In the present embodiment, biomass-derived polypropylene has been described as the biomass-derived resin constituting the colored substrate layer 2, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the colored substrate layer 2.

<Pattern Layer>

The pattern layer 3 is a layer laminated on a first surface (upper surface in Fig. 1) of the colored substrate layer 2 and adding a pattern for imparting design properties.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

The pattern layer 3 contains the above-mentioned colorant and binder resin. In the following description, a binder resin used for the pattern layer 3 in the present embodiment will be described.

[Binder Resin]

The binder resin contained in the pattern layer 3 contains urethane (meth)acrylate, which is a resin composition containing at least a polyol, an isocyanate compound and a hydroxy (meth)acrylate.

In the pattern layer 3, at least one of the polyol, the isocyanate compound and the hydroxy (meth)acrylate constituting the urethane (meth)acrylate contains a biomass-derived component. At least one of the polyol, the isocyanate compound and the hydroxy (meth)acrylate may contain a biomass-derived component or may not contain a biomass-derived component. In the following description, the urethane (meth)acrylate containing a biomass-derived component is also referred to as a bio-urethane (meth)acrylate.

That is, the pattern layer 3 is a resin layer containing the above-mentioned colorant and bio-urethane (meth)acrylate. That is, the pattern layer 3 contains a colorant and a biomass-derived component (biomass-derived material).

The urethane (meth)acrylate may be obtained by, for example, reacting a polyol and an isocyanate with a hydroxy (meth)acrylate. In the bio-urethane (meth)acrylate, the polyol can be a plant-derived polyol or the isocyanate can be a plant-derived isocyanate, or both the polyol and isocyanate can be plant-derived.

The polyol can be a polyester polyol which is a reaction product of a polyfunctional alcohol and a polyfunctional carboxylic acid, a polyether polyol which is a reaction product of a polyfunctional alcohol and a polyfunctional isocyanate, or a polycarbonate polyol which is a reaction product of a polyfunctional alcohol and a carbonate. Each polyol will be described below.

<Polyester Polyol>

When the polyester polyol contains a biomass-derived component, at least one of the polyfunctional alcohol and the polyfunctional carboxylic acid contains a biomass-derived component. Examples of the polyester polyol containing a biomass-derived component include the following.

· Reaction products of biomass-derived polyfunctional alcohols and biomass-derived polyfunctional carboxylic acids
· Reaction products of fossil fuel-derived polyfunctional alcohols and biomass-derived polyfunctional carboxylic acids
· Reaction products of biomass-derived polyfunctional alcohols and fossil fuel-derived polyfunctional carboxylic acids

Examples of the biomass-derived polyfunctional alcohols include aliphatic polyfunctional alcohols obtained from plant raw materials such as corn, sugar cane, cassava and sago palm. Examples of the biomass-derived aliphatic polyfunctional alcohols include polypropylene glycol (PPG), neopentyl glycol (NPG), ethylene glycol (EG), diethylene glycol (DEG), butylene glycol (BG) and hexamethylene glycol obtained from plant raw materials by the methods described below. These may be used singly or in combination.

The biomass-derived polypropylene glycol is produced from glycerol via 3-hydroxypropionic aldehyde (HPA) by a fermentation process in which plant raw materials are decomposed to produce glucose. The polypropylene glycol produced by a bioprocess such as the fermentation method described above is preferred from the viewpoint of safety since it yields useful by-products such as lactic acids compared to polypropylene glycol produced by an EO process, and is also preferred in terms of reducing the production cost.

The biomass-derived butylene glycol can be produced by producing glycol from plant raw materials and fermenting it to produce succinic acid, and hydrogenating the resulting succinic acid.

The biomass-derived ethylene glycol can be produced, for example, from bioethanol obtained by a conventional method, via ethylene.

Examples of the fossil fuel-derived polyfunctional alcohols include compounds containing two or more, preferably two to eight hydroxyl groups per molecule. The fossil fuel-derived polyfunctional alcohols are not particularly limited and any conventionally known compounds can be used, and specific examples thereof include polypropylene glycol (PPG), neopentyl glycol (NPG), ethylene glycol (EG), diethylene glycol (DEG), butylene glycol (BG), hexamethylene glycol, as well as triethylene glycol, dipropylene glycol, 1,4-cyclohexane dimethanol, trimethylolpropane, glycerin, 1,9-nonanediol, 3-methyl-1,5-pentanediol, polyether polyol, polycarbonate polyol, polyolefin polyol and acrylic polyol. These may be used singly or in combination of two or more.

Examples of the biomass-derived polyfunctional carboxylic acids include aliphatic polyfunctional carboxylic acids obtained from plant raw materials such as renewable plant-derived oils, such as soybean oil, linseed oil, tung oil, coconut oil, palm oil and castor oil, and reused oils obtained by recycling waste edible oils mainly composed of these oils. Examples of the biomass-derived aliphatic polyfunctional carboxylic acids include sebacic acid, succinic acid, phthalic acid, adipic acid, glutaric acid and dimer acid. For example, the sebacic acid is produced by alkaline pyrolysis of ricinoleic acid obtained from castor oil, with heptyl alcohol as a by-product. In the present invention, it is particularly preferred to use biomass-derived succinic acid or biomass-derived sebacic acid. These may be used singly or in combination of two or more.

Examples of the fossil fuel-derived polyfunctional carboxylic acids include aliphatic polyfunctional carboxylic acids and aromatic polyfunctional carboxylic acids. The fossil fuel-derived aliphatic polyfunctional carboxylic acids are not particularly limited and any conventionally known compounds can be used, and examples thereof include adipic acid, dodecanedioic acid, tetrahydrophthalic anhydride, hexahydrophthalic anhydride, maleic anhydride, itaconic anhydride, sebacic acid, succinic acid, glutaric acid, dimer acid, and ester compounds thereof. Further, the fossil fuel-derived aromatic polyfunctional carboxylic acids are not particularly limited and any conventionally known compounds can be used, and examples thereof include isophthalic acid, terephthalic acid, naphthalenedicarboxylic acid, phthalic anhydride, trimellitic acid, pyromellitic acid, and ester compounds thereof. These may be used singly or in combination of two or more.

<Polyether Polyol>

When the polyether polyol contains a biomass-derived component, at least one of the polyfunctional alcohol and the polyfunctional isocyanate contains a biomass-derived component. Examples of the polyether polyol containing a biomass-derived component include the following.

· Reaction products of biomass-derived polyfunctional alcohols and biomass-derived polyfunctional isocyanates
· Reaction products of fossil fuel-derived polyfunctional alcohols and biomass-derived polyfunctional isocyanates
· Reaction products of biomass-derived polyfunctional alcohols and fossil fuel-derived polyfunctional isocyanates

Examples of the biomass-derived polyfunctional alcohols and fossil fuel-derived polyfunctional alcohols include those described above in relation to the polyester polyol.

The biomass-derived polyfunctional isocyanates can be obtained by acid-amidating plant-derived dicarboxylic acids, reducing them to convert to terminal amino groups, and reacting them with phosgene to convert the amino groups to isocyanate groups. Examples of the biomass-derived polyfunctional isocyanates include biomass-derived diisocyanates. Examples of the biomass-derived diisocyanates include dimer acid diisocyanate (DDI), octamethylene diisocyanate and decamethylene diisocyanate. Further, the plant-derived diisocyanates can also be obtained by using plant-derived amino acids as raw materials and converting the amino groups to isocyanate groups. For example, lysine diisocyanate (LDI) can be obtained by methyl-esterifying the carboxyl groups of lysine, and then converting the amino groups to isocyanate groups. Further, 1,5-pentamethylene diisocyanate can be obtained by decarboxylating the carboxyl groups of lysing, and then converting the amino groups to isocyanate groups.

Other synthesis methods of 1,5-pentamethylene diisocyanate include phosgenation processes and carbamate processes. More specifically, a phosgenation process is a method for synthesizing 1,5-pentamethylene diisocyanate by reacting 1,5-pentamethylene diamine or its salt directly with phosgene, or by suspending pentamethylene diamine hydrochloride in an inert solvent and reacting it with phosgene. Further, a carbamate process is a method for synthesizing 1,5-pentamethylene diisocyanate by carbamating 1,5-pentamethylene diamine or its salt to produce pentamethylene dicarbamate (PDC), which is then pyrolyzed.

The fossil fuel-derived polyfunctional isocyanates are not particularly limited and any conventionally known compounds can be used, and examples thereof include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), durylene diisocyanate, tolidine diisocyanate, xylylene diisocyanate (XDI), 1,5-naphthalene diisocyanate, benzidine diisocyanate, o-nitrobenzidine diisocyanate and 4,4'-diisocyanate dibenzyl. Examples further include aliphatic diisocyanates such as methylene diisocyanate, 1,4-tetramethylene diisocyanate, 1,6-hexamethylene diisocyanate and 1,10-decamethylene diisocyanate; and alicyclic diisocyanates such as 1,4-cyclohexylene diisocyanate, 4,4-methylenebis(cyclohexyl isocyanate), 1,5-tetrahydronaphthalene diisocyanate, isophorone diisocyanate, hydrogenated MDI and hydrogenated XDI. These may be used singly or in combination of two or more.

<Polycarbonate Polyol>

When the polycarbonate polyol contains a biomass-derived component, the polycarbonate polyol can be a reaction product of a polyfunctional alcohol containing a biomass-derived component and a fossil fuel-derived carbonate. Alternatively, the polycarbonate polyol can be a reaction product of a polyfunctional alcohol containing a fossil fuel-derived component and a carbonate containing a biomass-derived component. Examples of the carbonates include dimethyl carbonate, dipropyl carbonate, diethyl carbonate, diethylene carbonate, dibutyl carbonate, ethylene carbonate and diphenyl carbonate. These can be used singly or in a combination of two or more.

Examples of the biomass-derived polyfunctional alcohols include those described above in relation to the polyester polyol.

<Isocyanate Compound>

Next, the isocyanate compound will be described. Examples of the isocyanate compound containing a biomass-derived component can be biomass-derived polyfunctional isocyanates described above in relation to the polyether polyol

<Hydroxy (Meth)acrylate>

Next, the hydroxy (meth)acrylate will be described. Examples of the hydroxy (meth)acrylate include hydroxy (meth)acrylates having one (meth)acryloyl group, such as hydroxyethyl (meth)acrylate, hydroxypropyl (meth)acrylate, hydroxybutyl (meth)acrylate and 2-hydroxy-3-phenoxypropyl (meth)acrylate; hydroxy (meth)acrylates having two or more (meth)acryloyl groups, such as glycerin di(meth)acrylate, pentaerythritol tri(meth)acrylate, ditrimethylolpropane tri(meth) acrylate, dipentaerythritol penta(meth)acrylate and sorbitol penta(meth)acrylate. These may be used singly or in combination of two or more.

Furthermore, the binder resin in the pattern layer 3 may contain nitrocellulose in addition to the above-mentioned bio-urethane (meth)acrylate. That is, the pattern layer 3 may contain the above-mentioned bio-urethane (meth)acrylate, or may contain nitrocellulose in addition to the bio-urethane (meth)acrylate.

<Nitrocellulose>

Nitrocellulose is a nitro-substituted cellulose resin in which some of the hydroxyl groups of the cellulose backbone are nitrated. The cellulose backbone of nitrocellulose resin is a biomass material. As the nitrocellulose, general nitrocellulose can be used without any problems, and in particular, it is preferred to use nitrocellulose substituted with an average of 1.3 to 2.7 nitro groups per glucose unit constituting the cellulose backbone.

Nitrocellulose is classified into L type and H type according to the molecular weight. From the viewpoint of solubility in organic solvents, the L type is preferably used.

The pattern layer 3 has a biomass degree of preferably 5% or greater, more preferably 5% or greater and 50% or less, and still more preferably 10% or greater and 50% or less. The biomass degree within the above ranges can reduce the amount of fossil fuels used, reducing the environmental impact. The pattern layer 3 has a dry mass of preferably 0.1 $g/m^2$ or greater and 15 $g/m^2$ or less, more preferably 3 $g/m^2$ or greater and 10 $g/m^2$ or less, and still more preferably 6 $g/m^2$ or greater and 9 $g/m^2$ or less. The pattern layer 3 may have a thickness of preferably 0.1 $\mu$m or greater and 10 $\mu$m or less, more preferably 0.5 $\mu$m or greater and 5 $\mu$m or less, and still more preferably 0.7 $\mu$m or greater and 3 $\mu$m or less. It should be noted that a plurality of pattern layers 3 having such mass and thickness may be provided.

Regarding "biomass degree," for example, in the case of bio-urethane (meth)acrylate, it can be determined as a value obtained by measuring the biomass-derived carbon content by radiocarbon (C14) measurement as described above.

As described above, the pattern layer 3 may contain the biomass-derived component contained in the bio-urethane (meth)acrylate in an amount of 5 mass% or greater, preferably 5 mass% to 99 mass%, more preferably 25 mass% to 75 mass%, and most preferably 40 mass% to 75%, relative to the entire pattern layer 3. The concentration of the biomass-derived component in the pattern layer 3 of 5 mass% or greater can reduce the amount of fossil fuels used compared to conventional products, which makes it possible to provide a carbon-neutral decorative sheet.

Further, regarding "biomass degree," for example, in the case of nitrocellulose, in which each glucose unit (formula weight = 172) constituting the cellulose backbone, which is the starting material, contains three hydroxyl groups, one to three of these hydroxyl groups can be nitrated (hydrogen is substituted with a nitro group (non-biomass material, formula weight = 46). If the original cellulose backbone consists of 100 mass% biomass material, and the number of substituted nitro groups per glucose unit averages n, the proportion (mass%) of the biomass material in the total nitrocellulose molecule can be calculated by (172-n) $\times$ 100 / (172-n + 46n).

The proportion of the biomass material in the total nitrocellulose molecule is approximately 78.8 mass% when each glucose unit constituting the cellulose backbone is substituted with an average of one nitro group, approximately 64.9 mass% when substituted with two nitro groups, and approximately 55.0 mass% when substituted with three nitro groups (values calculated using the above formula).

Further, the thickness of the pattern layer 3 of 10 $\mu$m or less can improve printing workability during production of the decorative sheet 1, and thus reduce the production cost. The lower limit of the thickness of the pattern layer 3 is not particularly limited, but a thickness of 1 $\mu$m or greater is preferred since it can improve printing workability during production of the decorative sheet 1.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Examples of the pattern of the pattern layer 3 include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Adhesive Layer>

The adhesive layer 4 is a layer laminated on a first surface (upper surface in Fig. 1) of the pattern layer 3 and used for bonding the pattern layer 3 to the transparent resin layer 5.

Examples of the materials used for the adhesive layer 4 include urethane, acrylic, ethylene-vinyl acetate copolymer, vinyl chloride-vinyl acetate copolymer, polyester and polyolefin-based materials. In particular, polyolefin-based resins are preferred from the viewpoint of adhesion to the transparent resin layer 5.

transparent Resin Layer>

The transparent resin layer 5 is a layer laminated on a first surface (upper surface in Fig. 1) of the adhesive layer 4, and is a transparent resin layer formed of a resin composition containing the above-mentioned biomass-derived (plant-derived) polypropylene. More specifically, the transparent resin layer 5 is a resin layer formed of a resin composition containing biomass-derived polypropylene which is obtained by polymerizing a monomer containing the above-mentioned biomass-derived propylene. That is, the transparent resin layer 5 may be formed using a resin composition containing biomass-derived polypropylene used for the colored substrate layer 2. Further, it may further contain fossil fuel-derived propylene.

The transparent resin layer 5 may contain the above-mentioned biomass-derived propylene in an amount of 5 mass% or greater, preferably 5 mass% to 99 mass%, more preferably 25 mass% to 75 mass%, and most preferably 40 mass% to 75%, relative to the entire transparent resin layer 5. The concentration of the biomass-derived propylene in the transparent resin layer 5 of 5 mass% or greater can reduce the amount of fossil fuels used compared to conventional products, which makes it possible to provide a carbon-neutral decorative sheet.

The transparent resin layer 5 may have a density of 0.90 g/cm$^3$ to 0.96 g/cm$^3$, preferably 0.90 g/cm$^3$ to 0.93 g/cm$^3$, and more preferably 0.90 g/cm$^3$ to 0.91 g/cm$^3$. The density of the transparent resin layer 5 is measured according to the method specified by Method A in JIS K 7112-1980 after being subjected to annealing described in JIS K 6760-1995. The density of the transparent resin layer 5 of 0.90 g/cm$^3$ or greater can increase the rigidity of the transparent resin layer 5. Further, the density of the transparent resin layer 5 of 0.96 g/cm$^3$ or less can improve transparency and mechanical strength of the transparent resin layer 5.

The transparent resin layer 5 may have a thickness of 10 $\mu$m to 150 $\mu$m, preferably 55 $\mu$m to 100 $\mu$m, and more preferably 60 $\mu$m to 80 $\mu$m.

The transparent resin layer 5 may have a biomass degree in the range of 10% or greater and 90% or less relative to the entire transparent resin layer 5.

The method of producing the transparent resin layer 5 is not particularly limited, and any known method can be used. In the present embodiment, extrusion molding is preferred, and extrusion molding by a T-die method or blown film extrusion is more preferred.

In the present embodiment, the transparent resin layer 5 and the colored substrate layer 2 preferably satisfy the following specific relationship in density, thickness and biomass degree (concentration of biomass-derived propylene).

In the present embodiment, a density d1 of the transparent resin layer 5 and a density d2 of the colored substrate layer 2 preferably satisfy d2>d1. The reason for this is that the transparent resin layer 5 requires shapeability and the colored substrate layer 2 requires productivity.

The ratio (d2/d1) between the density d1 of the transparent resin layer 5 and the density d2 of the colored substrate layer 2 is preferably in the range of 1.1 or greater and 1.5 or less, more preferably in the range of 1.1 or greater and 1.3 or less, and still more preferably in the range of 1.1 or greater and 1.2 or less. With the density ratio between the transparent resin layer and the colored substrate layer within the above ranges, it is possible to provide the decorative sheet with required extrusion suitability and bending processability even when biomass-derived polypropylene is used.

In the present embodiment, a thickness t1 of the transparent resin layer 5 and a thickness t2 of the colored substrate layer 2 preferably satisfy t1≥t2. The reason for this is that the transparent resin layer 5 needs to be thick and the colored substrate layer 2 does not need to be as thick as the transparent resin layer 5.

The ratio (t1/t2) between the thickness t1 of the transparent resin layer 5 and the thickness t2 of the colored substrate layer 2 is preferably in the range of 1.1 or greater and 3 or less, more preferably in the range of 1.1 or greater and 2 or less, and still more preferably in the range of 1.1 or greater and 1.5 or less.

In the present embodiment, a biomass-derived propylene concentration C1 in the transparent resin layer 5 and a biomass-derived propylene concentration C2 in the colored substrate layer 2 preferably satisfy C1>C2. The reason for this is that the transparent resin layer 5 needs to be thick and have a large propylene content, and increasing the biomass degree of the transparent resin layer 5 can reduce the fossil fuel content.

The biomass-derived polypropylene constituting the transparent resin layer 5 may contain a nucleating agent.

The nucleating agent may be added to the polypropylene in an amount preferably in the range of 500 ppm or greater and 2,000 ppm or less, and more preferably in the range of 1,500 ppm or greater and 2,000 ppm or less, relative to the mass of the polypropylene.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 preferably has transparency (colorless transparency, colored transparency or translucency) to the extent that the pattern of the pattern layer 3 can be seen through the surface (top surface) of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

<Surface Protective Layer>

The surface protective layer 6 is a layer laminated on a first surface (upper surface in Fig. 1) of the transparent resin layer 5 and imparting functions, such as weatherability, scratch resistance, stain resistance and design properties, to the decorative sheet 1.

The surface protective layer 6 can be made of a thermosetting resin or an ionizing radiation-curable resin, and may be formed using, for example, an acrylic-based resin composition.

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents and antifungal agents.

<Uneven Portion>

The uneven portion 7 is formed of recesses provided at a plurality of positions on the transparent resin layer 5 and the surface protective layer 6.

<Primer Layer>

The primer layer 8 is a layer that serves as a primer and improves corrosion resistance and adhesion between the colored substrate layer 2 and the substrate material 9.

The primer layer 8 is laminated on a second surface (lower surface in Fig. 1) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The primer layer 8 may have a thickness, for example, in the range of 1 $\mu$m or greater and 10 $\mu$m of less.

The embodiment described above is an example of the present invention, and the present invention is not limited to the embodiment described above. In addition to the above embodiment, various modifications can be made according to the design and the like without departing from the technical idea of the present invention.

(Effects of Present Embodiment)

According to the decorative sheet 1 of the present embodiment, the following effects can be achieved.

(1) Each of the colored substrate layer 2 and the transparent resin layer 5 is a resin layer formed of a resin composition containing biomass-derived polypropylene which is obtained by polymerizing a monomer containing biomass-derived propylene, and the pattern layer 3 contains a colorant and a biomass-derived material.

This increases the strength compared to, for example, a configuration formed of polyethylene or the like, making it possible to form a colored substrate layer 2 and a transparent resin layer 5 having high scratch resistance and the like.

As a result, a decorative sheet 1 capable of preventing a decrease in surface hardness can be provided even when it is formed of biomass-derived polypropylene, which is a plant-derived material.

Furthermore, a transparent resin layer 5 having high transparency equivalent to, for example, that of a configuration formed of polyethylene or the like can be formed even when it has a configuration formed of biomass-derived polypropylene, which is a plant-derived material.

As described above, with this configuration, it is possible to provide a decorative sheet that can reliably reduce the amount of fossil fuels used by using a plant-derived material and reliably maintain the physical properties suitable for use as a decorative sheet.

(2) The colored substrate layer 2 contains biomass-derived polypropylene in an amount in the range of 5 mass% or greater and 99 mass% or less relative to a total mass of the colored substrate layer 2, and the transparent resin layer 5 contains biomass-derived polypropylene in an amount in the range of 5 mass% or greater and 99 mass% or less relative to a total mass of the transparent resin layer 5.

As a result, a transparent resin layer 5 and a transparent resin layer 2 having higher environmental suitability can be formed. Further, it is possible to provide a decorative sheet that can further reliably reduce the amount of fossil fuels used by using a plant-derived material and further reliably maintain the physical properties suitable for use as a decorative sheet.

(3) The pattern layer 3 contains biomass-derived urethane (meth)acrylate as a biomass-derived material.

Further, it is possible to provide a decorative sheet that can further reliably reduce the amount of fossil fuels used by using a plant-derived material and further reliably maintain the physical properties suitable for use as a decorative sheet.

(4) The biomass-derived urethane (meth)acrylate contained in the pattern layer 3 is a reaction product of a polyol, an isocyanate compound and a hydroxy (meth)acrylate, and at least one of the polyol, the isocyanate compound and the hydroxy (meth)acrylate contains a biomass-derived component.

Further, it is possible to provide a decorative sheet that can further reliably reduce the amount of fossil fuels used by using a plant-derived material and further reliably maintain the physical properties suitable for use as a decorative sheet.

(5) The colored substrate layer 2 has a thickness in the range of 30 $\mu$m or greater and 70 $\mu$m or less, and the transparent resin layer 5 has a thickness in the range of 10 $\mu$m or greater and 150 $\mu$m or less.

As a result, a transparent resin layer 5 and a transparent resin layer 2 having higher production suitability, flexibility and shapeability can be formed.

Further, according to the decorative material 10 of the present embodiment, the following effects can be achieved.

(6) The decorative material 10 includes the substrate material 9 and the decorative sheet 1 laminated on at least a first surface of the substrate material 9.

As a result, a decorative material 10 capable of preventing a decrease in surface hardness can be provided even when it is formed of biomass-derived polypropylene, which is a plant-derived material.

<Modifications>

(1) In the embodiment, the decorative material 10 has a configuration in which the decorative sheet 1 is laminated on the first surface of the substrate material 9, but the configuration is not limited thereto. That is, the decorative material 10 may have a configuration in which the decorative sheet 1 is laminated not only on the first surface of the substrate material 9 but also on a second surface (lower surface in Fig. 1) of the substrate material 9.

[Examples]

Referring to the present embodiment, decorative materials of Examples 4-1 to 4-12 and decorative materials of Comparative Examples 4-1 to 4-7 will be described below.

(Example 4-1)

After a first surface of a substrate was subjected to a corona discharge treatment, a pattern layer, a urethane-based adhesive layer, a maleic anhydride-modified polyethylene resin layer (transparent adhesive layer), a transparent resin layer and a surface protective layer mainly composed of an acrylic-based resin composition were laminated in this order on the first surface of the substrate. Further, after a second surface of the substrate was subjected to a corona discharge treatment, a primer layer (thickness: 1 $\mu$m to 2 $\mu$m) made of polyester urethane resin was formed on the second surface. Thus, a decorative sheet of Example 4-1 (total thickness: 135 $\mu$m) was obtained.

The substrate used in Example 4-1 was a colored substrate layer (thickness: 55 $\mu$m) formed of a resin composition containing biomass-derived polypropylene. The colored substrate layer was obtained by calendering the above resin composition. In the colored substrate layer thus formed, the biomass-derived polypropylene content was 75 mass% relative to a total mass of the colored substrate layer.

The transparent resin layer used was a transparent resin layer (thickness: 70 $\mu$m) formed of a resin composition containing biomass-derived polypropylene. The transparent resin layer was obtained by laminating the above resin composition with an extruder. In the transparent resin layer thus formed, the biomass-derived polypropylene content was 90 mass% relative to a total mass of the transparent resin layer.

Further, the binder resin used in the pattern layer was bio-urethane (meth)acrylate that was a reaction product of a polyester polyol containing a biomass-derived component, a fossil fuel-derived isocyanate compound and a fossil fuel-derived hydroxy (meth)acrylate. The polyester polyol containing a biomass-derived component used was a polyester polyol that was a reaction product of a polyfunctional alcohol containing a biomass-derived component and a fossil fuel-derived polyfunctional carboxylic acid.

(Example 4-2)

A decorative sheet of Example 4-2 was obtained in the same manner as in Example 4-1 except that the polyester polyol used for the bio-urethane (meth)acrylate, which was a binder resin in the pattern layer, was changed to a reaction product of a fossil fuel-derived polyfunctional alcohol and a polyfunctional carboxylic acid containing a biomass-derived component.

(Example 4-3)

A decorative sheet of Example 4-3 was obtained in the same manner as in Example 4-1 except that the bio-urethane (meth)acrylate, which was a binder resin in the pattern layer, was changed to a bio-urethane (meth)acrylate that was a reaction product of a fossil fuel-derived polyester polyol, an isocyanate compound containing a biomass-derived component and a fossil fuel-derived hydroxy (meth)acrylate.

(Example 4-4)

A decorative sheet of Example 4-4 was obtained in the same manner as in Example 4-1 except that the polyol used for the bio-urethane (meth)acrylate, which was a binder resin in the pattern layer, was changed to a polyether polyol. Specifically, the polyether polyol used was a reaction product of a polyfunctional alcohol containing a biomass-derived component and a fossil fuel-derived polyfunctional isocyanate.

(Example 4-5)

A decorative sheet of Example 4-5 was obtained in the same manner as in Example 4-4 except that the polyether polyol used for the bio-urethane (meth)acrylate, which was a binder resin in the pattern layer, was changed to a reaction product of a fossil fuel-derived polyfunctional alcohol and a polyfunctional isocyanate containing a biomass-derived component.

(Example 4-6)

A decorative sheet of Example 4-6 was obtained in the same manner as in Example 4-3 except that the polyol used for the bio-urethane (meth)acrylate, which was a binder resin in the pattern layer, was changed to a fossil fuel-derived polyether polyol.

(Example 4-7)

A decorative sheet of Example 4-7 was obtained in the same manner as in Example 4-1 except that the polyol used for the bio-urethane (meth)acrylate, which was a binder resin in the pattern layer, was changed to a polycarbonate polyol. Specifically, the polycarbonate polyol used was a reaction product of a polyfunctional alcohol containing a biomass-derived component and a fossil fuel-derived carbonate.

(Example 4-8)

A decorative sheet of Example 4-8 was obtained in the same manner as in Example 4-3 except that the polyol used for the bio-urethane (meth)acrylate, which was a binder resin in the pattern layer, was changed to a fossil fuel-derived polycarbonate polyol.

(Example 4-9)

A decorative sheet of Example 4-9 was obtained in the same manner as in Example 4-1 except that the biomass-derived polypropylene content in the colored substrate layer was changed to 5 mass% relative to a total mass of the colored substrate layer, and the biomass-derived polypropylene content in the transparent resin layer was changed to 5 mass% relative to a total mass of the transparent resin layer.

(Example 4-10)

A decorative sheet of Example 4-10 was obtained in the same manner as in Example 4-1 except that the biomass-derived polypropylene content in the colored substrate layer was changed to 99 mass% relative to a total mass of the colored substrate layer, and the biomass-derived polypropylene content in the transparent resin layer was changed to 99 mass% relative to a total mass of the transparent resin layer.

(Example 4-11)

A decorative sheet of Example 4-11 was obtained in the same manner as in Example 4-1 except that the thickness of the colored substrate layer was changed to 30 μm and the thickness of the transparent resin layer was changed to 10 μm.

(Example 4-12)

A decorative sheet of Example 4-12 was obtained in the same manner as in Example 4-1 except that the thickness of the colored substrate layer was changed to 70 μm and the thickness of the transparent resin layer was changed to 150 μm.

(Comparative Example 4-1)

A decorative sheet of Comparative Example 4-1 was obtained in the same manner as in Example 4-1 except that the bio-urethane (meth)acrylate used for the binder resin in the pattern layer was changed to petroleum-derived urethane (meth)acrylate.

(Comparative Example 4-2)

A decorative sheet of Comparative Example 4-2 was obtained in the same manner as in Example 4-1 except that the biomass-derived polypropylene in the transparent resin layer was changed to petroleum-derived polypropylene, and the bio-urethane (meth)acrylate used for the binder resin in the pattern layer was changed to petroleum-derived urethane (meth)acrylate.

(Comparative Example 4-3)

A decorative sheet of Comparative Example 4-3 was obtained in the same manner as in Example 4-1 except that the biomass-derived polypropylene in the colored substrate layer was changed to petroleum-derived polypropylene, and the bio-urethane (meth)acrylate used for the binder resin in the pattern layer was changed to petroleum-derived urethane (meth)acrylate.

(Comparative Example 4-4)

A decorative sheet of Comparative Example 4-4 was obtained in the same manner as in Example 4-1 except that the biomass-derived polypropylene in the colored substrate layer was changed to petroleum-derived polypropylene, the biomass-derived polypropylene in the transparent resin layer was changed to petroleum-derived polypropylene, and the bio-urethane (meth)acrylate used for the binder resin in the pattern layer was changed to petroleum-derived urethane (meth)acrylate.

(Comparative Example 4-5)

A decorative sheet of Comparative Example 4-5 was obtained in the same manner as in Example 4-1 except that the biomass-derived polypropylene in the colored substrate layer was changed to petroleum-derived polypropylene.

(Comparative Example 4-6)

A decorative sheet of Comparative Example 4-6 was obtained in the same manner as in Example 4-1 except that the biomass-derived polypropylene in the transparent resin layer was changed to petroleum-derived polypropylene.

(Comparative Example 4-7)

A decorative sheet of Comparative Example 4-7 was obtained in the same manner as in Example 4-1 except that the biomass-derived polypropylene in the colored substrate layer was changed to petroleum-derived polypropylene, and the biomass-derived polypropylene in the transparent resin layer was changed to petroleum-derived polypropylene.

(Performance Evaluation, Evaluation Results)

The decorative sheets of Examples 4-1 to 4-12 and the decorative sheets of Comparative Examples 4-1 to 4-7 were examined for "design properties," "surface strength," "bending processability," "weatherability," "ink adhesion," and "petroleum dependency." The evaluation methods used were as follows.

<Design Properties>

In the examples and comparative examples, the decorative sheets in which a pattern of the pattern layer was clearly seen without distortion (the intended pattern can be clearly seen) were rated "good," and the decorative sheets in which part of the pattern layer appeared to be missing were rated "poor."
In this example, "good" was judged as a pass.

<Surface Hardness>

A test was performed according to JIS K 5600-5-4 scratch hardness (pencil method).
A pencil with a load was slid against the decorative sheets of the respective examples and comparative examples, and it was observed whether the surface protective layer was dented (scratched).
The decorative sheets having sufficient scratch resistance were rated "good," and the decorative sheets having poor scratch resistance were rated "poor."
In this example, "good" was judged as a pass. In the table, "good (6B)" means that the surface protective layer was not dented (scratched) when tested with 6B.

<Bending Processability>

Decorative sheets bonded to an MDF (that is, decorative materials) were used for evaluation, and those having no problem with V-cut processability (bending processability) (substantially no cracking, whitening, or the like occurred in the surface protective layer at the top of the fold) were rated "good," and those having problems with V-cut processability (cracking, whitening, or the like occurred in the surface protective layer at the top of the fold) were rated "poor."
In this example, "good" was judged as a pass.

<Weatherability>

A carbon arc weathering test according to JIS B 7753 was performed for each of the decorative sheets of the respective examples and comparative examples using a weathering tester (Sunshine Weather Meter: manufactured by Suga Test Instruments Co., Ltd.). The test (test condition) was set to 2,000 hours exposure to weathering.
After the weathering test, the decorative sheets having no change in appearance were rated "good," and the decorative sheets having significant change in appearance were rated "poor."
In this example, "good" was judged as a pass.

<Ink Adhesion>

For evaluating ink adhesion (adhesion between the colored substrate layer and the pattern layer) of the decorative sheets of the respective examples and comparative examples, a test of repeated cooling and heating was performed (specifically, the decorative sheets of the respective examples and comparative examples were placed in an environment where "80°C for 2 hours" and "-20°C for 2 hours" were repeated for 10 cycles), and then a cellophane tape peeling test was performed to examine the ink condition of the pattern layer.
The decorative sheets in which the ink was not detached was rated "good," and the decorative sheets in which the ink was partially detached was rated "poor."
In this example, "good" was judged as a pass.

<Petroleum Dependency>

The dependence on fossil fuels in producing decorative sheets was relatively rated "high," "medium" and "low."
In this example, "low" was judged as a pass.

[Table 4]

|  | Ex. 4-1 | Ex. 4-2 | Ex. 4-3 | Ex. 4-4 | Ex. 4-5 | Ex. 4-6 | Ex. 4-7 | Ex. 4-8 | Ex. 4-9 | Ex. 4-10 | Ex. 4-11 | Ex. 4-12 |
|---|---|---|---|---|---|---|---|---|---|---|---|---|
| Transparent resin layer | good | good | good | good | good | good | good | good | good | good | good | good |
| Colored substrate layer | good | good | good | good | good | good | good | good | good | good | good | good |
| Pattern layer | good | good | good | good | good | good | good | good | good | good | good | good |

|  | Comp. Ex. 4-1 | Comp. Ex. 4-2 | Comp. Ex. 4-3 | Comp. Ex. 4-4 | Comp. Ex. 4-5 | Comp. Ex. 4-6 | Comp. Ex. 4-7 |
|---|---|---|---|---|---|---|---|
| Transparent resin layer | good | poor | good | poor | good | poor | poor |
| Colored substrate layer | good | good | poor | poor | poor | good | poor |
| Pattern layer | poor | poor | poor | poor | good | good | good |
| good: biomass polypropylene (PP) used<br>poor: non-biomass polypropylene (PP) used | | | | | | | |

[Table 5]

| Item | Ex. 4-1 | Ex. 4-2 | Ex. 4-3 | Ex. 4-4 | Ex. 4-5 | Ex. 4-6 | Ex. 4-7 | Ex. 4-8 | Ex. 4-9 | Ex. 4-10 | Ex. 4-11 | Ex. 4-12 |
|---|---|---|---|---|---|---|---|---|---|---|---|---|
| Design properties | good | good | good | good | good | good | good | good | good | good | good | good |
| Surface strength | good (6B) | good (6B) | good (6B) | good (6B) | good (6B) | good (6B) | good (6B) | good (6B) | good (6B) | good (6B) | good (6B) | good (6B) |
| Bending processability | good | good | good | good | good | good | good | good | good | good | good | good |
| Weatherability | good (2000h) | good (2000h) | good (2000h) | good (2000h) | good (2000h) | good (2000h) | good (2000h) | good (2000h) | good (2000h) | good (2000h) | good (2000h) | good (2000h) |
| Ink adhesion | good | good | good | good | good | good | good | good | good | good | good | good |
| Petroleum dependency | low | low | low | low | low | low | low | low | low | low | low | low |

| Item | Comp. Ex. 4-1 | Comp. Ex. 4-2 | Comp. Ex. 4-3 | Comp. Ex. 4-4 | Comp. Ex. 4-5 | Comp. Ex. 4-6 | Comp. Ex. 4-7 |
|---|---|---|---|---|---|---|---|
| Design properties | good | good | good | good | good | good | good |
| Surface strength | good (6B) | good (6B) | good (6B) | good (6B) | good (6B) | good (6B) | good (6B) |
| Bending processability | good | good | good | good | good | good | good |
| Weatherability | good (2000h) | good (2000h) | good (2000h) | good (2000h) | good (2000h) | good (2000h) | good (2000h) |
| Ink adhesion | good | good | good | good | good | good | good |
| Petroleum dependency | medium | high | high | high | medium | medium | high |

As a result of evaluating various performances using the above methods, the decorative sheets of Examples 4-1 to 4-12 exhibited excellent performance for all the evaluation items. On the other hand, the decorative sheets of Comparative Examples 4-1 to 4-7 exhibited poor performance for at least some of the evaluation items.

Further, the invention according to the fourth embodiment can have, for example, the following configurations.

(1) A decorative sheet including: a colored thermoplastic resin layer; a pattern layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, and the pattern layer contains a colorant and a biomass-derived material.

(2) The decorative sheet according to the above (1), wherein the colored thermoplastic resin layer contains the biomass-derived polypropylene in an amount in the range of 5 mass% or greater and 99 mass% or less relative to a total mass of the colored thermoplastic resin layer, and the transparent thermoplastic resin layer contains the biomass-derived polypropylene in an amount in the range of 5 mass% or greater and 99 mass% or less relative to a total mass of the transparent thermoplastic resin layer.

(3) The decorative sheet according to the above (1) or (2), wherein the pattern layer contains biomass-derived urethane (meth)acrylate as the biomass-derived material.

(4) The decorative sheet according to the above (3), wherein the biomass-derived urethane (meth)acrylate is a reaction product of a polyol, an isocyanate compound and a hydroxy (meth)acrylate, and at least one of the polyol, the isocyanate compound and the hydroxy (meth)acrylate contains a biomass-derived component.

(5) The decorative sheet according to any one of the above (1) to (4), wherein the colored thermoplastic resin layer has a thickness in the range of 30 $\mu$m or greater and 70 $\mu$m or less, and the transparent thermoplastic resin layer has a thickness in the range of 10 $\mu$m or greater and 150 $\mu$m or less.

(6) A decorative material including: a substrate material; and the decorative sheet according to any one of the above (1) to (5), the decorative sheet being laminated on at least a first surface of the substrate material.

<Fifth Embodiment>

Next, a fifth embodiment of the present invention will be described.

The fifth embodiment can solve the following problems in addition to the above-mentioned problems.

In recent years, against the background of environmental issues, there has been a demand to change the materials for decorative sheets from conventional petroleum-derived materials to plant-derived materials. However, when decorative sheets are formed using biomass polyolefins such as biomass polyethylene as a plant-derived material, there is a problem that the concealing properties are insufficient for use as decorative sheets.

In view of the above problem, the invention according to the present embodiment has been made to provide a decorative sheet and a decorative material capable of preventing a decrease in concealing properties even when formed using plant-derived materials.

According to an aspect of the present invention, it is possible to provide a decorative sheet and a decorative material capable of preventing a decrease in concealing properties even when formed using biomass-derived polypropylene, which is a plant-derived material.

With reference to the drawings, the fifth embodiment of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

With reference to Fig. 1, a configuration of a decorative sheet 10 will be described.

The decorative material 10 include a decorative sheet 1 and a substrate material 9 as shown in Fig. 1. The detailed configuration of the decorative sheet 1 will be described later.

The substrate material 9 has a board-like shape and is formed using, for example, a wooden board, an inorganic board, a metal plate, or the like, with the decorative sheet 1 laminated on a first surface (upper surface in Fig. 1) of the substrate material 9. That is, the decorative material 10 includes the substrate material 9 and the decorative sheet 1 laminated on the first surface of the substrate material 9.

(Configuration of Decorative Sheet)

As shown in Fig. 1, the decorative sheet 1 includes a colored substrate layer (colored thermoplastic resin layer) 2, a pattern layer 3, an adhesive layer 4, a transparent resin layer (transparent thermoplastic resin layer) 5, a surface protective layer 6, an uneven portion 7 and a primer layer 8.

<Colored Substrate Layer>

The colored substrate layer 2 is a resin layer formed of a thermoplastic resin, and is a colored resin layer formed of a resin composition containing biomass-derived (plant-derived) polypropylene, and this colored resin layer further contains an inorganic substance.

The composition of the colored substrate layer 2 will be specifically described below.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.

The raw material monomer for polypropylene does not necessarily have to contain 100 mass% of biomass-derived propylene.

The raw material monomer for biomass-derived polypropylene may further contain fossil fuel-derived propylene.

By using biomass-derived propylene as the raw material, it is theoretically possible to produce polypropylene formed of 100% biomass-derived components.

The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.

In the present embodiment, the biomass degree of the biomass-derived polypropylene or the decorative sheet containing the biomass-derived polypropylene may not necessarily have to be 100.

In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain the biomass-derived propylene in an amount of 5 mass% or greater, preferably 5 mass% to 99 mass%, and more preferably 25 mass% to 75 mass%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene and fossil fuel-derived polypropylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, and more preferably 25 mass% to 75 mass%, and contains fossil fuel-derived polypropylene in an amount of preferably 1 mass% to 95 mass%, and more preferably 25 mass% to 75 mass%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

(Inorganic Substance)

The colored substrate layer 2 contains an inorganic substance, and the specific gravity of the entire colored substrate layer 2 may be in the range of 0.91 or greater and 1.30 or less, preferably in the range of 0.91 or greater and 1.15 or less, and more preferably in the range of 0.95 or greater and 1.05 or less.

The inorganic substance can be, for example, one or more of calcium carbonate, titanium oxide, carbon black, silica, chromium, antimony, titanium composites, and other oxides. Among these inorganic substances, calcium carbonate and titanium oxide are preferred. The calcium carbonate and titanium oxide can easily impart excellent concealing properties to the colored substrate layer 2.

As described above, the colored substrate layer 2 may contain the biomass-derived propylene in an amount of 5 mass% or greater, preferably 5 mass% to 99 mass%, more preferably 25 mass% to 75 mass%, and most preferably 40 mass% to 75%, relative to the entire colored substrate layer 2. The concentration of the biomass-derived propylene in the colored substrate layer 2 of 5 mass% or greater can reduce the amount of fossil fuels used compared to conventional products, which makes it possible to provide a carbon-neutral decorative sheet.

The specific gravity of the entire colored substrate layer 2 can be adjusted by adjusting the amount of the inorganic substance added.

Further, the specific gravity of the entire colored substrate layer 2 may be adjusted by adjusting the type and composition ratio of propylene constituting the colored substrate layer 2.

The colored substrate layer 2 may have a density of 0.91 $g/cm^3$ to 1.30 $g/cm^3$, preferably 0.91 $g/cm^3$ to 1.15

g/cm$^3$, and more preferably 0.95 g/cm$^3$ to 1.05 g/cm$^3$. The density of the colored substrate layer 2 is measured according to the method specified by Method A in JIS K 7112-1980 after being subjected to annealing described in JIS K 6760-1995. The density of the colored substrate layer 2 of 0.91 g/cm$^3$ or greater can increase the rigidity of the colored substrate layer 2. Further, the density of the colored substrate layer 2 of 1.30 g/cm$^3$ or less can increase the transparency, flexibility and mechanical strength of the colored substrate layer 2.

The colored substrate layer 2 may contain, as the biomass-derived polypropylene, any of biomass-derived homopolypropylene, biomass-derived random polypropylene and biomass-derived block polypropylene.

The colored substrate layer 2 may have a biomass degree in the range of 10% or greater and 90% or less relative to the entire colored substrate layer 2.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 30 μm or greater and 100 μm or less, more preferably 51 μm or greater and 100 μm or less, and still more preferably 55 μm or greater and 80 μm or less. The reason for this is that the thickness of the colored substrate layer 2 composed of biomass-derived polypropylene of 30 μm or greater can absorb unevenness and steps in the underlying floor materials or the like, improving the installation finish of the decorative sheet 1. Further, the thickness of the colored substrate layer 2 of 100 μm or less can prevent an unnecessary increase in thickness of the colored substrate layer 2, reducing the production cost of the decorative sheet 1.

In the present embodiment, biomass-derived polypropylene has been described as the biomass-derived resin constituting the colored substrate layer 2, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the colored substrate layer 2.

<Pattern Layer>

The pattern layer 3 is a layer laminated on a first surface (upper surface in Fig. 1) of the colored substrate layer 2 and adding a pattern for imparting design properties. Further, the pattern layer 3 may be omitted if it can be substituted by coloring due to the colored substrate layer 2.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

Examples of the binder resin include, but are not limited to, urethane-based resins, acrylic-based resins, vinyl chloride acetate-based resins, polyimide-based resins, nitrocellulose, and mixtures thereof.

Examples of the pattern include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

The pattern layer 3 may have a thickness preferably in the range of 1 μm or greater and 10 μm of less. The thickness of the pattern layer 3 of 1 μm or greater can ensure clear printing. Further, the thickness of the pattern layer 3 of 10 μm or less can improve printing workability during production of the decorative sheet 1, and thus reduce the production cost.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Adhesive Layer>

The adhesive layer 4 is a layer laminated on a first surface (upper surface in Fig. 1) of the pattern layer 3 and used for bonding the pattern layer 3 to the transparent resin layer 5.

Examples of the materials used for the adhesive layer 4 include urethane, acrylic, ethylene-vinyl acetate copolymer, vinyl chloride-vinyl acetate copolymer, polyester and polyolefin-based materials. In particular, polyolefin-based resins are preferred from the viewpoint of adhesion to the transparent resin layer 5.

<Transparent Resin Layer>

The transparent resin layer 5 is a layer laminated on a first surface (upper surface in Fig. 1) of the adhesive layer 4, and is a transparent resin layer formed of a resin composition containing the above-mentioned biomass-derived (plant-derived) polypropylene. More specifically, the transparent resin layer 5 is a resin layer formed of a resin composition containing biomass-derived polypropylene which is obtained by polymerizing a monomer containing the above-mentioned biomass-derived propylene. That is, the transparent resin layer 5 may be formed using a resin composition containing biomass-derived polypropylene used for the colored substrate layer 2. Further, it may further contain fossil fuel-derived propylene and fossil fuel-derived polypropylene.

The transparent resin layer 5 may contain the above-mentioned biomass-derived propylene in an amount of 5 mass% or greater, preferably 5 mass% to 99 mass%, more preferably 25 mass% to 90 mass%, and most preferably 40 mass% to 90%, relative to the entire transparent resin layer 5. The concentration of the biomass-derived propylene in the transparent resin layer 5 of 5 mass% or greater can reduce the amount of fossil fuels used compared to conventional products, which makes it possible to provide a carbon-neutral decorative sheet.

The transparent resin layer 5 may have a density of $0.90\,g/cm^3$ to $0.96\,g/cm^3$, preferably $0.90\,g/cm^3$ to $0.93\,g/cm^3$, and more preferably $0.90\,g/cm^3$ to $0.91\,g/cm^3$. The density of the transparent resin layer 5 is measured according to the method specified by Method A in JIS K 7112-1980 after being subjected to annealing described in JIS K 6760-1995. The density of the transparent resin layer 5 of $0.90\,g/cm^3$ or greater can increase the rigidity of the transparent resin layer 5. Further, the density of the transparent resin layer 5 of $0.96\,g/cm^3$ or less can improve transparency and mechanical strength of the transparent resin layer 5.

The transparent resin layer 5 may have a thickness of 10 $\mu$m to 150 $\mu$m, preferably 55 $\mu$m to 100 $\mu$m, and more preferably 60 $\mu$m to 80 $\mu$m.

The transparent resin layer 5 may contain, as the biomass-derived polypropylene, biomass-derived homopolypropylene, biomass-derived random polypropylene or biomass-derived block polypropylene.

Further, the transparent resin layer 5 may have a biomass degree in the range of 10% or greater and 90% or less relative to the entire transparent resin layer 5.

The method of producing the transparent resin layer 5 is not particularly limited, and any known method can be used. In the present embodiment, extrusion molding is preferred, and extrusion molding by a T-die method or blown film extrusion is more preferred.

In the present embodiment, the transparent resin layer 5 and the colored substrate layer 2 preferably satisfy the following specific relationship in density, thickness and biomass degree (concentration of biomass-derived propylene).

In the present embodiment, a density d1 of the transparent resin layer 5 and a density d2 of the colored substrate layer 2 preferably satisfy d2>d1. The reason for this is that the transparent resin layer 5 requires shapeability and the colored substrate layer 2 requires productivity.

The ratio (d2/d1) between the density d1 of the transparent resin layer 5 and the density d2 of the colored substrate layer 2 is preferably in the range of 1.1 or greater and 1.5 or less, more preferably in the range of 1.1 or greater and 1.3 or less, and still more preferably in the range of 1.1 or greater and 1.2 or less. With the density ratio between the transparent resin layer and the colored substrate layer within the above ranges, it is possible to provide the decorative sheet with required extrusion suitability and bending processability even when biomass-derived polypropylene is used.

In the present embodiment, a thickness t1 of the transparent resin layer 5 and a thickness t2 of the colored substrate layer 2 preferably satisfy t1>t2. The reason for this is that the transparent resin layer 5 needs to be thick and the colored substrate layer 2 does not need to be as thick as the transparent resin layer 5.

The ratio (t1/t2) between the thickness t1 of the transparent resin layer 5 and the thickness t2 of the colored substrate layer 2 is preferably in the range of 1.1 or greater and 3 or less, more preferably in the range of 1.1 or greater and 2 or less, and still more preferably in the range of 1.1 or greater and 1.5 or less.

In the present embodiment, a biomass-derived propylene concentration C1 in the transparent resin layer 5 and a biomass-derived propylene concentration C2 in the colored substrate layer 2 preferably satisfy C1>C2. The reason for this is that the transparent resin layer 5 needs to be thick and have a large propylene content, and increasing the biomass degree of the transparent resin layer 5 can reduce the fossil fuel content.

The biomass-derived polypropylene constituting the transparent resin layer 5 may contain a nucleating agent.

The nucleating agent may be added to the polypropylene in an amount preferably in the range of 500 ppm or greater and 2,000 ppm or less, and more preferably in the range of 1,500 ppm or greater and 2,000 ppm or less, relative to the mass of the polypropylene.

If necessary, the transparent resin layer 5 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The transparent resin layer 5 preferably has transparency (colorless transparency, colored transparency or translucency) to the extent that the pattern of the pattern layer 3 can be seen through the surface (top surface) of the decorative sheet 1.

In the present embodiment, biomass-derived polypropylene has been described as the biomass-derived resin constituting the transparent resin layer 5, but the present invention is not limited thereto. For example, instead of the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

<Surface Protective Layer>

The surface protective layer 6 is a layer laminated on a first surface (upper surface in Fig. 1) of the transparent resin layer 5 and imparting functions, such as weatherability, scratch resistance, stain resistance and design properties, to the decorative sheet 1.

The surface protective layer 6 can be made of a thermosetting resin or an ionizing radiation-curable resin, and may be formed using, for example, an acrylic-based resin composition.

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents and antifungal agents.

<Uneven Portion>

The uneven portion 7 is formed of recesses provided at a plurality of positions on the transparent resin layer 5 and the surface protective layer 6.

<Primer Layer>

The primer layer 8 is a layer that serves as a primer and improves corrosion resistance and adhesion between the colored substrate layer 2 and the substrate material 9.

The primer layer 8 is laminated on a second surface (lower surface in Fig. 1) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The primer layer 8 may have a thickness, for example, in the range of 1 $\mu$m or greater and 10 $\mu$m of less.

<Specific Gravity of Entire Decorative Sheet>

The specific gravity of the entire decorative sheet 1 may be set preferably in the range of 0.91 or greater and 1.30 or less by adding an inorganic substance to the colored substrate layer 2, more preferably in the range of 0.91 or greater and 1.15 or less, and still more preferably in the range of 0.95 or greater and 1.05 or less. With this configuration, it is possible to form a decorative sheet 1 having concealing properties equivalent to those of a configuration formed of, for example, fossil fuel-derived polypropylene.

The embodiment described above is an example of the present invention, and the present invention is not limited to the embodiment described above. In addition to the above embodiment, various modifications can be made according to the design and the like without departing from the technical idea of the present invention.

(Effects of Present Embodiment)

According to the decorative sheet 1 of the present embodiment, the following effects can be achieved.

(1) Each of the colored substrate layer 2 and the transparent resin layer 5 is a resin layer formed of a resin composition containing biomass-derived polypropylene which is obtained by polymerizing a monomer containing biomass-derived propylene. Further, the colored substrate layer 2 contains an inorganic substance, and the specific gravity of the colored substrate layer 2 is in the range of 0.91 or greater and 1.3 or less.

Accordingly, even with a configuration formed of biomass-derived polypropylene, which is a plant-derived material, a colored substrate layer 2 having concealing properties equivalent to those of a configuration formed of, for example, fossil fuel-derived polypropylene or the like can be formed.

This increases the strength compared to, for example, a configuration formed of polyethylene or the like, making it possible to form a colored substrate layer 2 and a transparent resin layer 5 having high scratch resistance and the like.

As a result, a decorative sheet 1 capable of preventing a decrease in concealing properties can be provided even when it is formed of biomass-derived polypropylene, which is a plant-derived material.

Further, a decorative sheet 1 capable of preventing a decrease in surface hardness can be provided even when it is formed of biomass-derived polypropylene, which is a plant-derived material.

Furthermore, a transparent resin layer 5 having high transparency equivalent to, for example, that of a configuration formed of polyethylene or the like can be formed even when it has a configuration formed of biomass-derived polypropylene, which is a plant-derived material.

(2) The colored substrate layer 2 contains biomass-derived polypropylene in an amount in the range of 5 mass% or greater and 99 mass% or less relative to a total mass of the colored substrate layer 2, and the transparent resin layer 5 contains biomass-derived polypropylene in an amount in the range of 5 mass% or greater and 99 mass% or less relative to a total mass of the transparent resin layer 5.

As a result, a transparent resin layer 5 and a transparent resin layer 2 having improved environmental suitability can be formed.

(3) The colored substrate layer 2 has a thickness in the range of 30 $\mu$m or greater and 100 $\mu$m or less, and the transparent resin layer 5 has a thickness in the range of 10 $\mu$m or greater and 150 $\mu$m or less.

As a result, a transparent resin layer 5 and a transparent resin layer 2 having higher production efficiency can be formed.

(4) The inorganic substance added to the colored substrate layer 2 is one or more of calcium carbonate, titanium oxide, carbon black, silica, chromium, antimony, titanium composites, and oxides thereof.

As a result, a colored substrate layer 2 having further improved concealing properties can be formed.

(5) A specific gravity of the entire decorative sheet 1 is in the range of 0.91 or greater and 1.30 or less.

As a result, it is possible to form a decorative sheet 1 having concealing properties equivalent to those of a configuration formed of fossil fuel-derived polypropylene.

Further, according to the decorative material 10 of the present embodiment, the following effects can be achieved.

(6) The decorative material 10 includes the substrate material 9 and the decorative sheet 1 laminated on at least a first surface of the substrate material 9.

As a result, a decorative material 10 capable of preventing a decrease in surface hardness can be provided even when it is formed of biomass-derived polypropylene, which is a plant-derived material.

<Modifications>

(1) In the embodiment, the decorative material 10 has a configuration in which the decorative sheet 1 is laminated on the first surface of the substrate material 9, but the configuration is not limited thereto. That is, the decorative material 10 may have a configuration in which the decorative sheet 1 is laminated not only on the first surface of the substrate material 9 but also on a second surface (lower surface in Fig. 1) of the substrate material 9.

[Examples]

Referring to the present embodiment, decorative materials of Examples 5-1 to 5-11 and decorative materials of Comparative Examples 5-1 to 5-3 will be described below.

(Example 5-1)

After a first surface of a substrate was subjected to a corona discharge treatment, a pattern layer printed with a urethane-based printing ink, a urethane-based adhesive layer, a maleic anhydride-modified polyolefin resin layer (transparent adhesive layer), a transparent resin layer and a surface protective layer mainly composed of an acrylic-based resin composition were laminated in this order on the first surface of the substrate. Further, after a second surface of the substrate was subjected to a corona discharge treatment, a primer layer (thickness: 1 μm to 2 μm) made of polyester urethane resin was formed on the second surface. Thus, a decorative sheet of Example 5-1 (total thickness: 135 μm) was obtained. The biomass degree of the entire decorative sheet was 80%. Further, the specific gravity of the entire decorative sheet was 1.0.

The primer layer-side of the decorative sheet was bonded to an MDF (medium density fiberboard) to obtain a decorative material.

The substrate used in Example 5-1 was a colored substrate layer (thickness: 55 μm) formed of a resin composition containing biomass-derived polypropylene and an inorganic substance. Calcium carbonate and titanium oxide were blended as the inorganic substances so that the specific gravity of the colored substrate layer was 1.0. The colored substrate layer was obtained by calendering the above resin. Further, the biomass-derived polypropylene content in the colored substrate layer was 75 mass% relative to a total mass of the colored substrate layer. The colored substrate layer thus formed had a biomass degree of 75%.

The transparent resin layer used was a transparent resin layer (thickness: 70 μm) formed of a resin composition containing biomass-derived polypropylene and no inorganic substance. The transparent resin layer was obtained by laminating the above resin composition with an extruder. Further, the biomass-derived polypropylene content in the transparent resin layer was 90 mass% relative to a total mass of the transparent resin layer.

(Example 5-2)

A decorative sheet of Example 5-2 was obtained in the same manner as in Example 5-1 except that the biomass-derived polypropylene content in the colored substrate layer was changed to 5 mass% relative to a total mass of the colored substrate layer, and the biomass-derived polypropylene content in the transparent resin layer was changed to 5 mass% relative to a total mass of the transparent resin layer.

(Example 5-3)

A decorative sheet of Example 5-3 was obtained in the same manner as in Example 5-1 except that the biomass-derived polypropylene content in the colored substrate layer was changed to 99 mass% relative to a total mass of the colored substrate layer, and the biomass-derived polypropylene content in the transparent resin layer was changed to 99 mass% relative to a total mass of the transparent resin layer.

(Example 5-4)

A decorative sheet of Example 5-4 was obtained in the same manner as in Example 5-1 except that the thickness of the colored substrate layer was changed to 30 μm and the thickness of the transparent resin layer was changed to 10 μm.

(Example 5-5)

A decorative sheet of Example 5-5 was obtained in the same manner as in Example 5-1 except that the thickness of the colored substrate layer was changed to 100 μm and the thickness of the transparent resin layer was changed to 150 μm.

(Example 5-6)

A decorative sheet of Example 5-6 was obtained in the same manner as in Example 5-1 except that the content of calcium carbonate, which is an inorganic substance, was adjusted so that the specific gravity of the colored substrate layer was 0.91.

(Example 5-7)

A decorative sheet of Example 5-7 was obtained in the same manner as in Example 5-1 except that the content of calcium carbonate, which is an inorganic substance, was adjusted so that the specific gravity of the colored substrate layer was 1.30.

(Example 5-8)

A decorative sheet of Example 5-8 was obtained in the same manner as in Example 5-1 except that the inorganic substances were changed to carbon black and silica.

(Example 5-9)

A decorative sheet of Example 5-9 was obtained in the same manner as in Example 5-1 except that the inorganic substances were changed to chromium and antimony.

(Example 5-10)

A decorative sheet of Example 5-10 was obtained in the same manner as in Example 5-1 except that the specific gravity of the entire decorative sheet was changed to 0.95. The specific gravity of the entire decorative sheet was adjusted by changing the type of biomass-derived polypropylene constituting the transparent resin layer.

(Example 5-11)

A decorative sheet of Example 5-11 was obtained in the same manner as in Example 5-1 except that the specific gravity of the entire decorative sheet was changed to 1.30. The specific gravity of the entire decorative sheet was adjusted by changing the type of biomass-derived polypropylene constituting the transparent resin layer.

(Comparative Example 5-1)

A decorative sheet of Comparative Example 5-1 was obtained in the same manner as in Example 5-1 except that the content of calcium carbonate, which is an inorganic substance, was adjusted so that the specific gravity of the colored substrate layer was 0.90.

(Comparative Example 5-2)

A decorative sheet of Comparative Example 5-2 was obtained in the same manner as in Example 5-1 except that the content of calcium carbonate, which is an inorganic substance, was adjusted so that the specific gravity of the colored substrate layer was 1.50.

(Comparative Example 5-3)

A decorative sheet of Comparative Example 5-3 was obtained in the same manner as in Example 5-1 except that the biomass-derived polypropylene used for forming the transparent resin layer was changed to petroleum-derived polypropylene, and the biomass-derived polypropylene used for forming the colored substrate layer was changed to petroleum-derived polypropylene.

(Performance Evaluation, Evaluation Results)

The decorative sheets of Examples 5-1 to 5-11 and the decorative sheets of Comparative Examples 5-1 to 5-3 were examined for "productivity of colored thermoplastic resin (colored substrate layer)," "printing suitability," "design properties," "concealing properties," "surface strength," "bending processability" and "petroleum dependency." The evaluation methods used were as follows.

<Productivity of Colored Thermoplastic Resin Layer (Colored Substrate Layer)>

The decorative sheets were visually inspected for the degree of defects such as film formability, e.g., surface conditions, presence or absence of fish-eye, and presence or absence of unevenness in thickness. The decorative sheets with productivity comparable to that of the current decorative sheets (colored substrate layers) were rated "excellent," the decorative sheets with productivity inferior to the current productivity but which did not affect production were rated "good," the decorative sheets that were difficult to produce were rated "fair," and the decorative sheets that were impossible to produce were rated "poor."
In this example, "excellent" and "good" were judged as a pass.

<Printing Suitability>

The decorative sheets were visually inspected for the presence or absence of poor inking, and presence or absence of heat wrinkles during drying. The decorative sheets with printing suitability comparable to that of the current decorative sheets were rated "excellent," the decorative sheets with printing suitability inferior to the current printing suitability but which did not affect production were rated "good," the decorative sheets that were difficult to produce were rated "fair," and the decorative sheets that were impossible to produce were rated "poor."

In this example, "excellent" and "good" were judged as a pass.

<Design Properties>

The decorative sheets in which a pattern of the pattern layer was clearly seen without distortion (the intended pattern can be clearly seen) were rated "good," and the decorative sheets in which part of the pattern layer appeared to be missing were rated "poor."

In this example, "good" was judged as a pass.

<Concealing Properties>

For evaluating the concealing properties of the decorative sheets, color changes of the decorative sheets were visually inspected before and after lamination to the MDF (substrate).

The decorative sheets in which substantially no color change was observed in the printed region were rated "excellent," the decorative sheets in which no significant color change was observed in the printed region were rated "good," the decorative sheets in which a slight color change was observed in the printed region but which did not affect quality were rated "fair," and the decorative sheets in which a significant color change was observed in the printed region were rated "poor."

In this example, "excellent" and "good" were judged as a pass.

<Surface Hardness>

A test was performed according to JIS K 5600-5-4 scratch hardness (pencil method).

A pencil with a load was slid against the decorative sheets of the respective examples and comparative examples, and it was observed whether the surface protective layer was dented (scratched).

The decorative sheets having sufficient scratch resistance were rated "good," and the decorative sheets having poor scratch resistance were rated "poor."

In this example, "good" was judged as a pass. In the table, "good (6B)" means that the surface protective layer was not dented (scratched) at all when tested with 6B.

<Bending Processability>

Decorative sheets bonded to an MDF (that is, decorative materials) were used for evaluation, and those having no problem with V-cut processability (bending processability) (substantially no cracking, whitening, or the like occurred in the surface protective layer at the top of the fold) were rated "good," and those having problems with V-cut processability (cracking, whitening, or the like occurred in the surface protective layer at the top of the fold) were rated "poor." Further, the decorative sheets having sufficient bending processability but requiring improvement were rated "fair."

In this example, "good" was judged as a pass.

<Petroleum Dependency>

The dependence on fossil fuels in producing decorative sheets was relatively rated "high" and "low."

In this example, "low" was judged as a pass.

[Table 6]

| Item | Ex. 5-1 | Ex. 5-2 | Ex. 5-3 | Ex. 5-4 | Ex. 5-5 | Ex. 5-6 | Ex. 5-7 | Ex. 5-8 | Ex. 5-9 | Ex. 5-10 |
|---|---|---|---|---|---|---|---|---|---|---|
| Biomass degree of decorative sheet | 70 | 70 | 70 | 70 | 70 | 70 | 70 | 70 | 70 | 70 |
| Specific gravity of colored thermoplastic resin layer | 1.0 | 1.0 | 1.0 | 1.0 | 1.0 | 0.91 | 1.3 | 1.0 | 1.0 | 0.95 |
| Thickness of colored thermoplastic resin layer ($\mu$m) | 55 | 55 | 55 | 30 | 100 | 55 | 55 | 55 | 55 | 55 |
| Thickness of transparent thermoplastic resin layer ($\mu$m) | 70 | 70 | 70 | 10 | 150 | 70 | 70 | 70 | 70 | 70 |
| Productivity of thermoplastic resin | good | good | good | good | good | excellent | good | good | good | excellent |
| Printing suitability | excellent | excellent | excellent | excellent | excellent | excellent | good | excellent | excellent | excellent |
| Design properties | good | good | good | good | good | good | good | good | good | good |
| Concealing properties | excellent | excellent | excellent | good | excellent | good | excellent | excellent | excellent | good |
| Surface strength | good (6B) | good (6B) | good (6B) | good (6B) | good (6B) | good (6B) | good (6B) | good (6B) | good (6B) | good (6B) |
| Bending processability | good | good | good | good | good | good | good | good | good | good |
| Petroleum dependency | low | low | low | low | low | low | low | low | low | low |

| Item | Ex. 5-11 | Comp. Ex. 5-1 | Comp. Ex. 5-2 | Comp. Ex. 5-3 |
|---|---|---|---|---|
| Biomass degree of decorative sheet | 70 | 70 | 70 | 0 |
| Specific gravity of colored thermoplastic resin layer | 1.3 | 0.9 | 1.5 | 1.0 |
| Thickness of colored thermoplastic resin layer ($\mu$m) | 55 | 55 | 55 | 55 |
| Thickness of transparent thermoplastic resin laver ($\mu$m) | 70 | 70 | 70 | 70 |
| Productivity of thermoplastic resin | good | excellent | poor | good |
| Printing suitability | good | excellent | fair | excellent |
| Design properties | good | good | good | good |
| Concealing properties | excellent | poor | excellent | excellent |
| Surface strength | good (6B) | good (6B) | good (6B) | good (6B) |
| Bending processability | good | good | fair | good |
| Petroleum dependency | low | low | low | high |

As a result of evaluating various performances using the above methods, the decorative sheets of Examples 5-1 to 5-11 exhibited excellent performance for all the evaluation items. On the other hand, the decorative sheets of Comparative Examples 5-1 to 5-3 exhibited poor performance for at least some of the evaluation items.

Further, the invention according to the fifth embodiment can have, for example, the following configurations.

(1) A decorative sheet including: a colored thermoplastic resin layer; an adhesive layer; and a transparent thermoplastic resin layer, which are laminated in this order, wherein each of the colored thermoplastic resin layer and the transparent thermoplastic resin layer is a resin layer formed of a resin composition containing biomass-derived polypropylene which is obtained by polymerizing a monomer containing biomass-derived propylene, the colored thermoplastic resin layer further contains an inorganic substance, and the colored thermoplastic resin layer has a specific gravity in the range of 0.91 or greater and 1.3 or less.

(2) The decorative sheet according to the above (1), wherein the colored thermoplastic resin layer contains the biomass-derived polypropylene in an amount in the range of 5 mass% or greater and 99 mass% or less relative to a total mass of the colored thermoplastic resin layer, and the transparent thermoplastic resin layer contains the biomass-derived polypropylene in an amount in the range of 5 mass% or greater and 99 mass% or less relative to a total mass of the transparent thermoplastic resin layer.

(3) The decorative sheet according to the above (1) or (2), wherein the colored thermoplastic resin layer has a thickness in the range of 30 $\mu$m or greater and 100 $\mu$m or less, and the transparent thermoplastic resin layer has a thickness in the range of 10 $\mu$m or greater and 150 $\mu$m or less.

(4) The decorative sheet according to any one of the above (1) to (3), wherein the inorganic substance is one or more of calcium carbonate, titanium oxide, carbon black, silica, chromium, antimony, titanium composites, and oxides thereof.

(5) The decorative sheet according to any one of the above (1) to (4), wherein a specific gravity of the entire decorative sheet is in the range of 0.91 or greater and 1.30 or less.

(6) A decorative material including: a substrate material; and the decorative sheet according to any one of the above (1) to (5), the decorative sheet being laminated on at least a first surface of the substrate material.

<Sixth Embodiment>

Next, a sixth embodiment of the present invention will be described.

With reference to the drawings, the sixth embodiment of the present technology will be described. In the following description of the drawings, the same or similar parts are denoted by the same or similar reference signs, and repeated description is omitted. The drawings are schematic, and may differ from actual values. The embodiments described below are merely examples of devices and methods for embodying the technical idea of the present technology, and the technical idea of the present technology should not limit the devices and methods to those described in the embodiments described below. Various modifications can be made to the technical idea of the present technology within the technical scope defined by the claims. Also, "left and right" and "upper and lower" directions in the following description are merely a definition for convenience of explanation, and do not restrict the technical idea of the present technology. It goes without saying that, for example, "left and right" and "upper and lower" are switched with each other if the paper sheet is rotated by 90 degrees, and "left" becomes "right" while "right" becomes "left" if the paper sheet is rotated by 180 degrees.

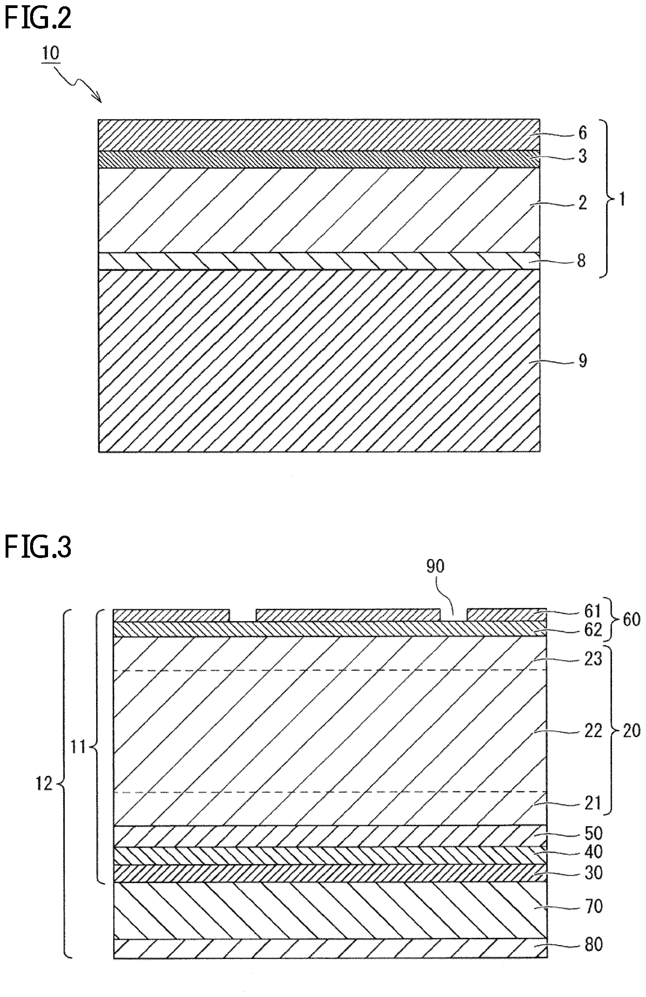

With reference to Fig. 2, a configuration of a decorative sheet 10 will be described.

The decorative material 10 include a decorative sheet 1 and a substrate material 9 as shown in Fig. 2. The detailed configuration of the decorative sheet 1 will be described later.

The substrate material 9 has a board-like shape and is formed using, for example, a wooden board, an inorganic board, a metal plate, or the like, with the decorative sheet 1 laminated on a first surface (upper surface in Fig. 2) of the substrate material 9. That is, the decorative material 10 includes the substrate material 9 and the decorative sheet 1 laminated on the first surface of the substrate material 9. The present invention is not limited to the above, and the decorative material 10 may have a configuration in which the decorative sheet 1 is laminated not only on the first surface of the substrate material 9 but also on a second surface (lower surface in Fig. 2) of the substrate material 9.

(Configuration of Decorative Sheet)

The decorative sheet 1 includes at least a thermoplastic resin layer. For example, as shown in Fig. 2, the decorative sheet 1 may include a colored substrate layer 2, which is a thermoplastic resin layer that is colored (colored thermoplastic resin layer), a pattern layer 3, a surface protective layer 6 and a primer layer 8. As an example, in the decorative sheet 1 shown in Fig. 2, the primer layer 8, the colored substrate layer 2, the pattern layer 3 and the surface protective layer 6 are laminated in this order.

More specifically, in the decorative sheet 1, the pattern layer 3 and the surface protective layer 6 are laminated in this order on a first surface of the colored substrate layer 2. Further, the primer layer 8 is laminated on a second surface (lower surface in Fig. 2) of the colored substrate layer 2.

<Colored Substrate Layer>

The colored substrate layer 2, which is an example of the thermoplastic resin layer, is a resin layer formed of a thermoplastic resin, and is a colored resin layer formed of a resin composition containing biomass-derived (plant-derived) polypropylene.

The colored substrate layer 2 may be a transparent resin layer formed of a resin composition containing biomass-derived polypropylene. Since the thermoplastic resin layer (in this example, the colored substrate layer 2) is formed using the resin composition, the decorative sheet 1 can prevent a decrease in surface hardness even when it is formed using biomass-derived polypropylene, which is a plant-derived material.

In recent years, against the background of environmental issues, the use of biomass-derived resin materials as decorative sheet materials has been attracting attention. However, there are only a few types of biomass-derived plastics that can maintain physical properties suitable for use as decorative sheets, and the practical use of decorative sheets using a biomass-derived resin material has not yet been fully achieved. Since the decorative sheet 1 according to the present embodiment uses the thermoplastic resin layer (for example, colored substrate layer 2) formed of a resin composition containing biomass-derived polypropylene, which is a renewable resource, it can save petroleum resources and reduce carbon dioxide emission. This contributes to an environmentally friendly and sustainable society.

The composition of the colored substrate layer 2 will be specifically described below.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.

The raw material monomer for polypropylene does not necessarily have to contain 100 mass% of biomass-derived propylene.

The raw material monomer for biomass-derived polypropylene may further contain fossil fuel-derived propylene.

By using biomass-derived propylene as the raw material, it is theoretically possible to produce polypropylene formed of 100% biomass-derived components.

The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio}\,(\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.

In the present embodiment, the biomass degree of the biomass-derived polypropylene or the decorative sheet containing the biomass-derived polypropylene may not necessarily have to be 100.

In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene, such as homopolypropylene, random polypropylene or block polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition contains the above-mentioned polypropylene as a main component. The resin composition may contain biomass-derived propylene in an amount in the range of 5 mass% or greater, preferably 5 mass% or greater and less than 99 mass%, and more preferably 25 mass% or greater and 75 mass% or less, relative to the entire resin composition. The concentration of the biomass-derived propylene in the resin composition within the range of 5 mass% or greater and less than 99 mass% can reduce the amount of fossil fuels used compared to conventional products, which makes it possible to provide a carbon-neutral decorative sheet.

The above resin composition may contain two or more types of polypropylene having different biomass degrees, as long as the concentration of the biomass-derived propylene in the entire resin composition is within the above ranges.

The resin composition may further contain fossil fuel-derived propylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount in the range of preferably 5 mass% or greater and less than 99 mass%, and more preferably 25 mass% or greater and 75 mass% or less, and contains fossil fuel-derived polypropylene in an amount in the range of preferably 1 mass% or greater and 95 mass% or less, and more preferably 25 mass% or greater and 75 mass% or less. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

The colored substrate layer 2 has a specific gravity in the range of 0.9 or greater and 1.3 or less. Specifically, an inorganic substance is added so that the specific gravity of the colored substrate layer 2 is in the range of 0.9 or greater and 1.3 or less. The addition of the inorganic substance so that the specific gravity of the colored substrate layer 2 is in the range of 0.9 or greater and 1.3 or less can improve the concealing properties of the colored substrate layer 2.

(Inorganic Substance)

The inorganic substance can be, for example, one or more of calcium carbonate, titanium oxide, carbon black, silica, chromium, antimony, titanium composites, and other oxides.

As described above, the colored substrate layer 2 contains biomass-derived propylene in an amount in the range of 5 mass% or greater, preferably 5 mass% or greater and less than 99 mass%, and more preferably 25 mass% or greater and 75 mass% or less, relative to the entire colored substrate layer 2. The concentration of the biomass-derived propylene in the colored substrate layer 2 of 5 mass% or greater can reduce the amount of fossil fuels used compared to conventional products, which makes it possible to provide a carbon-neutral decorative sheet.

Further, an inorganic substance is added so that the specific gravity of the colored substrate layer 2 is in the range of 0.9 or greater and 1.3 or less. This can improve the concealing properties of the colored substrate layer 2.

The colored substrate layer 2 may have a biomass degree in the range of 10% or greater and 90% or less relative to the entire colored substrate layer 2. Further, the colored substrate layer 2 may contain fossil fuel-derived polypropylene in addition to the biomass-derived polypropylene.

The method of producing the colored substrate layer 2 is not particularly limited, and any known method can be used. In the present embodiment, calendering is preferred.

If necessary, the colored substrate layer 2 may contain, for example, one or more additives selected from various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The colored substrate layer 2 may have a thickness preferably in the range of 50 μm or greater and 300 μm or less, more preferably 51 μm or greater and 200 μm or less, and still more preferably 55 μm or greater and 100 μm or less. The reason for this is that the thickness of the colored substrate layer 2 of 50 μm or greater can absorb unevenness and steps in the underlying substrate materials or the like, improving the installation finish of the decorative sheet 1. Further, the thickness of the colored substrate layer 2 of 300 μm or less can prevent an unnecessary increase in thickness of the colored substrate layer 2, reducing the production cost of the decorative sheet 1.

In the present embodiment, biomass-derived polypropylene has been described as the biomass-derived resin constituting the colored substrate layer 2, but the present invention is not limited thereto. For example, in addition to the biomass-derived polypropylene described above, biomass-derived polypropylene, biomass-derived polybutylene, or the like may be used. That is, in the present embodiment, a wide range of biomass-derived polyolefins can be used as the biomass-derived resin constituting the colored substrate layer 2.

<Pattern Layer>

The pattern layer 3 is a layer laminated on a first surface (upper surface in Fig. 2) of the colored substrate layer 2 and adding a pattern for imparting design properties. Further, the pattern layer 3 may be omitted if it can be substituted by coloring due to the colored substrate layer 2. That is, the pattern layer 3 may not necessarily be laminated on the thermoplastic resin layer.

The pattern layer 3 may be formed using printing ink, paint, or the like. The printing ink, paint, or the like for forming the pattern layer 3 may be obtained by, for example, dissolving or dispersing a colorant such as dye or pigment together with a suitable binder resin in a suitable dilution solvent.

The printing ink, paint, or the like for forming the pattern layer 3 may be painted by, for example, various printing methods such as gravure coating and offset printing or various coating methods such as gravure coating and roll coating.

Examples of the binder resin include, but are not limited to, urethane-based resins, acrylic-based resins, vinyl chloride acetate-based resins, polyimide-based resins, nitrocellulose, and mixtures thereof.

Examples of the pattern include any patterns such as wood grain patterns, stone grain patterns, fabric grain patterns, abstract patterns, geometric patterns, characters, symbols, plain solid colors, and combinations thereof. Also, in order to improve concealing properties of the decorative sheet 1, a concealing layer may be disposed between the pattern layer 3 and the colored substrate layer 2. The concealing layer may be formed using, for example, opaque printing ink or paint containing a large amount of opaque pigment such as titanium dioxide or iron oxide.

The pattern layer 3 may have a thickness preferably in the range of 1 μm or greater and 10 μm of less. The thickness of the pattern layer 3 of 1 μm or greater can ensure clear printing. Further, the thickness of the pattern layer 3 of 10 μm or less can improve printing workability during production of the decorative sheet 1, and thus reduce the production cost.

Also, in order to impart various functions, the pattern layer 3 may contain functional additives such as extender pigments, plasticizers, dispersants, surfactants, tackifiers, adhesion aids, desiccants, curing agents, curing accelerators and curing retardants.

Further, for example, in order to conceal the color or pattern of a base material to which the decorative sheet 1 is bonded, the pattern layer 3 may have a configuration including a color substrate layer painted with a solid color and a design pattern layer which adds a pattern for imparting design properties.

<Surface Protective Layer>

The surface protective layer 6 is a layer laminated on the colored substrate layer 2 and the pattern layer 3 (the pattern layer 3 may be absent (omitted)) and imparting functions, such as weatherability, scratch resistance, stain resistance and design properties, to the decorative sheet 1.

The surface protective layer 6 is a resin layer formed of a resin composition containing a biomass-derived material, and may be formed of, for example, a urethane (meth)acrylate, which is a resin composition containing at least a polyol, an isocyanate compound and a hydroxy (meth)acrylate. In the surface protective layer 6, at least one of the polyol, the isocyanate compound and the hydroxy (meth)acrylate constituting the urethane (meth)acrylate contains a biomass-derived component. That is, the surface protective layer 6 contains a biomass-derived component. At least one of the polyol, the isocyanate compound and the hydroxy (meth)acrylate may contain a biomass-derived component or may not contain a biomass-derived component. In the following description, the urethane (meth)acrylate containing a biomass-derived component is also referred to as a bio-urethane (meth)acrylate.

The urethane (meth)acrylate may be obtained by, for example, reacting a polyol and an isocyanate with a hydroxy (meth)acrylate. In the bio-urethane (meth)acrylate, the polyol can be a plant-derived polyol or the isocyanate can be a plant-derived isocyanate, or both the polyol and isocyanate can be plant-derived.

The polyol can be a polyester polyol which is a reaction product of a polyfunctional alcohol and a polyfunctional carboxylic acid, a polyether polyol which is a reaction product of a polyfunctional alcohol and a polyfunctional isocyanate, or a polycarbonate polyol which is a reaction product of a polyfunctional alcohol and a carbonate. Each polyol will be described below.

<Polyester Polyol>

When the polyester polyol contains a biomass-derived component, at least one of the polyfunctional alcohol and the polyfunctional carboxylic acid contains a biomass-derived component. Examples of the polyester polyol containing a biomass-derived component include the following.

· Reaction products of biomass-derived polyfunctional alcohols and biomass-derived polyfunctional carboxylic acids
· Reaction products of fossil fuel-derived polyfunctional alcohols and biomass-derived polyfunctional carboxylic acids
· Reaction products of biomass-derived polyfunctional alcohols and fossil fuel-derived polyfunctional carboxylic acids

Examples of the biomass-derived polyfunctional alcohols include aliphatic polyfunctional alcohols obtained from plant raw materials such as corn, sugar cane, cassava and sago palm. Examples of the biomass-derived aliphatic polyfunctional alcohols include polypropylene glycol (PPG), neopentyl glycol (NPG), ethylene glycol (EG), diethylene glycol (DEG), butylene glycol (BG) and hexamethylene glycol obtained from plant raw materials by the methods described below. These may be used singly or in combination.

The biomass-derived polypropylene glycol is produced from glycerol via 3-hydroxypropionic aldehyde (HPA) by a fermentation process in which plant raw materials are decomposed to produce glucose. The polypropylene glycol produced by a bioprocess such as the fermentation method described above is preferred from the viewpoint of safety since it yields useful by-products such as lactic acids compared to polypropylene glycol produced by an EO process, and is also preferred in terms of reducing the production cost.

The biomass-derived butylene glycol can be produced by producing glycol from plant raw materials and fermenting it to produce succinic acid, and hydrogenating the resulting succinic acid.

The biomass-derived ethylene glycol can be produced, for example, from bioethanol obtained by a conventional method, via ethylene.

Examples of the fossil fuel-derived polyfunctional alcohols include compounds containing two or more, preferably two to eight hydroxyl groups per molecule. The fossil fuel-derived polyfunctional alcohols are not particularly limited and any conventionally known compounds can be used, and specific examples thereof include polypropylene glycol (PPG), neopentyl glycol (NPG), ethylene glycol (EG), diethylene glycol (DEG), butylene glycol (BG), hexamethylene glycol, as well as triethylene glycol, dipropylene glycol, 1,4-cyclohexane dimethanol, trimethylolpropane, glycerin, 1,9-nonanediol, 3-methyl-1,5-pentanediol, polyether polyol, polycarbonate polyol, polyolefin polyol and acrylic polyol. These may be used singly or in combination of two or more.

Examples of the biomass-derived polyfunctional carboxylic acids include aliphatic polyfunctional carboxylic acids obtained from plant raw materials such as renewable plant-derived oils, such as soybean oil, linseed oil, tung oil, coconut oil, palm oil and castor oil, and reused oils obtained by recycling waste edible oils mainly composed of these oils. Examples of the biomass-derived aliphatic polyfunctional carboxylic acids include sebacic acid, succinic acid, phthalic acid, adipic acid, glutaric acid and dimer acid. For example, the sebacic acid is produced by alkaline pyrolysis of ricinoleic acid obtained from castor oil, with heptyl alcohol as a by-product. In the present invention, it is particularly preferred to use biomass-derived succinic acid or biomass-derived sebacic acid. These may be used singly or in combination of two or more.

Examples of the fossil fuel-derived polyfunctional carboxylic acids include aliphatic polyfunctional carboxylic acids and aromatic polyfunctional carboxylic acids. The fossil fuel-derived aliphatic polyfunctional carboxylic acids are not particularly limited and any conventionally known compounds can be used, and examples thereof include adipic acid, dodecanedioic acid, tetrahydrophthalic anhydride, hexahydrophthalic anhydride, maleic anhydride, itaconic anhydride, sebacic acid, succinic acid, glutaric acid, dimer acid, and ester compounds thereof. Further, the fossil fuel-derived aromatic polyfunctional carboxylic acids are not particularly limited and any conventionally known compounds can be used, and examples thereof include isophthalic acid, terephthalic acid, naphthalenedicarboxylic acid, phthalic anhydride, trimellitic acid, pyromellitic acid, and ester compounds thereof. These may be used singly or in combination of two or more.

<Polyether Polyol>

When the polyether polyol contains a biomass-derived component, at least one of the polyfunctional alcohol and the polyfunctional isocyanate contains a biomass-derived component. Examples of the polyether polyol containing a biomass-derived component include the following.

- · Reaction products of biomass-derived polyfunctional alcohols and biomass-derived polyfunctional isocyanates
- · Reaction products of fossil fuel-derived polyfunctional alcohols and biomass-derived polyfunctional isocyanates
- · Reaction products of biomass-derived polyfunctional alcohols and fossil fuel-derived polyfunctional isocyanates

Examples of the biomass-derived polyfunctional alcohols and fossil fuel-derived polyfunctional alcohols include those described above in relation to the polyester polyol.

The biomass-derived polyfunctional isocyanates can be obtained by acid-amidating plant-derived dicarboxylic acids, reducing them to convert to terminal amino groups, and reacting them with phosgene to convert the amino groups to isocyanate groups. Examples of the biomass-derived polyfunctional isocyanates include biomass-derived diisocyanates. Examples of the biomass-derived diisocyanates include dimer acid diisocyanate (DDI), octamethylene diisocyanate and decamethylene diisocyanate. Further, the plant-derived diisocyanates can also be obtained by using plant-derived amino acids as raw materials and converting the amino groups to isocyanate groups. For example, lysine diisocyanate (LDI) can be obtained by methyl-esterifying the carboxyl groups of lysine, and then converting the amino groups to isocyanate groups. Further, 1,5-pentamethylene diisocyanate can be obtained by decarboxylating the carboxyl groups of lysing, and then converting the amino groups to isocyanate groups.

Other synthesis methods of 1,5-pentamethylene diisocyanate include phosgenation processes and carbamate processes. More specifically, a phosgenation process is a method for synthesizing 1,5-pentamethylene diisocyanate by reacting 1,5-pentamethylene diamine or its salt directly with phosgene, or by suspending pentamethylene diamine hydrochloride in an inert solvent and reacting it with phosgene. Further, a carbamate process is a method for synthesizing 1,5-pentamethylene diisocyanate by carbamating 1,5-pentamethylene diamine or its salt to produce pentamethylene dicarbamate (PDC), which is then pyrolyzed. Examples of the polyisocyanates suitably used in the present invention include 1,5-pentamethylene diisocyanate polyisocyanates manufactured by Mitsui Chemicals, Inc.

The fossil fuel-derived polyfunctional isocyanates are not particularly limited and any conventionally known compounds can be used, and examples thereof include aromatic diisocyanates such as toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), durylene diisocyanate, tolidine diisocyanate, xylylene diisocyanate (XDI), 1,5-naphthalene diisocyanate, benzidine diisocyanate, o-nitrobenzidine diisocyanate and 4,4'-diisocyanate dibenzyl. Examples further include aliphatic diisocyanates such as methylene diisocyanate, 1,4-tetramethylene diisocyanate, 1,6-hexamethylene diisocyanate and 1,10-decamethylene diisocyanate; and alicyclic diisocyanates such as 1,4-cyclohexylene diisocyanate, 4,4-methylenebis(cyclohexyl isocyanate), 1,5-tetrahydronaphthalene diisocyanate, isophorone diisocyanate, hydrogenated MDI and hydrogenated XDI. These may be used singly or in combination of two or more.

<Polycarbonate Polyol>

When the polycarbonate polyol contains a biomass-derived component, the polycarbonate polyol can be a reaction product of a polyfunctional alcohol containing a biomass-derived component and a fossil fuel-derived carbonate. Alternatively, the polycarbonate polyol can be a reaction product of a polyfunctional alcohol containing a fossil fuel-derived component and a carbonate containing a biomass-derived component. Examples of the carbonates include dimethyl carbonate, dipropyl carbonate, diethyl carbonate, diethylene carbonate, dibutyl carbonate, ethylene carbonate and diphenyl carbonate. These can be used singly or in a combination of two or more.

Examples of the biomass-derived polyfunctional alcohols include those described above in relation to the polyester polyol.

<Isocyanate Compound>

Next, the isocyanate compound will be described. Examples of the isocyanate compound containing a biomass-derived component can be biomass-derived polyfunctional isocyanates described above in relation to the polyether polyol

<Hydroxy (Meth)acrylate>

Next, the hydroxy (meth)acrylate will be described. Examples of the hydroxy (meth)acrylate include hydroxy (meth)acrylates having one (meth)acryloyl group, such as hydroxyethyl (meth)acrylate, hydroxypropyl (meth)acrylate, hydroxybutyl (meth)acrylate and 2-hydroxy-3-phenoxypropyl (meth)acrylate; hydroxy (meth)acrylates having two or more (meth)acryloyl groups, such as glycerin di(meth)acrylate, pentaerythritol tri(meth)acrylate, ditrimethylolpropane tri(meth) acrylate, dipentaerythritol penta(meth)acrylate and sorbitol penta(meth)acrylate. These may be used singly or in combination of two or more.

Furthermore, the surface protective layer 6 may contain nitrocellulose in addition to the above-mentioned bio-urethane (meth)acrylate. That is, the surface protective layer 6 may be formed of the above-mentioned bio-urethane (meth)acrylate, or may formed by adding nitrocellulose to the bio-urethane (meth)acrylate.

<Nitrocellulose>

Nitrocellulose is a nitro-substituted cellulose resin in which some of the hydroxyl groups of the cellulose backbone are nitrated. The cellulose backbone of nitrocellulose resin is a biomass material. As the nitrocellulose, general nitrocellulose can be used without any problems, and in particular, it is preferred to use nitrocellulose substituted with an average of 1.3 to 2.7 nitro groups per glucose unit constituting the cellulose backbone.

Nitrocellulose is classified into L type and H type according to the molecular weight. From the viewpoint of solubility in organic solvents, the L type is preferably used.

The surface protective layer 6 has a biomass degree of preferably 5% or greater, more preferably 5% or greater and 50% or less, and still more preferably 10% or greater and 50% or less. The biomass degree within the above ranges can reduce the amount of fossil fuels used, reducing the environmental impact. The surface protective layer 6 has a dry mass of preferably 0.1 $g/m^2$ or greater and 15 $g/m^2$ or less, more preferably 3 $g/m^2$ or greater and 10 $g/m^2$ or less, and still more preferably 6 $g/m^2$ or greater and 9 $g/m^2$ or less. The surface protective layer 6 may have a thickness of preferably 0.1 $\mu$m or greater and 10 $\mu$m or less, more preferably 3 $\mu$m or greater and 10 $\mu$m or less, and still more preferably 6 $\mu$m or greater and 9 $\mu$m or less.

Regarding "biomass degree," for example, in the case of bio-urethane (meth)acrylate, it can be determined as a value obtained by measuring the biomass-derived carbon content by radiocarbon (C14) measurement as described above.

Further, regarding "biomass degree," for example, in the case of nitrocellulose, in which each glucose unit (formula weight = 172) constituting the cellulose backbone, which is the starting material, contains three hydroxyl groups, one to three of these hydroxyl groups can be nitrated (hydrogen is substituted with a nitro group (non-biomass material, formula weight = 46). If the original cellulose backbone consists of 100 mass% biomass material, and the number of substituted nitro groups per glucose unit averages n, the proportion (mass%) of the biomass material in the total nitrocellulose molecule can be calculated by (172-n) $\times$ 100 / (172-n + 46n).

The proportion of the biomass material in the total nitrocellulose molecule is approximately 78.8 mass% when each glucose unit constituting the cellulose backbone is substituted with an average of one nitro group, approximately 64.9 mass% when substituted with two nitro groups , and approximately 55.0 mass% when substituted with three nitro groups (values calculated using the above formula).

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

In addition, if necessary, the surface protective layer 6 may further contain functional additives such as antibacterial agents and antifungal agents.

In the present embodiment, the surface protective layer 6 is formed by applying a thermosetting resin or photocurable resin containing the bio-urethane (meth)acrylate described above by various printing methods such as gravure printing

<Primer Layer>

The primer layer 8 is a layer that serves as a primer and improves corrosion resistance and adhesion between the thermoplastic resin layer (in this example, colored substrate layer 2) and the substrate material 9.

The primer layer 8 is laminated on a second surface (lower surface in Fig. 2) of the colored substrate layer 2.

Further, the primer layer 8 may be formed using, for example, a polyester-based resin, an organic additive, a pigment, or the like.

The primer layer 8 may contain an anti-corrosive pigment in order to improve corrosion resistance.

The decorative sheet 1 may be bonded to the substrate material 9 by applying an adhesive to a primer layer 8-side of the decorative sheet 1. The adhesive used for bonding the substrate and the decorative sheet is not included in the present invention, so general materials such as an adhesive BA-10L manufactured by Eva Japan Coating Resin Corporation and a curing agent BA-11B manufactured by Japan Coating Resin Corporation can be used. These adhesives may be used in combination.

The primer layer 8 may have a thickness, for example, in the range of 1 $\mu$m or greater and 10 $\mu$m of less.

Further, the primer layer 8 may be omitted from the decorative sheet 1. For example, if the substrate material 9 includes a primer layer or the thermoplastic resin layer (for example, colored substrate layer 2) has a function as a primer layer, the primer layer 8 can be omitted.

<Specific Gravity of Entire Decorative Sheet>

A specific gravity of the entire decorative sheet 1 is preferably in the range of 0.91 or greater and 1.5 or less. More preferably, the specific gravity is in the range of 0.99 or greater and 1.4 or less. With this configuration, it is possible to form a decorative sheet 1 having concealing properties equivalent to those of a configuration formed of, for example, fossil fuel-derived polyethylene or the like.

<Total Thickness of Decorative Sheet>

A thickness of the entire decorative sheet 1 is preferably in the range of 51 $\mu$m or greater and 400 $\mu$m or less. More preferably, the thickness is in the range of 55 $\mu$m or greater and 200 $\mu$m or less. With this configuration, it is possible to form a decorative sheet 1 having concealing properties equivalent to those of a configuration formed of, for example, fossil fuel-derived polypropylene or the like.

The embodiment described above is an example of the present invention, and the present invention is not limited to the embodiment described above. In addition to the above embodiment, various modifications can be made according to the design and the like without departing from the technical idea of the present invention.

<Modifications>

In the above embodiment, the colored thermoplastic resin layer (colored substrate layer 2) is described as an example of the thermoplastic resin layer included in the decorative sheet 1, but the present invention is not limited thereto. Although not shown in the figure, the decorative sheet 1 may include a colorless transparent thermoplastic resin layer (transparent thermoplastic resin layer) as the thermoplastic resin layer. The transparent thermoplastic resin layer may have the same configuration as the colored substrate layer 2 except that it is not colored.

That is, the decorative sheet 1 includes at least a thermoplastic resin layer, and the thermoplastic resin layer may be a resin layer formed of a resin composition containing biomass-derived polypropylene which is obtained by polymerizing a monomer containing biomass-derived propylene, and may be colored (colored substrate layer 2) or colorless and transparent.

Further, the transparent thermoplastic resin layer may have a specific gravity in the range of 0.9 or greater and 1.3 or less as with the colored substrate layer 2. When the thermoplastic resin layer is a transparent thermoplastic resin layer, glass beads may be added as an example of the inorganic substance. This makes it possible to maintain transparency and have the specific gravity within the above range, which improves non-combustibility.

Further, when the thermoplastic resin layer is colorless and transparent (transparent thermoplastic resin layer), the pattern layer 3 may be laminated on the thermoplastic resin layer as with the case where the thermoplastic resin layer is colored (colored substrate layer 2). That is, the thermoplastic resin layer may be colorless and transparent, and the pattern layer 3 may be laminated thereon. This allows the pattern layer 3 to improve the design while utilizing the design of the underlying substrate material 9. In this case, in the decorative material 10, a phase difference may occur between the substrate material 9 and the pattern layer 3 laminated on the transparent thermoplastic resin layer in the decorative sheet 1. Due to the phase difference occurring in the decorative material 10 between the pattern layer 3 and the substrate material 9 that is seen through the transparent thermoplastic resin layer, a three-dimensional visual effect is produced to further improve the design of the decorative material 10.

In the above embodiment, the pattern layer 3 is described as being able to be substituted by coloring due to the colored substrate layer 2, but the pattern layer 3 may not necessarily be laminated even when the thermoplastic resin layer is colorless and transparent. This allows the underlying substrate material 9 to be further utilized.

That is, the pattern layer 3 may not necessarily be laminated on the thermoplastic resin layer (colored substrate layer 2, transparent thermoplastic resin layer) in the decorative sheet 1.

Further, in the decorative sheet 1, the thermoplastic resin layer (colored substrate layer 2, transparent thermoplastic resin layer) may have an uneven portion (not shown). The uneven portion may be formed on a first surface (upper surface in Fig. 2) of the thermoplastic resin layer, that is, a surface of the thermoplastic resin layer facing the surface protective layer 6. That is, the surface protective layer 6 may be provided on the upper side of the uneven portion of the thermoplastic resin layer. Furthermore, the uneven portion may also be matched with the pattern of the pattern layer 3. The uneven portion can be formed in a shape suitable for the desired design and performance using, for example, an embossing plate.

Further, in the decorative sheet 1, the surface protective layer 6 may have an uneven portion. The uneven portion may be provided on one or both of the thermoplastic resin layer and the surface protective layer 6.

Alternatively, an uneven portion may be provided on the entire decorative sheet 1. For example, during production of the decorative sheet 1, embossing may be applied onto the upper side of the surface protective layer 6 to form an uneven portion on the transparent thermoplastic resin layer, the pattern layer 3 and the surface protective layer 6. Alternatively, an uneven portion may be formed on the pattern layer 3 and the surface protective layer 6. Alternatively, an uneven portion may be formed on the pattern layer 3, and the surface protective layer 6 may be laminated on the pattern layer 3 having the uneven portion.

(Effects of Present Embodiment)

According to the decorative sheet 1 of the present embodiment and modifications described above, the following effects can be achieved.

(1) The decorative sheet 1 includes at least a thermoplastic resin layer, wherein the thermoplastic resin layer is a resin layer formed of a resin composition containing biomass-derived polypropylene which is obtained by polymerizing a monomer containing biomass-derived propylene, the thermoplastic resin layer being a colored substrate layer 2 that is colored or a transparent thermoplastic resin layer that is colorless and transparent.

Accordingly, it is possible to obtain a decorative sheet capable of preventing a decrease in surface hardness even when formed using a plant-derived material.

(2) The decorative sheet 1 further includes the surface protective layer 6, wherein the thermoplastic resin layer (colored substrate layer 2, transparent thermoplastic resin layer) is provided with an uneven portion on a first surface thereof, and the surface protective layer 6 is a resin layer laminated on the first surface of the thermoplastic resin layer and containing a biomass-derived component.

Accordingly, it is possible to obtain a decorative sheet capable of further reliably preventing a decrease in surface hardness even when formed using a plant-derived material, and it is also possible to obtain an environmentally friendly decorative sheet.

(3) In the decorative sheet 1, the thermoplastic resin layer (colored substrate layer 2, transparent thermoplastic resin layer) contains biomass-derived polypropylene in an amount in the range of 5 mass% or greater and less than 99 mass% relative to a total mass of the thermoplastic resin layer.

Accordingly, it is possible to obtain a decorative sheet capable of preventing a decrease in surface hardness even when formed using a plant-derived material, and it is also possible to reduce the amount of fossil fuels used compared to conventional products, which makes it possible to provide a carbon-neutral decorative sheet.

(4) In the decorative sheet 1, the thermoplastic resin layer has a thickness in the range of 50 $\mu$m or greater and 300 $\mu$m or less and a specific gravity in the range of 0.9 or greater and 1.3 or less.

The thickness of the thermoplastic resin layer within the above ranges can improve the installation finish and reduce the production cost. Further, the specific gravity of the thermoplastic resin layer within the above ranges can provide a decorative sheet with improved concealing properties when the thermoplastic resin layer is colored (colored substrate layer 2), and provide a decorative sheet with improved non-combustibility when the thermoplastic resin layer is colorless and transparent (transparent thermoplastic resin layer).

(5) In the decorative sheet 1, the pattern layer 3 may not necessarily be laminated on the thermoplastic resin layer.

Accordingly, when the decorative sheet 1 is processed into the decorative material 10, it is possible to utilize the design of the underlying substrate material 9.

(6) In the decorative sheet 1, the pattern layer 3 is laminated on the thermoplastic resin layer, and the thermoplastic resin layer may be colorless and transparent.

Accordingly, when the decorative sheet 1 is processed into the decorative material 10, it is possible to further utilize the design of the underlying substrate material 9.

(7) The decorative material 10 includes the substrate material 9 and the decorative sheet 1 laminated on at least a first surface of the substrate material 9.

Accordingly, it is possible to obtain a decorative material capable of preventing a decrease in surface hardness even when formed using a plant-derived material.

(8) The decorative material 10 includes the substrate material 9 and the decorative sheet 1 laminated on at least a first surface of the substrate material 9, and in the decorative sheet 1, the pattern layer 3 is laminated on the thermoplastic resin layer, and the thermoplastic resin layer may be colorless and transparent, and a phase difference may occur between the substrate material 9 and the pattern layer 3.

Accordingly, it is possible to obtain a decorative material capable of preventing a decrease in surface hardness even when formed using a plant-derived material, and it is also possible to produce a three-dimensional visual effect to thereby obtain a decorative material with improved design.

[Examples]

Referring to the present embodiment, a decorative material of Example 6-1 and decorative materials of Comparative Examples 6-1 to 6-3 will be described below. It should be noted that the present invention is not limited to the following Example 6-1.

(Example 6-1)

After a first surface of a substrate layer (thermoplastic resin layer) was subjected to a corona discharge treatment, a pattern layer of a wood grain pattern printed with a urethane-based printing ink was provided on the first surface of the substrate layer. Further, after a second surface of the substrate layer was subjected to a corona discharge treatment, a primer layer (thickness: 1 $\mu$m to 2 $\mu$m) made of polyester urethane resin was formed on the second surface for enhancing adhesion between the substrate layer and a substrate for a decorative material. Then, a surface protective layer was laminated on the pattern layer for protecting the surface. Thus, a decorative sheet of Example 6-1 (total thickness: 85 $\mu$m) was obtained. The primer layer-side of the decorative sheet was bonded to an MDF (medium density fiberboard) using an adhesive BA-10L manufactured by Eva Japan Coating Resin Corporation and a curing agent BA-11B manufactured by Japan Coating Resin Corporation to obtain a decorative material.

The substrate layer used in Example 6-1 was a colored substrate layer (thickness: 0.07 mm (70 $\mu$m), mass 69.3 g/m$^2$) formed of a resin composition containing biomass-derived polypropylene, titanium oxide as an inorganic substance, and an inorganic pigment. The titanium oxide as the inorganic substance was blended so that the specific gravity of the colored substrate layer was 0.99. The colored substrate layer was obtained by laminating the above resin with an extruder. The colored substrate layer thus formed had a biomass degree of 88.5%.

Further, the surface protective layer used in Example 6-1 was a resin layer formed by applying a top coat resin containing a resin compound containing at least a biomass-derived polyol, an isocyanate compound and a hydroxy (meth) acrylate in an amount of 5 mass% or greater, and drying and curing the applied resin.

(Comparative Example 6-1)

A decorative material of Comparative Example 6-1 was obtained in the same manner as in Example 6-1 except that the material of the colored substrate layer as the thermoplastic resin layer was changed to petroleum-derived polypropylene.

(Comparative Example 6-2)

A decorative material of Comparative Example 6-2 was obtained in the same manner as in Example 6-1 except that the material of the colored substrate layer as the thermoplastic resin layer and the material of the surface protective layer were changed to a resin compound containing at least a petroleum-derived polyol, an isocyanate compound and a hydroxy (meth)acrylate.

(Comparative Example 6-3)

A decorative material of Comparative Example 6-3 was obtained in the same manner as in Example 6-1 except that the material of the colored substrate layer as the thermoplastic resin layer was changed to petroleum-derived polyethylene.

(Performance Evaluation, Evaluation Results)

The decorative sheet of Example 6-1 and the decorative sheets of Comparative Examples 6-1 to 6-3 were examined for "design properties," "surface hardness," "productivity of colored thermoplastic resin layer (colored substrate layer)," "post-processability" and "petroleum dependency." The evaluation methods used were as follows.

<Design Properties>

In the examples and comparative examples, the decorative sheets in which a pattern of the pattern layer was clearly seen without distortion (the intended pattern can be clearly seen) were rated "good," the decorative sheets in which a pattern appeared to be slightly distorted were rated "fair," and the decorative sheets in which part of the pattern layer appeared to be missing were rated "poor."
In this example, "good" was judged as a pass.

<Surface Hardness>

A test was performed according to JIS K 5600-5-4 scratch hardness (pencil method).
A pencil with a load was slid against the decorative sheets of the respective examples and comparative examples, and it was observed whether the surface protective layer was dented (scratched).
The decorative sheets having sufficient scratch resistance were rated "good," the decorative sheets having slightly poor scratch resistance were rated "fair," and the decorative sheets having poor scratch resistance were rated "poor."
In this example, "good" was judged as a pass. In the table, "good (6B)" means that the surface protective layer was not dented (scratched) when tested with 6B. Further, "fair (7B)" means that the surface protective layer was slightly scratched when tested with 7B. Furthermore, "poor" means that the surface protective layer was scratched when tested with a pencil with a hardness less than 7B.

<Productivity: Extrusion Suitability>

The decorative sheets having no problem during extrusion molding of the substrate layer on the production line (successfully molded) were rated "good," the decorative sheets having some problems during extrusion molding (possibly defective) were rated "fair," and the decorative sheets having problems in the majority of extrusion molding (highly likely to be defective) were rated "poor."
In this example, "good" was judged as a pass. Further, if the evaluation was "fair," there is no problem in use.

<Post-Processability: Bending Processability>

Decorative sheets bonded to an MDF (that is, decorative materials) were used for evaluation, and those having no problem with V-cut processability (bending processability) (substantially no cracking, whitening, or the like occurred in the surface protective layer at the top of the fold) were rated "good," those having substantially no problem with V-cut processability (slight cracking, whitening, or the like occurred in the surface protective layer at the top of the fold) were rated "fair," and those having problems with V-cut processability (significant cracking, whitening, or the like occurred in the surface protective layer at the top of the fold) were rated "poor."
In this example, "good" was judged as a pass. Further, if the evaluation was "fair," there is no problem in use.

<Petroleum Dependency>

The dependence on fossil fuels in producing decorative sheets was evaluated.

[Table 7]

| Item | Ex. 6-1 | Comp. Ex. 6-1 | Comp. Ex. 6-2 | Comp. Ex. 6-3 |
|---|---|---|---|---|
| Design properties | good | good | good | good |
| Surface strength (pencil hardness test) | good (6B) | good (6B) | good (6B) | fair (7B) |
| Productivity | good | good | good | good |

(continued)

| Item | Ex. 6-1 | Comp. Ex. 6-1 | Comp. Ex. 6-2 | Comp. Ex. 6-3 |
|---|---|---|---|---|
| Post-processability | good | good | good | good |
| Petroleum dependency | low | high | high | high |

As a result of evaluating various performances using the above methods, the decorative sheet of Example 6-1 exhibited excellent performance for all the evaluation items, including the surface hardness, which was equivalent to or higher than the decorative sheets using conventional fossil fuel-derived materials.

Further, the invention according to the sixth embodiment can have, for example, the following configurations.

(1) A decorative sheet including at least a thermoplastic resin layer, wherein the thermoplastic resin layer is a resin layer formed of a resin composition containing biomass-derived polypropylene which is obtained by polymerizing a monomer containing biomass-derived propylene, the thermoplastic resin layer being colored or colorless transparent.

(2) The decorative sheet according to the above (1), further including a surface protective layer, wherein the thermoplastic resin layer is provided with an uneven portion on a first surface thereof, and the surface protective layer is a resin layer laminated on the first surface of the thermoplastic resin layer and containing a biomass-derived component.

(3) The decorative sheet according to the above (1) or (2), wherein the thermoplastic resin layer contains biomass-derived polypropylene in an amount in the range of 5 mass% or greater and less than 99 mass% relative to a total mass of the thermoplastic resin layer.

(4) The decorative sheet according to any one of the above (1) to (3), wherein the thermoplastic resin layer has a thickness in the range of 50 μm or greater and 300 μm or less and a specific gravity in the range of 0.9 or greater and 1.3 or less.

(5) The decorative sheet according to any one of the above (1) to (4), wherein no pattern layer is laminated on the thermoplastic resin layer.

(6) The decorative sheet according to any one of the above (1) to (4), wherein a pattern layer is laminated on the thermoplastic resin layer, and the thermoplastic resin layer is colorless and transparent.

(7) A decorative material including: a substrate material; and the decorative sheet according to any one of the above (1) to (5), the decorative sheet being laminated on at least a first surface of the substrate material.

(8) A decorative material including: a substrate material; and the decorative sheet according to the above (6), the decorative sheet being laminated on at least a first surface of the substrate material, wherein a phase difference occurs between the substrate material and the pattern layer.

<Seventh Embodiment>

Next, a seventh embodiment of the present invention will be described.

The seventh embodiment can solve the following problems in addition to the above-mentioned problems.

Due to the problem of gases during combustion, decorative sheets using olefin-based resins have recently been proposed as an alternative to polyvinyl chloride decorative sheets, examples of which are disclosed in, for example, JP 2006-110929 A, JP 2015-199313 A and JP 2016-101663 A.

Most conventional decorative sheets have been made of petroleum-derived materials, but in recent years, against the background of environmental issues, there has been a demand to change the materials for decorative sheets from petroleum-derived materials to plant-derived materials. However, when decorative sheets are formed using biomass polyolefins such as biomass polyethylene as a plant-derived material, there is a problem that it is difficult to maintain physical properties suitable for use as decorative sheets.

In view of the above problem, the present invention has been made to provide a decorative sheet and a decorative material capable of maintaining physical properties suitable for use as a decorative sheet even when formed using plant-derived materials.

According to an aspect of the present invention, it is possible to provide a decorative sheet and a decorative material capable of maintaining physical properties suitable for use as a decorative sheet even when formed using plant-derived materials.

With reference to the drawings, a seventh embodiment of the present invention will now be described.

The drawings are schematic, and the relationship between the thickness and the planar dimensions, the ratios of the thicknesses of the layers, and the like are different from the actual ones. The embodiments described below are merely examples of configurations for embodying the technical idea of the present invention, and the technical idea of the present invention should not limit the materials, shapes, structures, and the like of the components to those described below. The

71

technical idea of the present invention can be modified in various manners within the technical scope defined in the claims.

<Configuration>

A decorative sheet 11 according to an embodiment of the present invention is used for, for example, interiors and exteriors of buildings (not shown), and is bonded to surfaces of fittings (interior doors, entrance storages), construction materials (joiners, moldings, skirting board, window frames, door frames), and the like to match the patterns of fittings and construction materials in each house or room. Further, it can also be used for surface materials of home appliances and building materials such as floor materials.

As shown in Fig. 3, the decorative sheet 11 includes the following layers, which are laminated in order from (1).

The following layers (1) to (5) will be described later.

　　　(1) Primer layer 30
　　　(2) Colored layer 40
　　　(3) Printed design layer 50
　　　(4) Transparent base 20
　　　(5) Surface protective layer 60

The layers of the decorative sheet 11 are not limited to the above (1) to (5), and the decorative sheet 11 may include at least a transparent base 20. That is, the decorative sheet 11 may have a configuration in which a printed pattern layer 50 on which a pattern is printed and a colored layer 40 are disposed in this order on a rear side of the transparent base 20, and a surface protective layer 60 is disposed on a front side of the transparent base 20. Alternatively, the decorative sheet 11 may have a configuration in which a printed pattern layer 50, a colored layer 40 and a primer layer 30 are disposed in this order on the rear side of the transparent base 20. The decorative sheet 11 according to the present embodiment having the printed pattern layer 50 on the rear side of the transparent base 20 can be applied to decorative sheets for flooring that require abrasion resistance.

As shown in Fig. 3, for example, (6) a pressure-sensitive adhesive layer 70 and (7) a release paper 80 may be further disposed on the primer layer 30-side of the decorative sheet 11 to provide a decorative adhesive sheet 12, or an embossed portion 90 may be further disposed on the front side of the surface protective layer 60 to match a pattern of the printed pattern layer 50. Further, although not shown, an embossed portion (not shown) may be disposed on the front side of the transparent base 20, that is, on the surface protective layer 60-side of the transparent base 20, to match a pattern of the printed pattern layer 50. Specifically, the embossed portion may be formed on a surface of a transparent skin layer 23, which will be described later, of the transparent base 20 on a side in contact with the surface protective layer 60. The embossed portion may be formed in a shape suitable for the desired design and performance using, for example, an embossing plate.

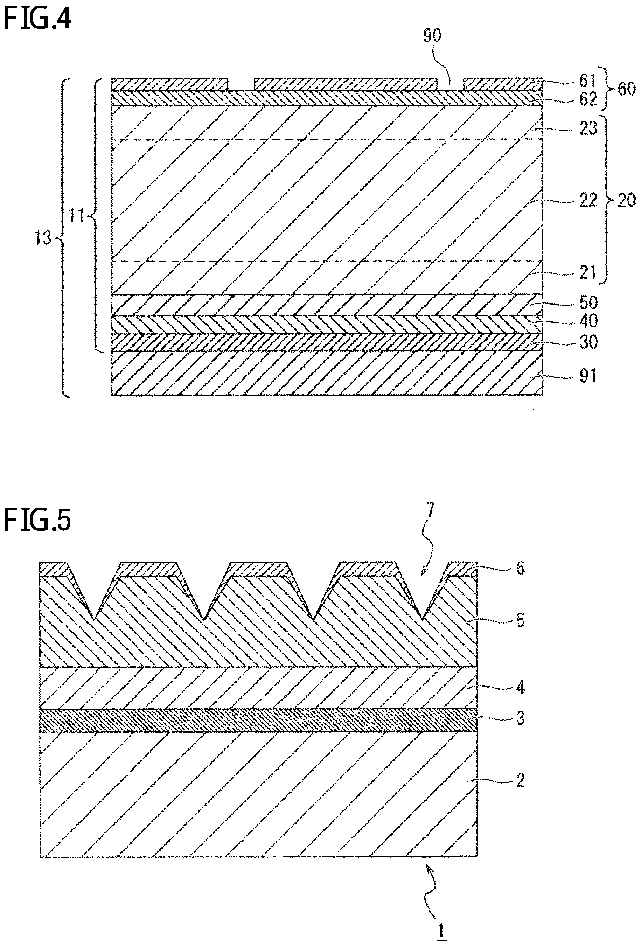

Further, as shown in Fig. 4, the pressure-sensitive adhesive layer 70 and the release paper 80 may not be provided, and a surface of the primer layer 30 may be bonded to a substrate material 91 via an adhesive layer to provide a decorative material 13.

The decorative sheet 11 may omit the above "(1) primer layer 30". That is, if the above "(2) colored layer 40" has a function as a primer layer, the primer layer 30 can be omitted.

Moreover, the decorative sheet 11 may omit the above "(2) colored layer 40". That is, if a colored layer is not necessary, for example, if concealing properties are not required, the colored layer 40 can be omitted.

<Transparent Base 20>

The transparent base 20 serves as a support of the decorative sheet 11, and is formed of a transparent olefin sheet. Although the details will be described later, examples of resin materials constituting the transparent olefin sheet include thermoplastic resins. That is, the transparent base 20 is a transparent olefin sheet formed of a thermoplastic resin, that is, a transparent thermoplastic resin layer.

In the present embodiment, the transparent base 20 is a transparent thermoplastic resin layer formed of a resin composition containing biomass-derived (plant-derived) polypropylene. The use of biomass-derived polypropylene resin for the transparent base 20 makes it possible to provide a decorative sheet having physical properties comparable to those of decorative sheets formed using conventional fossil fuel-derived materials, even when formed using plant-derived materials.

Further, the transparent base 20 may be a transparent thermoplastic resin layer formed of a resin composition containing biomass-derived polypropylene, and may further contain fossil fuel-derived polypropylene in addition to the biomass-derived polypropylene. Although the details will be described later, the transparent base 20 may contain at least one of a UV absorber or a nanoscale nucleating agent.

(Biomass-Derived Polypropylene)

In the present embodiment, the biomass-derived polypropylene is obtained by polymerizing a monomer containing biomass-derived propylene. The biomass-derived propylene is not particularly limited, and any known method can be used to prepare propylene. Since biomass-derived propylene is used as the raw material monomer, the polypropylene obtained by polymerization is biomass-derived.

The raw material monomer for polypropylene does not necessarily have to contain 100 mass% of biomass-derived propylene.

The raw material monomer for biomass-derived polypropylene may further contain fossil fuel-derived propylene.

By using biomass-derived propylene as the raw material, it is theoretically possible to produce polypropylene formed of 100% biomass-derived components.

The concentration of biomass-derived propylene in the polypropylene (hereinafter, also referred to as "biomass degree") is a value obtained by measuring the biomass-derived carbon content by radiocarbon (C14) measurement. Since carbon dioxide in the atmosphere contains C14 at a certain ratio (105.5 pMC), it is known that the C14 content in plants, such as corn, that grow by taking in carbon dioxide in the atmosphere is also approximately 105.5 pMC. Further, it is also known that fossil fuels contain little C14. Therefore, by measuring the ratio of C14 contained in the total carbon atoms in polypropylene, the ratio of biomass-derived carbon can be calculated. In the present embodiment, when the C14 content in polypropylene is $P_{C14}$, the biomass-derived carbon content $P_{bio}$ can be calculated as follows:

$$P_{bio} (\%) = P_{C14}/105.5 \times 100$$

In the present embodiment, theoretically, if the raw material of polypropylene is all biomass-derived propylene, the concentration of biomass-derived propylene is 100%, and thus the biomass degree of the biomass-derived polypropylene is 100. Further, in fossil fuel-derived polypropylene composed only of fossil fuel-derived raw material, the concentration of biomass-derived propylene is 0%, and the biomass degree of the fossil fuel-derived polypropylene is 0.

In the present embodiment, the biomass degree of the biomass-derived polypropylene or the decorative sheet containing the biomass-derived polypropylene may not necessarily have to be 100.

In the present embodiment, the method of polymerizing a monomer containing biomass-derived propylene is not particularly limited, and any known method can be used. The polymerization temperature and polymerization pressure may be appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene, such as homopolypropylene, random polypropylene or block polypropylene. For example, it is preferred that a single stage polymerization or multistage polymerization such as two or more stages may be performed in any of gas phase polymerization, slurry polymerization, solution polymerization and high-pressure ionic polymerization methods, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

(Resin Composition Containing Biomass-Derived Polypropylene)

In the present embodiment, the resin composition constituting the transparent base 20 contains the above-mentioned polypropylene as a main component. The resin composition may contain the biomass-derived propylene in an amount of 5 mass% or greater, preferably 5 mass% to 99 mass%, more preferably 25 mass% to 90 mass%, and most preferably 40 mass% to 90%, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition constituting the transparent base 20 may contain two or more types of polypropylene having different biomass degrees, as long as the concentration of the biomass-derived propylene in the entire resin composition is within the above ranges.

The resin composition may further contain fossil fuel-derived propylene. That is, in the present embodiment, the resin composition may be a mixture of biomass-derived polypropylene and fossil fuel-derived polypropylene. The mixing method is not particularly limited, and any known mixing method can be used. For example, dry blending or melt blending may be used.

According to the present embodiment, the resin composition contains biomass-derived polypropylene in an amount of preferably 5 mass% to 99 mass%, more preferably 25 mass% to 75 mass%, and most preferably 40 mass% to 90%, and contains fossil fuel-derived polypropylene in an amount of preferably 1 mass% to 95 mass%, more preferably 25 mass% to 75 mass%, and most preferably 40 mass% to 90%. The resin composition may contain such a mixture as long as the concentration of the biomass-derived propylene in the entire resin composition is within the above ranges.

In production of the resin composition by the above-mentioned resin composition production process, various additives may be added, in addition to polypropylene as the main component, to the extent that the properties of the resin composition are not impaired. Examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are added in an amount of preferably in the range of 1 mass% to 20 mass%, and more preferably in the range of 1 mass% to 10 mass%, relative to the entire resin composition.

As described above, the transparent base 20 may contain the biomass-derived propylene in an amount of 5 mass% or greater, preferably 5 mass% to 99 mass%, more preferably 25 mass% to 90 mass%, and most preferably 40 mass% to 90%, relative to the entire transparent base 20. The concentration of the biomass-derived propylene in the transparent base 20 of 5 mass% or greater can reduce the amount of fossil fuels used compared to conventional products, which makes it possible to provide a carbon-neutral decorative sheet.

The transparent base 20 may have a density of 0.90 g/cm$^3$ to 0.96 g/cm$^3$, and preferably 0.90 g/cm$^3$ to 0.91 g/cm$^3$. The density of the transparent base 20 is measured according to the method specified by Method A in JIS K 7112-1980 after being subjected to annealing described in JIS K 6760-1995. The density of the transparent base 20 of 0.90 g/cm$^3$ or greater can increase the rigidity of the transparent base 20. Further, the density of the transparent base 20 of 0.96 g/cm$^3$ or less can improve transparency, extrusion suitability and mechanical strength of the transparent base 20.

The transparent base 20 may have a biomass degree in the range of 10% or greater and 90% or less relative to the entire transparent base 20.

In the present embodiment, biomass-derived polypropylene has been described as the biomass-derived resin constituting the transparent base 20, but the present invention is not limited thereto. For example, in addition to the biomass-derived polypropylene described above, biomass-derived polyethylene, biomass-derived polybutylene, or the like may be used. That is, in the present embodiment, a wide range of biomass-derived polyolefins can be used as the biomass-derived resin constituting the transparent resin layer 5.

The transparent base 20 may have a thickness preferably in the range of greater than 50 μm and 200 μm or less, more preferably 50 μm or greater and 180 μm or less, and still more preferably 70 μm or greater and 150 μm or less. The reason for this is that the thickness of the transparent base 20 composed of biomass-derived polypropylene of greater than 50 μm can absorb unevenness and steps in the underlying floor materials or the like, improving the installation finish of the decorative sheet 11. Further, the thickness of the transparent base 20 of 200 μm or less can prevent an unnecessary increase in thickness of the transparent base 20, reducing the production cost of the decorative sheet 11.

In the present embodiment, the transparent base 20 may have a tensile modulus of elasticity preferably in the range of 400 MPa or greater and 1,800 MPa or less, and more preferably 500 MPa or greater and 1,300 MPa or less. The tensile modulus of elasticity of the transparent base 20 in the range of 400 MPa or greater and 1,800 MPa or less can increase the surface hardness and thus improve the scratch resistance while preventing occurrence of defects such as whitening and cracking during bending processing, thereby achieving both excellent scratch resistance and excellent bending processability.

In the present embodiment, as shown in Fig. 3, the transparent base 20 is formed by laminating two types of three layers, i.e., a transparent skin layer 21, a transparent core layer 22 made of transparent polypropylene, and a transparent skin layer 23, in this order on the printed pattern layer 50, and the transparent base 20 is formed by extrusion molding using a resin composition containing the above biomass-derived polypropylene.

The transparent base 20 is illustrated as being formed of separate layers, the transparent core layer 22 and the transparent skin layers 21 and 23, but in reality, the transparent base 20 is a monolayer sheet in which the transparent core layer 22 and the transparent skin layers 21 and 23 are continuous and have no internal interfaces. Due to the transparent base 20 formed of a monolayer sheet, the amount of resin used for producing decorative sheets can be reduced compared to conventional multilayer films, which contributes to realization of a carbon-neutral society. Further, due to the transparent skin layers 21 and 23 being provided in the transparent base 20, it is possible to obtain a decorative sheet having high surface hardness while maintaining transparency and flexibility.

Although the transparent base 20 is shown as a monolayer film formed of a transparent olefin sheet (transparent skin layer 21/transparent core layer 22/transparent skin layer 23), this is merely an example, and, although not shown, it may be a monolayer film formed of, for example, a transparent olefin sheet (transparent layer). In this case, the monolayer film (transparent layer) corresponds to the transparent base 20.

The "transparent layer" of the above monolayer film (transparent layer) contains a dispersant as a nanoscale additive, as with the transparent skin layer 21. Further, the "transparent layer" also contains a weathering agent, as with the transparent core layer 22.

<Transparent Core Layer 22>

The resin material constituting the transparent core layer 22 may be a resin composition containing the above biomass-derived polypropylene.

Further, the transparent core layer 22 may be formed using a resin composition containing the above biomass-derived polypropylene blended with a weathering agent. An example of the weathering agent is an UV absorber. Adding an UV absorber can maintain antifading properties. Examples of the UV absorber include benzophenones, benzotriazoles, salicylates, cyanoacrylates, formamidines, oxanilides and hindered amines. In particular, benzotriazoles, oxanilides, hindered amines and mixtures thereof are preferred due to their excellent UV absorbance and excellent miscibility with olefin resins.

In addition to the weathering agent (UV absorber), if necessary, the transparent core layer 22 may contain, for example, one or more additives selected from various additives such as fillers, photostabilizers, thermal stabilizers, antioxidants, antistatic agents, lubricants, flame retardants, antibacterial agents, antifungal agents, antifriction agents, light scattering agents and matting agents.

transparent Skin Layers 21, 23>

The transparent skin layers 21 and 23 are formed of a resin composition containing the above biomass-derived polypropylene, as with the transparent core layer 22. Further, the transparent skin layers 21 and 23 may be formed using a resin composition containing the above biomass-derived polypropylene blended with a dispersant as a nanoscale additive. Furthermore, the transparent skin layers 21 and 23 may contain an inorganic filler (hereinafter, also referred to as a nanoscale nucleating agent). The transparent skin layers 21 and 23 may contain at least one of a dispersant or a nucleating agent as a nanoscale additive.

(Nanoscale Additives (Nucleating Agent))

A nanoscale nucleating agent is preferably added and used in the form of nucleating agent vesicles, in which the nucleating agent is encapsulated by a monolayer outer membrane.

Further, the nucleating agent in the resin constituting the transparent skin layers 21 and 23 may be encapsulated in vesicles with the nucleating agent partially exposed. Due to containing the nucleating agent, the transparent skin layers 21 and 23 can enhance the crystallinity, improving the scratch resistance of the decorative sheet 11.

The nanoscale nucleating agent preferably has a mean particle size of 1/2 or less of the wavelength range of visible light. Specifically, since the wavelength range of visible light is 400 nm or greater and 750 nm or less, the mean particle size is preferably 375 nm or less.

Since the nanoscale nucleating agent has a significantly small particle diameter, the number and surface area of the particles of nucleating agent present per unit volume increase in inverse proportion to the cube of the particle diameter. This results in a closer distance between the nucleating agent particles, and when crystal growth occurs on the surface of one particle of the nucleating agent added to the resin, the edge of the growing crystal immediately comes into contact with the edge of a crystal growing on the surface of another adjacent nucleating agent particle, whereby the edge of each crystal inhibits growth of the other crystal, and each crystal stops growing. Therefore, the mean particle size of spherulites in the crystal part of the crystalline resin can be reduced, and the spherulite size can be reduced to, for example, 1 $\mu$m or less.

As a result, a resin film with high crystallinity and high hardness can be produced, and since the stress concentration between spherulites that occurs during bending processing is efficiently dispersed, it is possible to provide a resin film capable of preventing occurrence of cracking and whitening during bending processing.

When a nucleating agent is simply added, secondary aggregation of the nucleating agent in the resin causes the particle size to increase.

On the other hand, when nucleating agent vesicles are added, the dispersibility in the resin is improved, and thus the number of crystal nuclei relative to the amount of the added nucleating agent significantly increases compared to the case where a nucleating agent is simply added.

This reduces the mean particle size of spherulites in the crystal part of the resin, preventing occurrence of cracking and whitening during bending processing. Therefore, the addition of nucleating agent vesicles can further enhance the crystallinity and achieve both improved elastic modulus and improved processability.

The transparent skin layers 21 and 23 are formed of, for example, a resin material blended with a nucleating agent in an amount preferably in the range of 0.05 parts by mass or greater and 0.5 parts by mass or less, and more preferably 0.1 parts by mass or greater and 0.3 parts by mass or less relative to 100 parts by mass of a resin composition containing the above biomass-derived polypropylene as a main component.

When nucleating agent vesicles are used, the amount of nucleating agent added to the resin material is the amount added in terms of nucleating agent in the nucleating agent vesicles.

When the amount of the nucleating agent added is less than 0.05 parts by mass, the crystallinity of polypropylene may not be sufficiently enhanced to improve the scratch resistance of the transparent skin layers 21 and 23.

Further, when the amount of the nucleating agent added exceeds 0.5 parts by mass, an excess of crystal nuclei inhibits the growth of spherulites of polypropylene, and as a result, the crystallinity of polypropylene may not be sufficiently enhanced to improve the scratch resistance of the transparent skin layers 21 and 23.

The term "main component" as used herein refers to a resin material that accounts for at least 50 mass% of the resin material constituting the transparent skin layer 21.

Further, examples of methods of nanosizing the nucleating agent include a solid phase method in which a nucleating agent is mainly mechanically pulverized to obtain nanoscale particles, a liquid phase method in which nanoscale particles are synthesized or crystallized in a nucleating agent or a solution in which a nucleating agent is dissolved, and a gas phase method in which nanoscale particles are synthesized or crystallized from a nucleating agent or gas or vapor consisting of a nucleating agent, and these methods can be appropriately used.

Examples of the solid phase method include a ball mill, a beads mill, a rod mill, a colloid mill, a conical mill, a disk mill, a hammer mill and a jet mill.

Examples of the liquid phase method include a crystallization method, a coprecipitation method, a sol-gel method, a liquid phase reduction method and a hydrothermal synthesis method. Examples of the gas phase method include an electric furnace method, a chemical flame method, a laser method and a thermal plasma method.

A preferred method of nanosizing a nucleating agent is supercritical reverse phase evaporation. The supercritical reverse phase evaporation is a method of preparing capsules (nanoscale vesicles) containing a target substance using carbon dioxide in a supercritical state, or under a temperature or pressure condition that is equal to or higher than the critical point.

Carbon dioxide in a supercritical state refers to carbon dioxide that is in a supercritical state with a temperature that is equal to or higher than the critical temperature (30.98°C) and a pressure that is equal to or higher than the critical pressure (7.3773±0.0030 MPa). Carbon dioxide under a temperature condition that is equal to or higher than the critical point or a pressure condition that is equal to or higher than the critical point indicates carbon dioxide under conditions where only one of the temperature and pressure exceeds the critical condition.

In a specific nanosizing treatment by supercritical reverse phase evaporation, an aqueous phase is injected into a mixture fluid of supercritical carbon dioxide, phospholipid as an outer membrane forming substance, and a nucleating agent as an encapsulated substance, followed by stirring to generate an emulsion of supercritical carbon dioxide and the aqueous phase.

Then, once the pressure is reduced, the carbon dioxide expands and evaporates to cause phase transition, and nanocapsules (nanovesicles) are formed in which the phospholipid in the form of a monolayer membrane covers the surface of the nucleating agent particles.

Unlike the conventional encapsulation method in which the outer membrane forms a multi-layer film on the surface of the nucleating agent particles, the supercritical reverse phase evaporation method enables capsules having a monolayer film to be easily formed. Accordingly, capsules having smaller diameter can be prepared.

Nucleating agent vesicles can be prepared by, for example, the Bangham method, extrusion, hydration, detergent dialysis, reverse phase evaporation, freeze-thaw, supercritical reverse phase evaporation, and the like. In particular, nucleating agent vesicles are preferably prepared by using a supercritical reverse phase evaporation method.

The outer membrane constituting nucleating agent vesicles may be formed of, for example, a monolayer. Further, the outer membrane may be made of, for example, a substance containing a biological lipid such as a phospholipid.

In this description, nucleating agent vesicles having an outer membrane made of biological lipid such as phospholipid are referred to as nucleating agent liposomes.

Examples of the phospholipid that constitutes the outer membrane include glycerophospholipids such as phosphatidylcholine, phosphatidylethanolamine, phosphatidylserine, phosphatidic acid, phosphatidylglycerol, phosphatidylinositol, cardiopine, yolk lecithin, hydrogenated yolk lecithin, soybean lecithin and hydrogenated soybean lecithin, and sphingophospholipids such as sphingomyelin, ceramide phosphorylethanolamine and ceramide phosphoryl glycerol.

Other substances that constitute the outer membrane of vesicles may be, for example, dispersants such as nonionic surfactants and mixtures of nonionic surfactants and cholesterols or triacylglycerols.

Examples of the nonionic surfactants include one or more of the following: polyglycerol ether, dialkylglycerine, polyoxyethylene hydrogenated castor oil, polyoxyethylene alkyl ether, polyoxyethylene sorbitan fatty acid ester, sorbitan fatty acid ester, polyoxyethylene polyoxypropylene copolymer, polybutadiene-polyoxyethylene copolymer, polybutadiene-poly(2-vinylpyridine), polystyrene-polyacrylic acid copolymer, polyethylene oxide-polyethylethylene copolymer and polyoxyethylene-polycaprolactam copolymer. Examples of the cholesterols include cholesterol, $\alpha$-cholestanol, $\beta$-cholestanol, cholestane, desmosterol (5,24-cholestadiene-3$\beta$-ol), sodium cholate and cholecalciferol.

The outer membrane of the liposomes may be made of a mixture of phospholipid and a dispersant.

In the decorative sheet 11 of the present embodiment, the nucleating agent vesicles are preferably radical scavenger liposomes having an outer membrane made of phospholipid. The outer membrane made of phospholipid ensure good miscibility with the resin material which is the main component of the decorative sheet 11 and the vesicles.

The nucleating agent is not particularly limited as long as it is a substance acting as a starting point for crystallization upon crystallization of the resin. Examples of the nucleating agent may include phosphoric acid ester metal salts, benzoic acid metal salts, pimelic acid metal salts, rosin metal salts, benzylidene sorbitol, quinacridone, cyanine blue and talc. In particular, to maximize the effect of nanosizing treatment, it is preferred to use phosphoric acid ester metal salts, benzoic acid metal salts, pimelic acid metal salts or rosin metal salts, which are non-melting type and expected to exhibit good transparency. Further, colored quinacridone, cyanine blue, talc, and the like may also be used when they can be made transparent by the nano-sizing treatment. In addition, non-melting type nucleating agents may be used by being appropriately mixed with melting type benzylidene sorbitol.

(Characteristics of Transparent Skin Layers 21 and 23)

As described above, the decorative sheet 11 of the present embodiment 1 is characterized in that the transparent skin layers 21 and 23 contain a resin material and a nucleating agent.

Further, the decorative sheet 11 of the present embodiment 1 is characterized in that a nucleating agent encapsulated in vesicles is added to the resin material to crystallize the resin material when forming the transparent skin layers 21 and 23. Adding the nucleating agent encapsulated in vesicles to the resin composition has an effect of drastically improving dispersibility of the nucleating agent in the resin material, that is, in the transparent skin layers 21 and 23. On the other hand, it is assumed that specifying the nucleating agent encapsulated in vesicles directly from the structure or properties of the object in the state of completed decorative sheet 11 may be difficult depending on the situation, and it is considered to be impractical. The reasons are as follows.

The nucleating agent added in the state of vesicles is in a dispersed condition with high dispersibility, and is also highly dispersed in the transparent skin layers 21 and 23 even in the state of a laminate which is a precursor of the prepared decorative sheet 11.

However, in the production process of the decorative sheet 11, the laminate is usually subjected to various types of treatments, such as compression and curing, and such treatments may cause the outer membrane of vesicles encapsulating the nucleating agent to fracture or chemically react.

Accordingly, the treatments to the decorative sheet 11 may cause the outer membrane of the nucleating agent in the completed decorative sheet 11 to fracture or chemically react in various ways, and it is highly possible that the nucleating agent may not be encapsulated (enveloped) by the outer membrane.

When the nucleating agent is not encapsulated by the outer membrane, it is difficult to specify the physical properties of the nucleating agent itself in a numerical range, and it may also be difficult to determine whether the constituent material of the fractured outer membrane is the outer membrane of the vesicles or a material which is added separately from the nucleating agent.

Thus, while the present invention is different from the conventional art in that the nucleating agent is blended in the decorative sheet 11 in a highly dispersed condition, it may be impractical to specify whether this is attributed to the fact that the nucleating agent in the form of vesicles has been added, from a numerical range analyzed based on measurements of the structure and properties of the decorative sheet 11.

<Primer Layer 30>

As shown in Fig. 3, the primer layer 30 is formed on the rear side of the transparent base 20, and is located on a side of the transparent base 20 opposite to that facing the surface protective layer 60. The primer layer 30 is provided mainly for improving adhesion.

The functions of the primer layer 30 includes, in addition to improving adhesion, stabilizing surfaces after surface treatments, preventing corrosion of metal surfaces, imparting pressure-sensitive adhesion, preventing deterioration of adhesion, and the like.

The primer layer 30 is formed by, for example, applying a urethane-based resin by gravure printing so that the solid content is 1 g/m$^2$.

<Colored Layer 40>

As shown in Fig. 3, the colored layer 40 is formed on the rear side of the transparent base 20, and is located on a surface of the primer layer 30. The colored layer 40 is formed by using a printing method, and is provided mainly for imparting concealing properties.

The colored layer 40 may be, for example, printed with a two-part urethane-based resin by gravure printing.

<Printed Pattern Layer 50>

As shown in Fig. 3, the printed pattern layer 50 is formed on the rear side of the transparent base 20, and is located on a surface of the colored layer 40. The printed pattern layer 50 is formed by using a printing method, and is provided mainly for imparting design properties to the decorative sheet 11.

The printed pattern layer 50 may be, for example, a pattern printed with a urethane-based resin by gravure printing.

Although gravure printing is exemplified as the printing method, the method is not limited thereto, and various printing methods, such as offset printing, relief printing, flexographic printing, screen printing, inkjet printing and electrostatic printing, can be used.

The type of pattern of the printed pattern layer 50 can be appropriately determined depending on the intended use, user's preferences, or the like, and typical examples include wood grain patterns, stone grain patterns, abstract patterns, and the like. The type of pattern is not limited to the above examples, and solid printing may be applied to the entire surface.

Further, the printed pattern layer 50 may be a single color.

Recently, instead of matching the patterns of fittings and construction materials in each house or room, a single color may be used. For example, for new construction, fittings and doors are installed at different timings from construction materials. Also, door frames and window frames, for example, need to be attached to the house itself and should be installed early in the construction process, but the doors themselves can be installed or removed later.

By using a single-color frame material, it is possible to accommodate any interior door pattern in advance, and the door pattern can be decided later, or when replacing a door due to aging, it is possible to replace only the door without the need to damage the frame material. Furthermore, the door itself can also be a single color.

Moreover, according to the present embodiment, since all rooms of an apartment or the like can be unified in a single color so that it becomes easy to increase the lot size and reduce unit cost, there is an advantage to using single-color sheets.

Further, according to the present embodiment, if it is desired to change a white finish to a wood grain finish, the decorative sheet 11 according to the present embodiment, which is thin but rigid, can be changed to a wood grain finish later.

Printing inks used in printing methods may be, for example, vinyl chloride-vinyl acetate based inks (cyan, magenta, yellow).

Although urethane-based resins are exemplified as the printing inks, the printing inks are not limited thereto, and may also be, for example, colorants such as organic or inorganic dyes or pigments, or may be dispersed in a binding agent made of a synthetic resin or the like, together with fillers, tackifiers, plasticizers, stabilizers, dispersants, defoaming agents, leveling agents, surfactants and desiccants, and other appropriate additives, as well as solvents or diluents.

<Surface Protective Layer 60>

As shown in Fig. 3, the surface protective layer 60 is disposed on a side of the transparent base 20 opposite to that facing the printed pattern layer 50, that is, on the front side of the transparent base 20. The surface protective layer 60 is formed by using a printing method, and is provided for imparting surface properties such as abrasion resistance and water resistance.

The surface protective layer 60 may be a monolayer, or may be formed by laminating multiple layers. As shown in Fig. 3, in the decorative sheet 11 according to the present embodiment, the surface protective layer 60 has a two-layer configuration formed of a first surface protective layer 61 and a second surface protective layer 62. In the case where the surface protective layer 60 has a single-layer configuration (monolayer structure), the first surface protective layer 61 constitutes the surface protective layer 60.

The surface protective layer 60 including the first surface protective layer 61 and the second surface protective layer 62 is formed by applying and curing each layer using a known coating device, thermal drying device or ultraviolet irradiation device, according to the type of the curable resin.

The surface protective layer 60 has an important role in determining the quality of bending processability, weatherability, scratch resistance and cleanability. The surface protective layer 60 is mainly composed of a curable resin (curing resin). That is, it is preferred that the resin component is substantially composed of a curable resin. The term "substantially" means that, for example, a curable resin is at least 80 parts by mass relative to 100 parts by mass of the total resin. If necessary, the surface protective layer 60 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents.

<First Surface Protective Layer 61>

The first surface protective layer 61 is a layer (outermost layer) located on the outside surface (outermost surface) among the layers (first surface protective layer 61, second surface protective layer 62) constituting the surface protective layer 60. In the present embodiment, the first surface protective layer 61 contains at least one of a thermosetting resin, an ultraviolet curable resin and an electron beam curable resin. The electron beam curable resin and the ultraviolet curable resin may be collectively referred to as an ionizing radiation-curable resin. The first surface protective layer 61 can be typically formed by applying a reactive resin to form a coated film, which is then heated or irradiated with ionizing radiation to cure the coated film. The first surface protective layer 61 may differ in characteristics depending on the curing method. For example, in general, the first surface protective layer 61 formed of an ionizing radiation-curable resin has a high degree of cross-linking after the curing reaction and thus has high hardness, and tends to have excellent scratch resistance. On the other hand, the first surface protective layer 61 formed of a thermosetting resin has a relatively low degree of cross-linking and thus has low hardness, and tends to have excellent flexibility such as bending and conforming to a substrate.

The first surface protective layer 61 may be mainly composed of one of a thermosetting resin, an ultraviolet curable resin and an electron beam curable resin. That is, the main component of the first surface protective layer 61 may be a thermosetting resin alone, or may be an ultraviolet curable resin or ionizing radiation-curable resin alone.

For example, when the decorative sheet 11 is used for fittings that are components often having a complex shape, flexibility (for example, processability) is often required. Therefore, for example, the decorative sheet 11 for fittings preferably uses a thermosetting resin as a main component of the first surface protective layer 61. Further, when the decorative sheet 11 is required to have scratch resistance rather than flexibility, it is preferred to use an ionizing radiation-curable resin.

Further, the main component of the first surface protective layer 61 may be a mixture of a thermosetting resin, an ultraviolet curable resin and an electron beam curable resin. When using such a mixture as a main component, the ratio of the thermosetting resin, ultraviolet curable resin and electron beam curable resin in the first surface protective layer 61 can be adjusted depending on the intended use so that the decorative sheet 11 can be used according to the requirements of various applications.

For example, when the decorative sheet 11 is used for fittings, a mixture of a thermosetting resin and an ionizing radiation-curable resin, which is used as the main component of the first surface protective layer 61, preferably contains the thermosetting resin in the largest amount. Specifically, the thermosetting resin may account for at least 50 mass% of the mixture, preferably 70 mass% or greater, more preferably 75 mass% or greater, and still more preferably 80 mass% or greater.

Further, for example, when the decorative sheet 11 is required to have scratch resistance, a mixture of a thermosetting resin and an ionizing radiation-curable resin, which is used as the main component of the first surface protective layer 61, preferably contains at least one of the ultraviolet curable resin and the electron beam curable resin in the largest amount. Specifically, the ionizing radiation-curable resin may account for at least 50 mass% of the mixture, preferably 70 mass% or greater, more preferably 75 mass% or greater, and still more preferably 80 mass% or greater.

As described above, due to the first surface protective layer 61, which is the outermost layer of the surface protective layer 60, containing a mixture of a thermosetting resin and an ionizing radiation-curable resin as the main component, it is possible to satisfy scratch resistance while preventing occurrence of whitening and cracking in the surface protective layer 60 during bending processing.

However, the performance of the decorative sheet 11 such as the above-mentioned scratch resistance and processability is not determined solely by differences in curing method of the resins used for the first surface protective layer 61. The performance of the decorative sheet 11 (in this case, scratch resistance and processability) is greatly influenced by the material design of the resin itself and the effect of adding additives such as fillers, that is, the physical properties of various components contained in the surface protective layer 60. Therefore, the design of the surface protective layer 60 as a whole is of importance.

[Ionizing Radiation-Curable Resin]

The ionizing radiation-curable resin (including ultraviolet curable resin and electron beam curable resin) used for the first surface protective layer 61 is not particularly limited, and transparent resins mainly composed of prepolymers (including oligomers) and/or monomers containing, in the molecules, radically polymerizable double bonds that are capable of polymerization cross-linking reaction when irradiated with ionizing radiation such as UV light or electron beams can be used. These prepolymers or monomers may be used singly or as a mixture thereof. The curing reaction in the ionizing radiation-curable resin is usually a cross-linking curing reaction.

Specific examples of the above prepolymers or monomers include compounds containing, in the molecules, radically polymerizable unsaturated groups such as (meth)acryloyl groups and (meth)acryloyloxy groups, cationic polymerizable functional groups such as epoxy groups. The (meth)acryloyl groups described herein refers to acryloyl groups or methacryloyl groups.

Examples of the prepolymers containing radically polymerizable unsaturated groups include polyester (meth) acrylate, urethane (meth)acrylate, epoxy (meth)acrylate, melamine (meth)acrylate, triazine (meth)acrylate and silicone (meth)acrylate. The molecular weight of these is preferably in the order of 250 to 100,000.

Examples of the monomers containing radically polymerizable unsaturated groups include monofunctional monomers such as methyl (meth)acrylate, 2-ethylhexyl (meth)acrylate and phenoxyethyl (meth)acrylate. Further, examples of the polyfunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth) acrylate, dipentaerythritol penta(meth)acrylate and dipentaerythritol hexa(meth)acrylate.

Examples of the prepolymers containing cationic polymerizable functional groups include prepolymers of epoxy-based resins such as bisphenol type epoxy resin and novolak type epoxy compound, and vinyl ether-based resins such as fatty acid vinyl ethers and aromatic vinyl ethers.

Further, polyene/thiol-based prepolymers made of a combination of polyene and polythiol are also preferred. Examples of the thiol include polythiols such as trimethylolpropane trithioglycolate and pentaerythritol tetrathioglycolate. Examples of the polyene include those having allyl alcohol added on both ends of polyurethane made of a diol and a diisocyanate.

The ionizing radiation used for curing the ionizing radiation-curable resin may be electromagnetic waves and charged particles having energy that can cause a curing reaction of the molecules in the ionizing radiation-curable resin (composition). Usually, UV light or electron beams may be used, but it is also possible to use visible light, X-rays, ion beams, and the like.

The UV light source may be, for example, a light source such as a super high-pressure mercury lamp, high pressure mercury lamp, low pressure mercury lamp, carbon arc lamp, black light or metal halide lamp. The wavelength of UV light is usually in the range of 190 nm or greater and 380 nm or less.

The electron beam source may be, for example, various types of electron beam accelerators such as Cockcroft-Walton type, Van de Graaff type, resonant transformer type, insulating core transformer type, linear type, Dynamitron type and high frequency type. In particular, those capable of emitting electrons having energy in the range of 100 keV or greater and 1,000 keV or less are preferred, and those capable of emitting electrons having energy in the range of 100 keV or greater and 300 keV or less are more preferred.

[Thermosetting Resin]

The thermosetting resin used for the first surface protective layer 61 is not particularly limited, but may be, for example, a two-part curable urethane-based resin. The two-part curable urethane-based resin is not particularly limited, but in particular, those containing a polyol component with OH groups (acrylic polyol, polyester polyol, polyether polyol, epoxy polyol, or the like) as a base resin, and an isocyanate component (tolylene diisocyanate, hexamethylene diisocyanate, meta-xylene diisocyanate, or the like) as a curing agent component can be used. Further, the thermosetting resin is not limited to the above, and one-part reaction-curable polyurethane-based resins and one-part or two-part reaction-curable epoxy-based resins may also be used.

The first surface protective layer 61 further contains a surfactant. The surfactant contains at least one of a cationic surfactant, an amphoteric surfactant and a nonionic surfactant. Adding a surfactant can improve the miscibility between a silver-based antiviral agent and the binder of the first surface protective layer 61, which makes it possible to obtain a decorative sheet with reduced concentration variation of the antiviral agent due to precipitation during coating.

Further, the first surface protective layer 61 preferably has a thickness in the range of 3 μm or greater and 15 μm or less. The thickness of the first surface protective layer 61 of 3 μm or greater can improve various resistances such as scratch resistance, abrasion resistance and weatherability. The thickness of the first surface protective layer 61 of 15 μm or less can prevent an unnecessary increase in the amount of resin material used, reducing the cost.

[Silicone Resin]

When a silicone resin is used for the first surface protective layer 61, it is preferred to use a modified silicone due to adhesion to the surroundings and miscibility issues. When the curable resin constituting the first surface protective layer 61 is formed of an ultraviolet curable resin or an electron beam curable resin, the modified silicone is preferably an ionizing radiation-reactive modified silicone resin. Further, when the curable resin constituting the first surface protective layer 61 is formed of a thermosetting resin, the modified silicone is preferably a heat-reactive modified silicone resin. Further, when the curable resin constituting the first surface protective layer 61 is formed of a mixture of an ionizing radiation-curable resin and a thermosetting resin, the modified silicone is preferably a modified silicone resin formed of at least one of an ionizing radiation-reactive modified silicone resin and a heat-reactive modified silicone resin.

The modified silicone can be classified into reactive modified silicone and non-reactive silicone. Examples of the heat-reactive modified silicone include monoamine-modified silicone, diamine-modified silicone, epoxy-modified silicone, carbinol-modified silicone, carboxy-modified silicone, mercapto-modified silicone, silanol-modified silicone, alcohol-modified silicone and diol-modified silicone. Further, examples of the ionizing radiation-reactive modified silicone include acrylic modified silicone and methacrylic modified silicone. Further, examples of the non-reactive modified silicone include polyether-modified silicone, aralkyl-modified silicone, long-chain alkyl-modified silicone and higher fatty acid ester-modified silicone.

[Fluororesin]

Fluororesins are widely known to exhibit a minimum level of surface tension, and suitable as stain-resistant materials. Examples of the fluororesins contained in the first surface protective layer 61 include tetrafluoroethylene resin, tetrafluoroethylene-ethylene copolymer, polyvinylidene fluoride, and many other derivatives. Manufacturers of these fluororesins include Daikin Industries, Ltd., DuPont-Mitsui Fluorochemicals Co. Ltd., and the like. The amount of fluororesin contained in the first surface protective layer 61 is preferably 10 parts by mass or greater and 100 parts by mass or less. More preferably, the amount is 20 parts by mass or greater. The fluororesin itself may be a curable resin. That is, a part of the fluororesin may also serve as a part of the curable resin which is a main component of the surface protective layer 60 (first surface protective layer 61, second surface protective layer 62). For example, the entire resin component of the second surface protective layer 62 may be a fluororesin.

As described above, in the decorative sheet 11 according to the present embodiment, the outermost layer of the surface protective layer 60, that is, the first surface protective layer 61, may contain at least one of a silicone-based component or a fluorine-based component. This improves the stain resistance of the decorative sheet 11. Improving the stain resistance can prevent viruses from staying on the surface of the decorative sheet 11 for a long period of time, resulting in further improved antiviral properties.

Further, in order to enhance adhesion between layers of the decorative sheet 11, an adhesive layer containing a two-part curable urethane-based adhesive that uses an isocyanate-based curing agent may be provided between the transparent base 20 and the surface protective layer 60.

[Second Surface Protective Layer]

The second surface protective layer 62 is a layer (inner layer) formed between the outermost layer and the transparent base 20 among the layers (first surface protective layer 61, second surface protective layer 62) constituting the surface protective layer 60. In the present embodiment, the second surface protective layer 62 contains at least one of a thermosetting resin, an ultraviolet curable resin and an electron beam curable resin, as with the first surface protective layer 61. The thermosetting resin, the ultraviolet curable resin and the electron beam curable resin are the same as the curable resins contained in the first surface protective layer 61, and the description thereof will be omitted.

The second surface protective layer 62 may contain a surfactant, as with the first surface protective layer 61.

In the surface protective layer 60, the first surface protective layer 61, which is the outermost layer, may have a gloss level higher than that of the second surface protective layer 62, which is the inner layer. That is, the surface protective layer 60 may be composed of an undercoat layer (second surface protective layer 62) and a topcoat layer (first surface protective layer 61) having a gloss level higher than that of the undercoat layer. Further, the first surface protective layer 61, which is the topcoat layer, may be formed by printing a pattern matched with that of the printed pattern layer 50 by applying the same resin at a higher gloss, so that the pattern thus printed is matched with the printed pattern layer 50. That is, the surface protective layer 60 may be gloss/matt coated to match it with the pattern of the printed pattern layer 50.

In addition, an embossed portion 90 matched with the pattern of the printed pattern layer 50 may be formed on a surface of the first surface protective layer 61.

The term "embossed portion" gives the impression of a certain level difference, but in reality, the level difference between the first surface protective layer 61 matched with the pattern of the printed pattern layer 50 and the second surface protective layer 62 is only on the order of several micrometers, and this is the same meaning as that the surface protective layer 60 is gloss/matt coated to match it with the pattern.

<Substrate Material 91>

Examples of the substrate material 91 that can be used include wooden substrates such as tropical plywood, particle board, medium density fiberboard (hereinafter, MDF) and ordinary plywood specified by the Japanese Agricultural Standards. Further, substrates formed of a wood powder-containing olefin-based resin can also be used. The substrate material 91 may have a thickness of preferably about 3 mm or greater and 25 mm or less. The substrate material 91 is not limited to a wooden substrate, and may be a metal plate made of a metal material such as aluminum, a resin such as plastic, or a composite material thereof. Further, the substrate material 91 may be formed of a non-combustible steel plate or a non-combustible material specified by the Ministry of Construction Public Notification No. 1400.

As shown in Fig. 4, the decorative sheet 11 is laminated on a first surface (upper surface in Fig. 4) of the substrate material 91. That is, the decorative material 13 includes the substrate material 91 and the decorative sheet 11 laminated on the first surface of the substrate material 91.

It should be noted that the configuration of the decorative material 13 is not limited to the examples shown in Fig. 4. That is, the decorative material 13 may have a configuration in which the decorative sheet 11 is laminated not only on the first surface of the substrate material 91 but also on a second surface (lower surface in Fig. 4) of the substrate material 91.

<Adhesive Layer>

Although not shown in the figure, in the decorative sheet 11, an adhesive used for adhesion to the substrate material 91 is applied to a surface of the primer layer 30 on a side opposite to that facing the colored layer 40. In order to improve adhesion of the adhesive to the substrate material 91, an adhesive layer (not shown) may be provided between the primer layer 30 and the substrate material 91, if necessary. For example, when the substrate material 91 is formed of a wooden material, an adhesive applied to the primer layer may be a vinyl acetate emulsion or two-part curable urethane-based adhesive, so the resin design of the adhesive layer preferably matches these adhesives. For example, urethane, acrylic, ethylene-vinyl acetate copolymer, vinyl chloride-vinyl acetate copolymer and polyester-based materials can be used. In particular, a two-part curable urethane-based primer agent formed by blending a polyester polyol and a polyisocyanate is preferred. For example, adding inorganic powders such as silica, barium sulfate, calcium carbonate and the like is effective in preventing blocking during storage in a roll and improving adhesion due to an anchoring effect.

<Specific Gravity of Entire Decorative Sheet>

In the present embodiment, a specific gravity of the entire decorative sheet 11 is preferably in the range of 0.88 or greater and 1.3 or less. More preferably, the specific gravity is in the range of 0.88 or greater and 1.2 or less. With this configuration, it is possible to form a decorative sheet 11 having concealing properties equivalent to those of a configuration formed of, for example, fossil fuel-derived polyethylene or the like.

<Total Thickness of Decorative Sheet>

A thickness of the entire decorative sheet 11 is preferably in the range of 50 $\mu$m or greater and 200 $\mu$m or less. More preferably, the thickness is in the range of 70 $\mu$m or greater and 150 $\mu$m or less. With this configuration, it is possible to form a decorative sheet 11 having concealing properties equivalent to those of a configuration formed of, for example, fossil fuel-derived polyethylene or the like.

(Method for Producing Decorative Sheet 11)

The decorative sheet 11 has the above configuration, and is produced by an in-line production process including first to third steps described below.

Here, the "in-line" means that printing, which usually involves a plurality of steps, can be performed on a single line. In the method for producing the decorative sheet 11 of the present embodiment, there is no lamination step of laminating films together, that is, the production from printing to forming the surface protective layer 60 can be performed in-line on a single line.

(1) First Step

The first step is a step of producing a transparent base 20, which is a single-layer film produced by extrusion-molding a transparent core layer 22 and transparent skin layers 23 and 21 on the front and rear sides of the transparent core layer 22, respectively, the transparent core layer 22 being formed of a resin composition containing biomass-derived polypropylene as a thermal adhesive resin, the transparent skin layers 23 and 21 being formed of the same resin composition as the transparent core layer 22.

In the first step, an ultraviolet absorber may be added to the resin composition constituting the transparent core layer 22, or a dispersant as a nanoscale additive may be added to the resin composition constituting the transparent skin layers 21 and 23.

Further, in the first step, an embossed portion (not shown) with a shape appropriate for the desired design and performance may be formed, using an embossing plate, on a surface of the transparent base 20, that is, a surface on which the surface protective layer 60 will be formed in a subsequent step.

(2) Second Step

The second step is a step of forming a printed pattern layer 50, a colored layer 40 and a primer layer 30 in this order on the rear side of the transparent base 20 produced in the first step.

(3) Third Step

The third step is a step of forming a surface protective layer 60 on the front side of the transparent base 20 produced in the first step, after the second step or prior to the second step.

The above steps may be performed in the following two orders: the first step, the second step and the third step, or the first step, the third step and the second step.

<Effects of Present Embodiment

According to the decorative sheet 11 of the present embodiment, the following effects can be achieved.

(1) The decorative sheet 11 according to the present embodiment is a decorative sheet including at least a transparent base 20, which is a transparent thermoplastic resin layer, with no laminate layer made of any other film disposed on front and rear sides of the transparent base 20, wherein the transparent base 20 is a resin layer formed of a resin composition containing biomass-derived polypropylene which is obtained by polymerizing a monomer containing biomass-derived propylene.

This increases the strength compared to, for example, a configuration formed of polyethylene or the like, making it possible to form the transparent thermoplastic resin layer (transparent base 20) having high scratch resistance and the like.

As a result, the decorative sheet 11 capable of preventing a decrease in physical properties (e.g., surface hardness and the like) and maintaining physical properties suitable for use as a decorative sheet can be provided even when it is formed of biomass-derived polypropylene, which is a plant-derived material.

Furthermore, the transparent thermoplastic resin layer (transparent base 20) having high transparency equivalent to, for example, that of a configuration formed of polyethylene or the like can be formed even when it has a configuration formed of biomass-derived polypropylene, which is a plant-derived material.

In addition, since the production of the decorative sheet 11 does not include a step of laminating other sheets, the production can be performed in-line on a single line.

(2) The transparent base 20, which is a transparent thermoplastic resin layer, contains biomass-derived polypropylene in an amount of 5 mass% or greater relative to a total mass of the transparent thermoplastic resin layer.

Accordingly, the decorative sheet 11 having higher environmental suitability can be formed.

(3) The transparent base 20, which is a transparent thermoplastic resin layer, contains biomass-derived propylene and has a density in the range of 0.90 g/cm$^3$ or greater and 0.96 g/cm$^3$ or less.

Accordingly, the decorative sheet 11 having high scratch resistance and capable of reliably maintaining the physical properties suitable for use as a decorative sheet can be formed.

(4) The transparent base 20, which is a transparent thermal adhesive resin layer, has a tensile modulus of elasticity in the range of 400 MPa or greater and 1,800 MPa or less.

Accordingly, the decorative sheet 11 having higher scratch resistance and capable of further reliably maintaining the physical properties suitable for use as a decorative sheet can be formed.

(5) The transparent base 20, which is a transparent thermoplastic resin layer, has a thickness in the range of 50 μm or greater and 200 μm or less.

Accordingly, the decorative sheet 11 can be provided with improved installation finish and reduced production cost.

(6) The transparent base 20, which is a transparent thermoplastic resin layer, contains at least one of a UV absorber and a nanoscale nucleating agent.

Accordingly, the printed pattern layer 50 and the colored layer 40 can be prevented from fading when a UV absorber is added to the transparent base 20, and the transparent base 20 can be provided with further improved scratch resistance and further reduced thickness when a nucleating agent is added to the transparent base 20.

(7) The transparent base 20, which is a transparent thermal adhesive resin layer, is a monolayer sheet produced by extrusion-molding a resin composition containing biomass-derived polypropylene, the monolayer sheet having a configuration of two types of three layers composed of the transparent skin layer 21, the transparent core layer 22 and the transparent skin layer 23 laminated in this order.

Since the transparent base 20 is a monolayer sheet, the decorative sheet 11 can be reduced in thickness.

**EP 4 494 870 A1**

(8) The transparent skin layers 21 and 23 contain a nanoscale nucleating agent.

Accordingly, the transparent base 20 can be provided with further reduced thickness and further improved scratch resistance.

(9) The transparent core layer 22 contains a UV absorber.

Accordingly, the printed pattern layer 50 and the colored layer 40 can be reliably prevented from fading.

(10) A printed pattern layer on which a pattern is printed and a colored layer are disposed in this order on a rear side of the transparent base 20, which is a transparent thermoplastic resin layer, and a surface protective layer is disposed on a front side of the transparent base 20.

Accordingly, it is possible to improve concealing properties and design properties, and improve physical properties such as bending processability, weatherability, scratch resistance and cleanability.

(11) The printed pattern layer 50, the colored layer 40 and the primer layer 30 are formed in this order on a rear side of the transparent base 20, which is a transparent thermoplastic resin layer.

Accordingly, during processing of the decorative adhesive sheet 12 and the decorative material 13, adhesion to the release paper 80 and the substrate material 91 can be improved.

(12) An embossed portion matched with the printed pattern layer 50 is formed on the front side of the transparent base 20, which is a transparent thermoplastic resin layer.

Accordingly, design properties and performance suitable for the purpose can be imparted to the decorative sheet 11.

(13) A specific gravity of the entire decorative sheet 11 is 0.88 or greater and 1.3 or less.

Accordingly, concealing properties equivalent to those of a configuration formed of fossil fuel-derived polyethylene or the like can be imparted to the decorative sheet 11.

(14) A thickness of the entire decorative sheet 11 is in the range of 50 $\mu$m or greater and 200 $\mu$m or less.

Accordingly, concealing properties equivalent to those of a configuration formed of fossil fuel-derived polyethylene or the like can be imparted to the decorative sheet 11.

(15) The decorative material 13 includes the substrate material 91 and the decorative sheet 11 laminated on at least a first surface of the substrate material 91.

Accordingly, a decorative material capable of maintaining physical properties suitable for use as a decorative material can be provided even when the decorative sheet is formed of biomass-derived polypropylene, which is a plant-derived material.

[Examples]

Referring to the present embodiment, decorative materials of Examples 7-1 and 7-2 and decorative materials of Comparative Examples 7-1 to 7-3 will be described below.

It should be noted that the present invention is not limited to the following Examples 7-1 and 7-2.

(Example 7-1)

In Example 7-1, a decorative sheet 11 which is a monolayer sheet, was produced using the following materials and procedures.

Firstly, a transparent core layer 22 of a transparent base 20 was formed using a resin composition containing biomass-derived polypropylene blended with a weathering agent. A transparent skin layer 21 was formed using a resin composition containing biomass-derived polypropylene blended with a dispersant or the like as a nanoscale additive, and the transparent skin layer 21, the transparent core layer 22 and the transparent skin layer 21 were co-extruded at a thickness ratio of 0.5:9:0.5 to form a 70 $\mu$m-thick transparent base 20. A biomass degree of the entire transparent base 20, which is a transparent thermoplastic resin layer, that is, a biomass degree of the decorative sheet 11 was 80%.

Secondly, on a rear surface of the transparent base 20 that had been subjected to corona discharge treatment, a printed pattern layer 50 was formed by printing a pattern with a urethane-based resin by gravure printing, and then a colored layer 40 was formed using a two-part urethane-based resin.

Thirdly, a primer layer 30 was formed by applying a urethane-based resin at a solid content of 1 g/m$^2$ by gravure printing.

Fourthly, on a front surface of the transparent base 20 that had been subjected to corona discharge treatment, a surface protective layer 60 was provided by forming a second surface protective layer 62 by applying a low gloss acrylic two-part curable resin at a 6 $\mu$m thickness, and then a first surface protective layer 61 was formed on the second surface protective layer 62 by applying the same resin at a higher gloss to print a pattern matched with the printed pattern layer 50.

Fifthly, an adhesive (BA-10L manufactured by Japan Coating Resin Corporation (curing agent: BA-11B)) was applied to a primer layer 30-side of the decorative sheet 11 having a total thickness of 80 $\mu$m to bond the decorative sheet 11 to a 3 mm-thick MDF, which in turn was pressed using a press at 30°C to 50°C to form a decorative board, which was used as an evaluation sheet of Example 7-1.

(Example 7-2)

An evaluation sheet of Example 7-2 was prepared in the same manner as in Example 7-1 except that the thickness of the transparent base 20, which is a transparent thermoplastic resin layer, was changed to 200 μm.

(Comparative Example 7-1)

An evaluation sheet of Comparative Example 7-1 was prepared in the same manner as in Example 7-1 except that the thickness of the transparent base, which is a transparent thermoplastic resin layer, was changed to 40 μm.

(Comparative Example 7-2)

An evaluation sheet of Comparative Example 7-2 was prepared in the same manner as in Example 7-1 except that the thickness of the transparent base, which is a transparent thermoplastic resin layer, was changed to 250 μm.

(Comparative Example 7-3)

An evaluation sheet of Comparative Example 7-3 was prepared in the same manner as in Example 7-1 except that the transparent base, which is a transparent thermoplastic resin layer, was formed using a petroleum-derived polypropylene. In Comparative Example 7-3, no biomass-derived material was used in the transparent base, so the biomass degree of the decorative sheet in the evaluation sheet of Comparative Example 7-3 was 0%.

(Performance Evaluation, Evaluation Results)

The evaluation sheets (decorative boards) of Examples 7-1 and 7-2 and the evaluation sheets (decorative boards) of Comparative Examples 7-1 to 7-3 were examined for "productivity of transparent thermoplastic resin layer (transparent base)," "printing suitability," "surface hardness" and "processability." The evaluation methods used were as follows.

<Productivity of Transparent Thermoplastic Resin Layer (Transparent Base)>

The decorative sheets in the evaluation sheets (decorative boards) of the respective examples and comparative examples were visually inspected for the degree of defects such as film formability, e.g., surface conditions, presence or absence of fish-eye, and presence or absence of unevenness in thickness. The decorative sheets having substantially no defects and comparable to decorative sheets (current products) provided with the transparent base formed of a petroleum-derived polyolefin resin were rated "excellent," the decorative sheets having defects and inferior to the current products but which did not affect production were rated "good," the decorative sheets having defects that affect production were rated "fair," and the decorative sheets that were impossible to produce were rated "poor." Further, if there were only one or two defects per square meter, the decorative sheets were rated "good."
In this example, "good" was judged as a pass.

<Printing Suitability>

The decorative sheets in the evaluation sheets (decorative boards) of the respective examples and comparative examples were visually inspected for the presence or absence of poor inking, presence or absence of heat wrinkles during drying, and the state of tension adjustment. The decorative sheets with printing suitability comparable to that of the current decorative sheets were rated "excellent," the decorative sheets with printing suitability inferior to the current printing suitability but which did not affect production were rated "good," the decorative sheets having defects that may affect production depending on the conditions were rated "fair," and the decorative sheets that were impossible to produce were rated "poor."
In this example, "fair" was determined as a pass mark.

<Surface Hardness>

A test was performed according to JIS K 5600-5-4 scratch hardness (pencil method).
A pencil with a load was slid against the decorative sheets in the evaluation sheets (decorative boards) of the respective examples and comparative examples, and it was observed whether the surface protective layer was scratched, changed in gloss, or the like.

The decorative sheets in which the surface protective layer was scratched or changed in gloss (excluding dents) with a pencil hardness of "4B" or higher were rated "excellent," the decorative sheets in which the surface protective layer was scratched or changed in gloss with a pencil hardness of "5B" or higher were rated "good," the decorative sheets in which the surface protective layer was gouged with a pencil hardness of "5B" or higher or scratched with a pencil hardness of "6B" or higher were rated "fair," and the decorative sheets in which the surface protective layer was gouged with a pencil hardness of "6B or higher" were rated "poor."

In this example, "good" was judged as a pass.

<Processability>

The evaluation sheets (decorative boards) of the respective examples and comparative examples were subjected to V-cut processing, and the appearance of the top of the fold was examined. In the V-cut processing, a V-shaped groove was formed on the evaluation sheet from a side to which the decorative sheet was not bonded to the interface between the substrate (MDF board) and the decorative sheet, without scratching the decorative sheet. Next, the evaluation sheet was bent 90 degrees along the V-shaped groove so that the side to which the decorative sheet bonded was mountain folded, and the top of the fold was visually inspected for abnormalities such as whitening or cracking. The evaluation sheets with no abnormalities found and comparable to the decorative boards using the current decorative sheets were rated "excellent," the evaluation sheets with some abnormalities found and inferior to the current products but which did not affect production were rated "good," the evaluation sheets in which significant whitening was visually observed were rated "fair," and the evaluation sheets in which significant cracking was visually observed were rated "poor."

In this example, "good" was judged as a pass.

Table 8 shows the results of evaluating various performances using the above methods.

[Table 8]

|  | Ex. 7-1 | Ex. 7-2 | Comp. Ex. 7-1 | Comp. Ex. 7-2 | Comp. Ex. 7-3 |
|---|---|---|---|---|---|
| Biomass degree of decorative sheet | 80% | 80% | 80% | 80% | 0% |
| Thickness of transparent thermo-plastic resin layer | 70 μm | 200 μm | 40 μm | 250 μm | 70 μm |
| Productivity of transparent thermoplastic resin layer | excellent | fair | poor | fair | excellent |
| Suitability in printing process | excellent | good | poor | good | excellent |
| Pencil hardness (surface hardness) | excellent | excellent | fair | excellent | excellent |
| Processability | excellent | good | excellent | fair | excellent |

As a result of evaluating various performances using the above methods, the decorative sheets of Examples 7-1 and 7-2 exhibited excellent performance for the surface hardness, which was equivalent to or higher than Comparative Example 7-3 that used the current decorative sheet. In particular, the decorative sheet of Example 7-1 exhibited excellent performance equivalent to or higher than Comparative Example 7-3 in all the evaluation tests. Further, the decorative sheet of Example 7-2 also exhibited suitable performance for use as a decorative sheet in all the evaluation tests.

That is, the decorative sheets of Examples 7-1 and 7-2 were found to suppress a decrease in surface hardness and maintain physical properties suitable for use as a decorative sheet even when formed using biomass-derived (plant-derived) polypropylene.

On the other hand, the decorative sheets of Comparative Examples 7-1 and 7-2 exhibited poor performance for at least some of the evaluation items.

Further, the invention according to the seventh embodiment can have, for example, the following configurations.

(1) A decorative sheet including at least a transparent thermoplastic resin layer, with no laminate layer made of any other film disposed on front and rear sides of the transparent thermoplastic resin layer, wherein the transparent thermoplastic resin layer is a resin layer formed of a resin composition containing biomass-derived polypropylene which is obtained by polymerizing a monomer containing biomass-derived propylene.

(2) The decorative sheet according to the above (1), wherein the transparent thermoplastic resin layer contains the biomass-derived polypropylene in an amount of 5 mass% or greater relative to a total mass of the transparent thermoplastic resin layer.

(3) The decorative sheet according to the above (1) or (2), wherein the transparent thermoplastic resin layer contains the biomass-derived propylene and has a density in the range of 0.90 g/cm$^3$ or greater and 0.96 g/cm$^3$ or less.

(4) The decorative sheet according to any one of the above (1) to (3), wherein the transparent thermoplastic resin layer has a tensile modulus of elasticity in the range of 400 MPa or greater and 1,800 MPa or less.

(5) The decorative sheet according to any one of the above (1) to (4), wherein the transparent thermoplastic resin layer has a thickness in the range of 50 μm or greater and 200 μm or less.

(6) The decorative sheet according to any one of the above (1) to (5), wherein the transparent thermoplastic resin layer contains at least one of a UV absorber and a nanoscale nucleating agent.

(7) The decorative sheet according to any one of the above (1) to (6), wherein the transparent thermoplastic resin layer is a monolayer sheet produced by extrusion-molding the resin composition, the monolayer sheet having a configuration of two types of three layers composed of a transparent skin layer, a transparent core layer and a transparent skin layer laminated in this order.

(8) The decorative sheet according to the above (7), wherein the transparent skin layer contains a nanoscale nucleating agent.

(9) The decorative sheet according to the (7) or (8), wherein the transparent core layer contains a UV absorber.

(10) The decorative sheet according to any one of the above (1) to (9), wherein a printed pattern layer on which a pattern is printed and a colored layer are disposed in this order on a rear side of the transparent thermoplastic resin layer, and a surface protective layer is disposed on a front side of the transparent thermoplastic resin layer.

(11) The decorative sheet according to the above (10), wherein the printed pattern layer, the colored layer and a primer layer are formed in this order on a rear side of the transparent thermoplastic resin layer.

(12) The decorative sheet according to the above (10) or (11), wherein an embossed portion matched with the printed pattern layer is formed on a front side of the transparent thermoplastic resin layer.

(13) The decorative sheet according to any one of the above (1) to (12), wherein a specific gravity of the entire decorative sheet is 0.88 or greater and 1.3 or less.

(14) The decorative sheet according to any one of the above (1) to (13), wherein a thickness of the entire decorative sheet is in the range of 50 μm or greater and 200 μm or less.

(15) A decorative material including: a substrate material; and the decorative sheet according to any one of the above (1) to (14), the decorative sheet being laminated on at least a first surface of the substrate material.

<Eighth Embodiment>

Next, an eighth embodiment of the present invention will be described.

The eighth embodiment can solve the following problems in addition to the above-mentioned problems.

In recent years, as part of efforts to address environmental issues, there is a need to switch from petroleum-derived materials to plant-derived materials for decorative sheets. However, there is a strong demand to further improve surface hardness and processability compared to conventional biomass polyethylene, which is a plant-derived material that can be used as a decorative sheet.

In light of these circumstances, the invention according to the present embodiment has been made to provide a decorative sheet and a decorative material capable of further improving surface hardness and processability even when formed using plant-derived materials.

According to a decorative sheet and a decorative material of the present invention, since the transparent resin layer is formed of a resin composition containing biomass-derived polypropylene which is obtained by polymerizing a monomer containing biomass-derived propylene, and contains a nucleating agent that has been subjected to nanosizing treatment, the surface hardness and processability can be further improved even when formed using a plant-derived material.

An embodiment of the decorative sheet and a decorative material according to the present invention will be described with reference to the drawings. It should be noted that the present invention is not limited to only embodiments described below with reference to the drawing, and various technical matters described in the embodiments can be appropriately replaced or combined as necessary.

[Decorative Sheet/Main Embodiment]

With reference to Fig. 5, a main embodiment of the decorative sheet according to the present invention will be described.

<Decorative Sheet 1>

As shown in Fig. 5, a decorative sheet 1 includes a colored substrate layer (colored resin layer) 2 formed of a colored thermoplastic resin, and a pattern layer 3 printed with a pattern, the pattern layer 3 being disposed on the colored substrate layer 2. An adhesive layer 4 which is adhesive and transparent is disposed on the pattern layer 3. A transparent resin layer 5 made of a transparent thermoplastic resin was disposed on the adhesive layer 4. A transparent surface protective layer 6 is disposed on the transparent resin layer 5 to protect a surface. An embossed portion (uneven portion) 7 having an uneven shape is disposed on the surface protective layer 6.

<Colored Substrate Layer 2>

The colored substrate layer 2 is formed of a colored thermoplastic resin containing a polyolefin such as polyethylene or polypropylene. The colored substrate layer 2 may have a thickness preferably in the range of 30 $\mu$m or greater and 70 $\mu$m or less, more preferably 40 $\mu$m or greater and 65 $\mu$m or less, and still more preferably 50 $\mu$m or greater and 60 $\mu$m or less. The thickness of the colored substrate layer 2 of 30 $\mu$m or greater can absorb unevenness and steps in the underlying floor materials or the like to thereby improve the installation finish. On the other hand, the thickness of the colored substrate layer 2 of 70 $\mu$m or less can prevent an unnecessary increase in thickness to thereby suppress an increase in the production cost.

Further, the colored substrate layer 2 may have a density of preferably 0.90 g/cm$^3$ or greater and 1.40 g/cm$^3$ or less, and more preferably 0.90 g/cm$^3$ or greater and 1.10 g/cm$^3$ or less. The density of the colored substrate layer 2 of 0.90 g/cm$^3$ or greater can improve the rigidity and concealing properties. On the other hand, the density of the colored substrate layer 2 of 1.40 g/cm$^3$ or less can improve the processability, reducing the production cost. The density is a value measured in accordance with Method A specified in Japanese Industrial Standards "JIS K 7112-1980" after being subjected to annealing specified in Japanese Industrial Standards "JIS K 6760-1995".

If necessary, the colored substrate layer 2 may contain, for example, one or more of various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The method of producing such a colored substrate layer 2 is not particularly limited, and any known method can be used. In the present embodiment, calendering is preferred.

The colored substrate layer 2 may be formed of a colored resin composition containing a biomass-derived (plant-derived) polyolefin, or may be formed of a colored resin composition containing a fossil fuel-derived polyolefin.

<Pattern Layer 3>

The pattern layer 3 is laminated on a first surface (upper surface in Fig. 5) of the colored substrate layer 2 and adds a pattern for imparting design properties. Examples of the pattern include any patterns such as wood grain patterns, stone grain patterns, fabric grain patterns, abstract patterns, geometric patterns, characters, symbols, plain solid colors, and combinations thereof.

The pattern layer 3 may be formed, for example, using a printing ink, paint, or the like in which a colorant such as dye or pigment is dissolved or dispersed in a dilution solvent together with an appropriate binder resin. Examples of the binder resin include, but are not limited to, urethane-based resins, acrylic-based resins, vinyl chloride acetate-based resins, polyimide-based resins, nitrocellulose, and mixtures thereof. The printing ink, paint, or the like for forming the pattern layer 3 may be painted by, for example, various printing methods such as gravure coating and offset printing or various coating methods such as gravure coating and roll coating.

The pattern layer 3 may have a thickness preferably in the range of 1 $\mu$m or greater and 10 $\mu$m or less. The thickness of the pattern layer 3 of 1 $\mu$m or greater can ensure clear printing. On the other hand, the thickness of the pattern layer 3 of 10 $\mu$m or less can improve printing workability and suppress an increase in the production cost.

The pattern layer 3 may contain functional additives that impart various functions, such as extender pigments, plasticizers, dispersants, surfactants, tackifiers, adhesion aids, desiccants, curing agents, curing accelerators and curing retardants.

Also, in order to improve concealing properties of the decorative sheet 1, a concealing layer may be disposed between the colored substrate layer 2 and the pattern layer 3. The concealing layer can be formed using, for example, opaque printing ink or paint containing a large amount of opaque pigment such as titanium dioxide or iron oxide. Further, the pattern layer 3 may be omitted if it can be substituted by coloring due to the colored substrate layer 2.

<Adhesive Layer 4>

The adhesive layer 4 is laminated on a first surface (upper surface in Fig. 5) of the pattern layer 3 and used for bonding the pattern layer 3 to the transparent resin layer 5. The adhesive layer 4 can be formed of a transparent adhesive made of a resin, such as urethane, acrylic, ethylenevinyl acetate copolymer, vinyl chloride-vinyl acetate copolymer, polyester or polyolefin-based resin. In particular, a polyolefin-based resin is highly preferred from the viewpoint of adhesion to the transparent resin layer 5.

transparent Resin Layer 5>

The transparent resin layer 5 is laminated on a first surface (upper surface in Fig. 5) of the adhesive layer 4, and preferably has transparency (colorless transparency, colored transparency or translucency) to the extent that the pattern of the pattern layer 3 can be seen through the front surface (outer surface) of the decorative sheet 1. The transparent resin layer 5 is formed of a transparent resin composition containing biomass-derived (plant-derived) polypropylene which is obtained by polymerizing a monomer containing biomass-derived (plant-derived) polypropylene, and contains a nucleating agent that has been subjected to nanosizing treatment.

«Biomass-Derived Polypropylene»

The biomass-derived polypropylene is obtained by polymerizing a monomer containing biomass-derived propylene. The biomass-derived propylene is not particularly limited, and propylene produced from biomass by any known method can be used. By using biomass-derived propylene as a raw material monomer, the polypropylene obtained by polymerizing the monomer is biomass-derived, and it is theoretically possible to produce polypropylene formed of 100% biomass-derived components.

The concentration of biomass-derived propylene (hereinafter, also referred to as "biomass degree") can be calculated by determining the biomass-derived carbon content in polypropylene by measuring radiocarbon (C14) in polypropylene. Since carbon dioxide in the atmosphere contains C14 at a certain ratio (105.5 pMC), the C14 content in plants (such as corn) that grow by taking in carbon dioxide in the atmosphere is also approximately 105.5 pMC. On the other hand, it is known that fossil fuels contain little C14.

Therefore, by determining the ratio of C14 contained in the total carbon atoms in polypropylene, the concentration of biomass-derived propylene can be calculated. When the C14 content (pMC) in polypropylene is $P_{C14}$, the biomass-derived carbon content $P_{bio}$ (%) can be calculated according to the following formula (1).

$$P_{bio} = (P_{C14}/105.5) \times 100 \quad (1)$$

If the raw material of polypropylene is all biomass-derived propylene, the concentration of biomass-derived propylene is theoretically 100%, and thus the biomass degree of the biomass-derived polypropylene is 100. On the other hand, if the raw material of polypropylene is all fossil fuel-derived propylene, the concentration of biomass-derived propylene is 0%, and thus the biomass degree of the fossil fuel-derived polypropylene is 0.

The method of polymerizing a monomer containing biomass-derived propylene is not particularly limited, and any known method can be used. The polymerization temperature and polymerization pressure are appropriately adjusted depending on the polymerization methods and polymerization device. The polymerization device is not particularly limited, and any known device can be used. In the following description, an example of the method of polymerizing a monomer containing propylene will be described.

The method of polymerizing a propylene polymer can be appropriately selected according to the type of the desired polypropylene, such as homopolypropylene, random polypropylene or block polypropylene. For example, production can be performed by performing a single stage polymerization or multistage polymerization such as two or more stages by various methods such as gas phase polymerization, slurry polymerization, solution polymerization and high-pressure ionic polymerization, using a multi-site catalyst such as Ziegler-Natta catalyst or a single site catalyst such as metallocene catalyst as a polymerization catalyst.

Further, homopolypropylene, random polypropylene and block polypropylene may be used singly or in combination of two or more as the biomass-derived polypropylene.

<<Resin Composition Containing Biomass-Derived Polypropylene>>

The resin composition containing biomass-derived polypropylene may contain biomass-derived propylene in an amount of 5 mass% or greater, preferably 5 mass% or greater and 99 mass% or less, more preferably 25 mass% or greater and 75 mass% or less, and most preferably 40 mass% or greater and 75 mass% or less, relative to the entire resin composition. The concentration of the biomass-derived propylene in the resin composition of 5 mass% or greater can reduce the amount of fossil fuels used compared to conventional products, which makes it possible to provide a carbon-neutral decorative sheet.

The above resin composition may contain two or more types of polypropylene having different biomass degrees, and the concentration of the biomass-derived propylene in the entire resin composition is preferably within the above ranges. In other words, the resin composition may also contain fossil fuel-derived propylene. That is, the resin composition can be a mixture of biomass-derived polypropylene and fossil fuel-derived polypropylene. The mixing method is not particularly limited, and for example, a known mixing method such as dry blending or melt blending can be used.

The resin composition contains biomass-derived polypropylene in an amount of preferably 5 mass% or greater and 99 mass% or less, and more preferably 25 mass% or greater and 75 mass% or less, and contains fossil fuel-derived polypropylene in an amount of preferably 1 mass% or greater and 95 mass% or less, and more preferably 25 mass% or greater and 75 mass% or less. When the resin composition is a mixture of such biomass-derived polypropylene and fossil fuel-derived polypropylene, the concentration of the biomass-derived propylene in the entire resin composition is preferably within the above ranges. In other words, the biomass degree relative to the entire transparent resin layer 5 is preferably in the range of 10% or greater and 90% or less. The biomass-derived polypropylene content of 5 mass% or greater can reduce the amount of fossil fuels used compared to conventional products, which makes it possible to provide a carbon-neutral decorative sheet. On the other hand, the biomass-derived polypropylene content of 99 mass% or less makes it possible to adjust additives such as nucleating agents.

«Nucleating Agent Subjected to Nanosizing Treatment»

The transparent resin layer 5 further contains a nucleating agent subjected to nanosizing treatment. A nanoscale nucleating agent is contained in the form of nucleating agent vesicles, in which the nucleating agent is encapsulated by a monolayer outer membrane, in the resin composition. Further, the nucleating agent in the resin composition constituting the transparent resin layer 5 may be encapsulated in vesicles with the nucleating agent partially exposed. Due to containing the nucleating agent, the transparent resin layer 5 can enhance the crystallinity, improving the surface hardness and processability of the decorative sheet 1.

The nanoscale nucleating agent preferably has a mean particle size of 1/2 or less of the wavelength range of visible light. Specifically, since the wavelength range of visible light is 400 nm or greater and 750 nm or less, the mean particle size is preferably 375 nm or less.

Since the nanoscale nucleating agent has a significantly small particle diameter, the number and surface area of the particles of nucleating agent present per unit volume increase in inverse proportion to the cube of the particle diameter. This results in a closer distance between the nucleating agent particles, and when crystal growth occurs on the surface of one particle of the nucleating agent added to the resin, the edge of the growing crystal immediately comes into contact with the edge of a crystal growing on the surface of another adjacent nucleating agent particle, whereby the edge of each crystal inhibits growth of the other crystal, and each crystal stops growing.

Therefore, the mean particle size of spherulites in the crystal part of the crystalline resin can be reduced, and the spherulite size can be reduced to, for example, 1 $\mu$m or less. As a result, a resin composition with high crystallinity and high hardness can be produced, and since the stress concentration between spherulites that occurs during bending processing is efficiently dispersed, it is possible to provide a resin composition capable of preventing occurrence of cracking and whitening during bending processing.

When a nucleating agent is simply added, secondary aggregation of the nucleating agent in the resin causes the particle size to increase. On the other hand, when nucleating agent vesicles are added, the dispersibility in the resin is improved, and thus the number of crystal nuclei relative to the amount of the added nucleating agent significantly increases compared to the case where a nucleating agent is simply added. This reduces the mean particle size of spherulites in the crystal part of the resin, preventing occurrence of cracking and whitening during bending processing. Therefore, the addition of nucleating agent vesicles can further enhance the crystallinity and achieve both improved elastic modulus and improved processability.

The amount of the nucleating agent added to the transparent resin layer 5 may be preferably in the range of 0.05 parts by mass or greater and 0.5 parts by mass or less, and more preferably 0.1 parts by mass or greater and 0.3 parts by mass or less relative to 100 parts by mass of the resin composition. When nucleating agent vesicles are used, the amount of nucleating agent added to the resin composition is the amount added in terms of nucleating agent in the nucleating agent vesicles.

When the amount of the nucleating agent added is less than 0.05 parts by mass, the crystallinity of the resin composition may not be sufficiently enhanced to improve the scratch resistance of the transparent resin layer 5. Further, when the amount of the nucleating agent added exceeds 0.5 parts by mass, an excess of crystal nuclei inhibits the growth of spherulites of the resin composition, and as a result, the crystallinity of the resin composition may not be sufficiently enhanced to improve the scratch resistance of the transparent resin layer 5.

Examples of methods of nanosizing the nucleating agent include a solid phase method in which a nucleating agent is mainly mechanically pulverized to obtain nanoscale particles, a liquid phase method in which nanoscale particles are synthesized or crystallized in a nucleating agent or a solution in which a nucleating agent is dissolved, and a gas phase method in which nanoscale particles are synthesized or crystallized from a nucleating agent or gas or vapor consisting of a nucleating agent, and these methods can be appropriately used.

Examples of the solid phase method include a ball mill, a beads mill, a rod mill, a colloid mill, a conical mill, a disk mill, a hammer mill and a jet mill. Examples of the liquid phase method include a crystallization method, a coprecipitation method, a sol-gel method, a liquid phase reduction method and a hydrothermal synthesis method. Examples of the gas phase method include an electric furnace method, a chemical flame method, a laser method and a thermal plasma method.

A preferred method of nanosizing a nucleating agent is supercritical reverse phase evaporation. The supercritical reverse phase evaporation is a method of preparing capsules (nanoscale vesicles) containing a target substance using carbon dioxide in a supercritical state, or under a temperature or pressure condition that is equal to or higher than the critical point. Carbon dioxide in a supercritical state indicates carbon dioxide that is in a supercritical state with a temperature that is equal to or higher than the critical temperature (30.98°C) and a pressure that is equal to or higher than the critical pressure (7.3773±0.0030 MPa). Carbon dioxide under a temperature condition that is equal to or higher than the critical point or a pressure condition that is equal to or higher than the critical point indicates carbon dioxide under conditions where only one of the temperature and pressure exceeds the critical condition.

In a specific nanosizing treatment by supercritical reverse phase evaporation, an aqueous phase is injected into a mixture fluid of supercritical carbon dioxide, phospholipid as an outer membrane forming substance, and a nucleating agent as an encapsulated substance, followed by stirring to generate an emulsion of supercritical carbon dioxide and the aqueous phase. Then, once the pressure is reduced, the carbon dioxide expands and evaporates to cause phase transition, and nanocapsules (nanovesicles) are formed in which the phospholipid in the form of a monolayer membrane covers the surface of the nucleating agent particles. Unlike the conventional encapsulation method in which the outer membrane forms a multi-layer film on the surface of the nucleating agent particles, the supercritical reverse phase evaporation method enables capsules having a monolayer film to be easily formed. Accordingly, capsules having smaller diameter can be prepared.

Nucleating agent vesicles can be prepared by, for example, the Bangham method, extrusion, hydration, detergent dialysis, reverse phase evaporation, freeze-thaw, supercritical reverse phase evaporation, and the like. In particular, nucleating agent vesicles are preferably prepared by using a supercritical reverse phase evaporation method.

The outer membrane constituting nucleating agent vesicles may be formed of, for example, a monolayer. Further, the outer membrane may be made of, for example, a substance containing a biological lipid such as a phospholipid. In this description, nucleating agent vesicles having an outer membrane made of biological lipid such as phospholipid are referred to as nucleating agent liposomes.

Examples of the phospholipid that constitutes the outer membrane include glycerophospholipids such as phosphatidylcholine, phosphatidylethanolamine, phosphatidylserine, phosphatidic acid, phosphatidylglycerol, phosphatidylinositol, cardiopine, yolk lecithin, hydrogenated yolk lecithin, soybean lecithin and hydrogenated soybean lecithin, and sphingophospholipids such as sphingomyelin, ceramide phosphorylethanolamine and ceramide phosphoryl glycerol.

Other substances that constitute the outer membrane of vesicles may be, for example, dispersants such as nonionic surfactants and mixtures of nonionic surfactants and cholesterols or triacylglycerols.

Examples of the nonionic surfactants include one or more of the following: polyglycerol ether, dialkylglycerine, polyoxyethylene hydrogenated castor oil, polyoxyethylene alkyl ether, polyoxyethylene sorbitan fatty acid ester, sorbitan fatty acid ester, polyoxyethylene polyoxypropylene copolymer, polybutadiene-polyoxyethylene copolymer, polybutadiene-poly(2-vinylpyridine), polystyrene-polyacrylic acid copolymer, polyethylene oxide-polyethylethylene copolymer and polyoxyethylene-polycaprolactam copolymer.

Examples of the cholesterols include cholesterol, α-cholestanol, β-cholestanol, cholestane, desmosterol (5,24-cholestadiene-3β-ol), sodium cholate and cholecalciferol.

The outer membrane of the liposomes may be made of a mixture of phospholipid and a dispersant. The nucleating agent vesicles are preferably radical scavenger liposomes having an outer membrane made of phospholipid, and the outer membrane made of phospholipid ensure good miscibility with the resin composition of the transparent resin layer 5 and the vesicles.

The nucleating agent is not particularly limited as long as it is a substance acting as a starting point for crystallization upon crystallization of the resin. Examples of the nucleating agent may include phosphoric acid ester metal salts, benzoic acid metal salts, pimelic acid metal salts, rosin metal salts, benzylidene sorbitol, quinacridone, cyanine blue and talc. In particular, to maximize the effect of nanosizing treatment, it is preferred to use phosphoric acid ester metal salts, benzoic acid metal salts, pimelic acid metal salts or rosin metal salts, which are non-melting type and expected to exhibit good transparency. Further, colored quinacridone, cyanine blue, talc, and the like may also be used when they can be made transparent by the nano-sizing treatment. In addition, non-melting type nucleating agents can be used by being appropriately mixed with melting type benzylidene sorbitol.

In the present embodiment, a nucleating agent encapsulated in vesicles is added to the resin composition to crystallize the resin composition when forming the transparent resin layer 5. Adding the nucleating agent encapsulated in vesicles to the resin composition has an effect of drastically improving dispersibility of the nucleating agent in the resin composition, that is, in the transparent resin layer 5.

On the other hand, it is assumed that specifying the nucleating agent encapsulated in vesicles directly from the structure or properties of the object in the state of completed decorative sheet 1 may be difficult depending on the situation, and it is considered to be impractical. The reasons are as follows.

The nucleating agent added in the state of vesicles is in a dispersed condition with high dispersibility, and is also highly dispersed in the transparent resin layer 5 even in the state of a laminate which is a precursor of the prepared decorative sheet 1. However, in the production process of the decorative sheet 1, the laminate is usually subjected to various types of treatments, such as compression and curing, and such treatments may cause the outer membrane of vesicles encapsulating the nucleating agent to fracture or chemically react.

Accordingly, the treatments to the decorative sheet 1 may cause the outer membrane of the nucleating agent in the completed decorative sheet 1 to fracture or chemically react in various ways, and it is highly possible that the nucleating agent may not be encapsulated (enveloped) by the outer membrane. When the nucleating agent is not encapsulated by the outer membrane, it is difficult to specify the physical properties of the nucleating agent itself in a numerical range, and it may also be difficult to determine whether the constituent material of the fractured outer membrane is the outer membrane of the vesicles or a material which is added separately from the nucleating agent.

Thus, while the present invention is different from the conventional art in that the nucleating agent is blended in the decorative sheet 1 in a highly dispersed condition, it may be impractical to specify whether this is attributed to the fact that the nucleating agent in the form of vesicles has been added, from a numerical range analyzed based on measurements of the structure and properties of the decorative sheet 1.

Furthermore, various additives may be contained in the resin composition, in addition to polypropylene as the main component, to the extent that the properties of the resin composition are not impaired. Specific examples of the additives include plasticizers, UV stabilizers, anti-colorants, matting agents, deodorants, flame retardants, weathering agents, antistatic agents, thread friction reducers, slip agents, release agents, antioxidants, ion exchanging agents and color pigments. These additives are blended in an amount preferably in the range of 1 mass% or greater and 20 mass% or less, and more preferably 1 mass% or greater and 10 mass% or less, relative to the entire resin composition. Further, if necessary, the transparent resin layer 5 may contain various additives such as colorants, fillers, UV absorbers, photostabilizers, thermal stabilizers, antioxidants, antistatic agents, lubricants, flame retardants, antibacterial agents, antifungal agents, antifriction agents, light scattering agents and matting agents.

The method of producing the transparent resin layer 5 is not particularly limited, and any known method can be used. In the present embodiment, extrusion molding is preferred.

The transparent resin layer 5 may have a thickness preferably in the range of 10 $\mu$m or greater and 150 $\mu$m or less, more preferably 50 $\mu$m or greater and 120 $\mu$m or less, and still more preferably 55 $\mu$m or greater and 100 $\mu$m or less. The thickness of the transparent resin layer 5 of 10 $\mu$m or greater can ensure good embossing, and absorb unevenness and steps in the underlying floor materials or the like to thereby improve the installation finish. On the other hand, the thickness of the transparent resin layer 5 of 150 $\mu$m or less can prevent an unnecessary increase in thickness to thereby suppress an increase in the production cost.

Further, the transparent resin layer 5 may have a density of preferably 0.90 g/cm$^3$ or greater and 0.96 g/cm$^3$ or less, and more preferably 0.90 g/cm$^3$ or greater and 0.91 g/cm$^3$ or less. The density of the transparent resin layer 5 of 0.90 g/cm$^3$ or greater can improve the rigidity. On the other hand, the density of the transparent resin layer 5 of 0.96 g/cm$^3$ or less can improve transparency, flexibility and mechanical strength. The density is a value measured in accordance with Method A specified in Japanese Industrial Standards "JIS K 7112-1980" after being subjected to annealing specified in Japanese Industrial Standards "JIS K 6760-1995".

The transparent resin layer 5 may be a transparent resin layer formed of a resin composition containing biomass-derived polypropylene which is obtained by polymerizing a monomer containing biomass-derived propylene, and may contain fossil fuel-derived polypropylene. Further, the propylene monomer used as a raw material for polypropylene does not have to be all biomass-derived propylene monomer, and a portion of the propylene monomer may be fossil fuel-derived propylene monomer. That is, in the transparent resin layer 5 containing biomass-derived propylene or polypropylene using such propylene, the biomass degree may not necessarily have to be 100.

<Surface Protective Layer 6>

The surface protective layer 6 is laminated on a first surface (upper surface in Fig. 5) of the transparent resin layer 5 and imparts functions such as weatherability, scratch resistance, stain resistance and design properties. The surface protective layer 6 can be made of a thermosetting resin, an ionizing radiation-curable resin, or the like, and may be formed using, for example, an acrylic-based resin composition.

If necessary, the surface protective layer 6 may contain various additives such as weathering agents, plasticizers, stabilizers, fillers, dispersants, colorants such as dyes and pigments, solvents, UV absorbers, thermal stabilizers, photostabilizers, anti-blocking agents, catalyst scavengers, colorants, light scattering agents and matting agents. In addition, if necessary, the surface protective layer 6 may further contain functional additives such as antibacterial agents, antifungal agents and antiviral agents.

<Effects of Present Embodiment>

According to the decorative sheet 1 of the present embodiment, the following effects can be achieved.

(1) The transparent resin layer 5 is formed of a resin composition containing biomass-derived polypropylene which is obtained by polymerizing a monomer containing biomass-derived propylene, and contains a nucleating agent that has been subjected to nanosizing treatment. Accordingly, even when using a plant-derived material having high environmental suitability, it is possible to further improve the surface hardness and processability, and exhibit sufficient transparency and high design properties.
(2) Since the transparent resin layer 5 contains biomass-derived polypropylene in an amount in the range of 5 mass% or greater and 99 mass% or less relative to a total mass of the transparent resin layer 5, the environmental suitability can be further improved.
(3) Since the transparent resin layer 5 has a thickness in the range of 10 $\mu$m or greater and 150 $\mu$m or less, it is possible to ensure good embossing, and absorb unevenness and steps in the underlying floor materials or the like to thereby improve the installation finish.
(4) Since the transparent resin layer 5 has a density in the range of 0.90 g/cm$^3$ or greater and 0.96 g/cm$^3$ or less, it is possible to enhance rigidity, and improve transparency, flexibility and processability.
(5) Since the colored substrate layer 2 is formed of a resin composition containing a polyolefin, the decorative sheet 1 can have sufficient softness.
(6) Since the colored substrate layer 2 has a thickness in the range of 30 $\mu$m or greater and 70 $\mu$m or less, it is possible to absorb unevenness and steps in the underlying floor materials or the like to thereby improve the installation finish.
(7) Since the colored substrate layer 2 has a density in the range of 0.90 g/cm$^3$ or greater and 1.40 g/cm$^3$ or less, it is possible to improve the rigidity and concealing properties, enhance the processability, and reduce the production cost.

[Decorative Material/Main Embodiment]

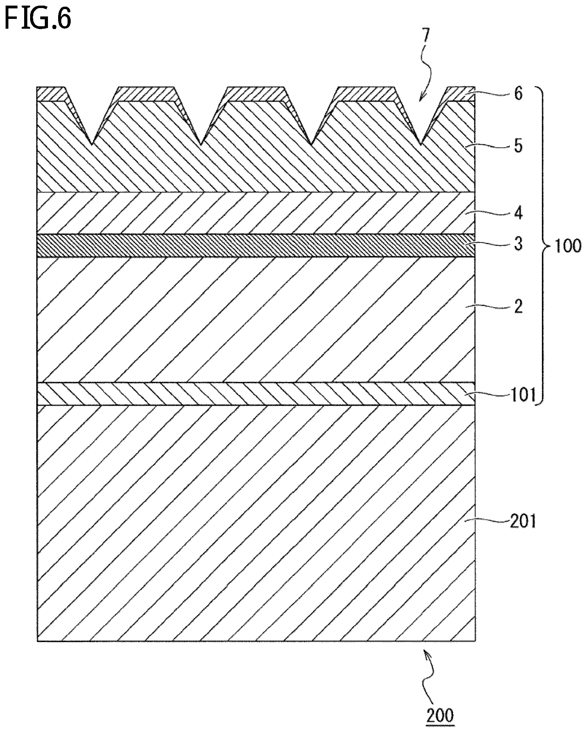

With reference to Fig. 6, a main embodiment of the decorative material according to the present invention will be described. The parts similar to those in the above embodiments of the decorative sheet are denoted by similar reference signs to those in the above embodiments of the decorative sheet, and redundant description will be omitted.

<Decorative Material 200>

As shown in Fig. 6, in a decorative material 200, a colored substrate layer 2 of a decorative sheet 100 is laminated on a first surface (upper surface in Fig. 6) of a plate-shaped substrate material 201 via a primer layer 101.

<Decorative Sheet 100>

The decorative sheet 100 is the same as the decorative sheet 1, except that the primer layer 101 is laminated on a second surface (lower surface in Fig. 6) of the colored substrate layer 2.

<Primer Layer 101>

The primer layer 101 is laminated on the second surface (lower surface in Fig. 6) of the colored substrate layer 2, and improves corrosion resistance and adhesion between the colored substrate layer 2 and the substrate material 201. The primer layer 101 may be formed of, for example, a polyester-based resin, an organic additive, a pigment, or the like. The primer layer 101 may further contain an anti-corrosive pigment in order to improve corrosion resistance. The primer layer 101 may have a thickness preferably in the range of 1 $\mu$m or greater and 10 $\mu$m or less.

<Substrate Material 201>

The substrate material 201 has a plate shape formed of, for example, a wooden board, an inorganic board, a metal plate, or the like, with the decorative sheet 100 laminated on the first surface (upper surface in Fig. 6) of the substrate material 201 via the primer layer 101.

<Effects of Present Embodiment>

According to the decorative material 200 of the present embodiment, even when using a plant-derived material having high environmental suitability, it is possible to further improve the surface hardness and processability, and exhibit sufficient transparency and high design properties.

[Other Embodiments]

In the embodiment described above, the decorative material 200 has a configuration in which the decorative sheet 100 is laminated on the first surface of the substrate material 201, but the present invention is not limited thereto. For example, the decorative material may have a configuration in which the decorative sheet 100 is laminated on both the first and second surfaces of the substrate material 201.

[Examples]

Examples of the decorative sheet and the decorative material according to the present invention will be specifically described below, but the present invention is not limited to the examples specifically described below.

[Preparation of Specimens and Comparative Specimens]

<Specimen 8-1>

A colored substrate layer (thickness 55 $\mu$m, density 1.36 g/cm$^3$) was obtained by calendering a polyethylene (petroleum-derived) resin composition. Further, a biomass-derived homopolypropylene resin and a polypropylene (petroleum-derived) resin were mixed at a mass ratio of 90:10, and 500 ppm of a hindered phenol-based antioxidant, 2,000 ppm of a benzotriazole-based UV absorber and 2,000 ppm of a hindered amine-based photostabilizer were added to the mixture, together with 1,000 ppm of a nucleating agent (sodium 2,2'-methylene bis(4,6-di-t-butyl phenyl) phosphate) that had been nanosized by a solid phase method. The resulting product was melt-mixed in a melt-extruder and laminated with an extruder to obtain a highly crystalline transparent resin layer (thickness 70 $\mu$m, density 0.91 g/cm$^3$).

A first surface of the colored substrate layer was subjected to a corona discharge treatment, and both surfaces of the transparent resin layer were subjected to a corona discharge treatment. Next, the first surface of the colored substrate layer was printed with a urethane-based printing ink to form a pattern layer (thickness 2 $\mu$m). Then, after a urethane-based adhesive and a maleic anhydride-modified polyethylene resin adhesive were applied to form an adhesive layer (thickness 10 $\mu$m), a transparent resin layer was laminated, and a surface protective layer (thickness 6 $\mu$m) mainly composed of an acrylic-based resin composition was further laminated. Finally, a second surface of the colored substrate layer was subjected to a corona discharge treatment, and a primer layer (thickness 1 $\mu$m to 2 $\mu$m) composed of a polyester-based resin composition was laminated to obtain a decorative sheet (thickness 135 $\mu$m), which was then bonded to a substrate (thickness 2.5mm) formed of a medium density fiberboard (MDF) via a primer layer. Thus, Specimen 8-1 of the decorative material was prepared.

<Specimen 8-2>

Specimen 8-2 of the decorative material was obtained in the same manner as Specimen 8-1, except that the mass ratio of the biomass-derived polypropylene resin and the petroleum-derived polypropylene resin in the transparent resin layer was changed to 5:95.

<Specimen 8-3>

Specimen 8-3 of the decorative material was obtained in the same manner as Specimen 8-1, except that the mass ratio of the biomass-derived polypropylene resin and the petroleum-derived polypropylene resin in the transparent resin layer was changed to 99:1.

<Specimen 8-4>

Specimen 8-4 of the decorative material (thickness 50 $\mu$m) was obtained in the same manner as Specimen 8-1, except that the thickness of the colored substrate layer was changed to 30 $\mu$m and the thickness of the transparent resin layer was changed to 10 $\mu$m.

<Specimen 8-5>

Specimen 8-5 of the decorative material (thickness 235 $\mu$m) was obtained in the same manner as Specimen 8-1, except that the thickness of the colored substrate layer was changed to 70 $\mu$m and the thickness of the transparent resin layer was changed to 150 $\mu$m.

<Specimen 8-6>

Specimen 8-6 of the decorative material was obtained in the same manner as Specimen 8-1, except that the density of the colored substrate layer was changed to 0.90 g/cm$^3$ and the density of the transparent resin layer was changed to 0.90 g/cm$^3$.

<Specimen 8-7>

Specimen 8-7 of the decorative material was obtained in the same manner as Specimen 8-1, except that the density of the colored substrate layer was changed to 1.40 g/cm$^3$ and the density of the transparent resin layer was changed to 0.96 g/cm$^3$.

<Specimen 8-8>

Specimen 8-8 of the decorative material was obtained in the same manner as Specimen 8-1, except that a colored substrate layer (thickness 60 $\mu$m, density 1.05 g/cm$^3$) was obtained by calendering a polypropylene (petroleum-derived) resin composition.

<Comparative Specimen 8-1>

Comparative specimen 8-1 of the decorative material was obtained in the same manner as Specimen 8-1, except that a transparent resin layer was prepared without adding the nanosized nucleating agent.

<Comparative Specimen 8-2>

Comparative specimen 8-2 of the decorative material was obtained in the same manner as Specimen 8-8, except that a transparent resin layer was prepared without adding the nanosized nucleating agent.

<Comparative Specimen 8-3>

Comparative specimen 8-3 of the decorative material was obtained in the same manner as Specimen 8-1, except that a transparent resin layer was prepared using a polypropylene (petroleum-derived) resin instead of the biomass-derived homopolypropylene resin, that is, the polypropylene resin in the transparent resin layer was formed only of a petroleum-derived resin.

[Test Methods]

<Pencil Hardness Test>

Specimens 8-1 to 8-8 and Comparative specimens 8-1 to 8-3 were subjected to a pencil hardness test in accordance with Japanese Industrial Standards "JIS K 5600-5-4". That is, a scratch test was performed by sequentially increasing the pencil hardness, and a surface (surface protective layer) was visually inspected for damage (gouging). Table 9 shows the results.

In Table 9, "good" indicates that damage to the surface occurred when a pencil with a hardness of 4B or higher was used, "fair" indicates that damage to the surface occurred when a pencil with a hardness of 5B was used, and "poor" indicates that damage to the surface occurred when a pencil with a hardness of 6B or lower was used.

<Hoffman Scratch Test>

Specimens 8-1 to 8-8 and Comparative specimens 8-1 to 8-3 were subjected to a Hoffman scratch test. Specifically, a cylindrical (diameter 7 mm) scratch blade (blade edge) was set in a tester so that the blade abuts against a surface (surface protective layer) of Specimens 8-1 to 8-8 and Comparative specimens 8-1 to 8-3 at an angle of 45 degrees. The scratch blade with a load was slid against the surface, and then the surface was visually inspected to determine whether it was scratched and the load at which the scratching occurred (in 200 g increments in the range of 200 to 2,000 g). For example, when scratching occurred with a load of 600 g, the load capacity was determined to be "400 g." Table 9 shows the results.

<Processability Test>

Specimens 8-1 to 8-8 and Comparative specimens 8-1 to 8-3 were subjected to a V-cut bending processability test. That is, a V-shaped cut was formed in Specimens 8-1 to 8-8 and Comparative specimens 8-1 to 8-3, which were then subjected to bending processing, and the specimens were visually inspected for whitening or cracking. Table 9 shows the results. In Table 9, "good" indicates that no whitening and cracking occurred, "fair" indicates that insignificant whitening and cracking occurred, and "poor" indicates that clear whitening and cracking occurred.

<Fossil Fuel Dependency>

In Specimens 8-1 to 8-8 and Comparative specimens 8-1 to 8-3, the fossil fuel dependency of the materials used was assessed. Table 9 shows the results. In table 9, "excellent" indicates that the fossil fuel dependency is extremely low, "good" indicates that the fossil fuel dependency is very low, "fair" indicates that the fossil fuel dependency is low, and "poor" indicates that the fossil fuel dependency is high.

[Test Results]

Table 9 shows the test results of Specimens 8-1 to 8-8 and Comparative specimens 8-1 to 8-3.

[Table 9]

| | Colored resin layer | | | Transparent resin layer | | | | Pencil hardness test | Hoffman scratch test | Processability test | Fossil fuel dependency |
|---|---|---|---|---|---|---|---|---|---|---|---|
| | Material | Thickness (μm) | Density (g/cm³) | Natural-derived percentage (%) | Thickness (μm) | Density (g/cm³) | Nucleating agent | | | | |
| Specimen 8-1 | PE | 55 | 1.36 | 90 | 70 | 0.91 | yes | good | 1,200 g | good | good |
| Specimen 8-2 | PE | 55 | 1.36 | 5 | 70 | 0.91 | yes | good | 1,200 g | good | fair |
| Specimen 8-3 | PE | 55 | 1.36 | 99 | 70 | 0.91 | yes | good | 1,200 g | good | excellent |
| Specimen 8-4 | PE | 30 | 1.36 | 90 | 10 | 0.91 | yes | fair | 1,000 g | good | good |
| Specimen 8-5 | PE | 70 | 1.36 | 90 | 150 | 0.91 | yes | good | 1,200 g | fair | good |
| Specimen 8-6 | PE | 55 | 0.90 | 90 | 70 | 0.90 | yes | good | 1,200 g | good | good |
| Specimen 8-7 | PE | 55 | 1.40 | 90 | 70 | 0.96 | yes | good | 1,200 g | fair | good |
| Specimen 8-8 | PP | 60 | 1.05 | 90 | 70 | 0.91 | yes | good | 1,200 g | good | good |
| Comparative specimen 8-1 | PE | 55 | 1.36 | 90 | 70 | 0.91 | no | fair | 400 g | fair | good |
| Comparative specimen 8-2 | PP | 60 | 1.05 | 90 | 70 | 0.91 | no | fair | 400 g | fair | good |
| Comparative specimen 8-3 | PE | 55 | 1.36 | 0 | 70 | 0.91 | yes | good | 1,200 g | good | poor |

As seen from Table 9, Specimens 8-1 to 8-8 showed better results than Comparative specimens 8-1 to 8-3.

Further, the invention according to the eighth embodiment can have, for example, the following configurations.

(1) A decorative sheet including: a colored resin layer formed of a colored thermoplastic resin; an adhesive layer having adhesive properties; and a transparent resin layer formed of a transparent thermoplastic resin, which are laminated in this order, wherein the transparent resin layer is formed of a resin composition containing biomass-derived polypropylene which is obtained by polymerizing a monomer containing biomass-derived propylene, and contains a nucleating agent that has been subjected to nanosizing treatment.

(2) The decorative sheet according to the above (1), wherein the transparent resin layer contains the biomass-derived polypropylene in an amount in the range of 5 mass% or greater and 99 mass% or less relative to a total mass of the transparent resin layer.

(3) The decorative sheet according to the above (1) or (2), wherein the transparent resin layer has a thickness in the range of 10 $\mu$m or greater and 150 $\mu$m or less.

(4) The decorative sheet according to any one of the above (1) to (3), wherein the transparent resin layer has a density in the range of 0.90 g/cm$^3$ or greater and 0.96 g/cm$^3$ or less.

(5) The decorative sheet according to any one of the above (1) to (4), wherein the colored resin layer is formed of a resin composition containing a polyolefin.

(6) The decorative sheet according to any one of the above (1) to (5), wherein the colored resin layer has a thickness in the range of 30 $\mu$m or greater and 70 $\mu$m or less.

(7) The decorative sheet according to any one of the above (1) to (6), wherein the colored resin layer has a density in the range of 0.90 g/cm$^3$ or greater and 1.40 g/cm$^3$ or less.

(8) A decorative material including: a substrate material; and the decorative sheet according to any one of the above (1) to (7), the decorative sheet being laminated on at least a first surface of the substrate material.

[Industrial Applicability]

Decorative sheets and decorative materials according to the present invention can be used extremely effectively in various industries, including the construction industry, since they can at least suppress a decrease in surface hardness even when using plant-derived materials.

[Reference Signs List]

1 Decorative sheet
2 Colored substrate layer (colored resin layer)
3 Pattern layer
4 Adhesive layer
5 Transparent resin layer
6 Surface protective layer
7 Uneven portion (embossed portion)
8 Primer layer
9 Substrate material
10 Decorative material
11 Decorative sheet
12 Decorative adhesive sheet
13 Decorative material
20 Transparent base
21 Transparent skin layer
22 Transparent core layer
23 Transparent skin layer
25 Embossed portion
30 Primer layer
40 Colored layer
50 Printed pattern layer
60 Surface protective layer
70 Pressure-sensitive adhesive layer
80 Release paper

91 Substrate material
100 Decorative sheet
101 Primer layer
200 Decorative material
201 Substrate material

**Claims**

1.  A decorative sheet comprising:

    a colored thermoplastic resin layer;
    an adhesive layer; and
    a transparent thermoplastic resin layer, which are laminated in this order, wherein
    the transparent thermoplastic resin layer is a resin layer formed of a resin composition containing biomass-derived polypropylene which is obtained by polymerizing a monomer containing biomass-derived propylene.

2.  The decorative sheet according to claim 1, wherein
    the transparent thermoplastic resin layer contains the biomass-derived polypropylene in an amount in the range of 5 mass% or greater and 99 mass% or less relative to a total mass of the transparent thermoplastic resin layer.

3.  The decorative sheet according to claim 1 or 2, wherein

    the colored thermoplastic resin layer has a thickness in the range of 30 $\mu$m or greater and 70 $\mu$m or less, and
    the transparent thermoplastic resin layer has a thickness in the range of 10 $\mu$m or greater and 150 $\mu$m or less.

4.  The decorative sheet according to any one of claims 1 to 3, wherein
    the transparent thermoplastic resin layer contains the biomass-derived propylene and has a density in the range of 0.90 g/cm$^3$ or greater and 0.96 g/cm$^3$ or less.

5.  The decorative sheet according to any one of claims 1 to 4, wherein
    the colored thermoplastic resin layer has a density in the range of 0.90 g/cm$^3$ or greater and 1.40 g/cm$^3$ or less.

6.  The decorative sheet according to any one of claims 1 to 5, wherein
    the colored thermoplastic resin layer is a resin layer formed of a resin composition containing a polyolefin.

7.  A decorative sheet comprising:

    a colored thermoplastic resin layer;
    an adhesive layer;
    a transparent thermoplastic resin layer; and
    a surface protective layer, which are laminated in this order, wherein
    each of the colored thermoplastic resin layer and the transparent thermoplastic resin layer is a resin layer formed of a resin composition containing biomass-derived polypropylene which is obtained by polymerizing a monomer containing biomass-derived propylene, and
    the surface protective layer is a resin layer formed of a resin composition containing a biomass-derived material.

8.  The decorative sheet according to claim 7, wherein

    the colored thermoplastic resin layer contains the biomass-derived polypropylene in an amount in the range of 5 mass% or greater and 99 mass% or less relative to a total mass of the colored thermoplastic resin layer, and
    the transparent thermoplastic resin layer contains the biomass-derived polypropylene in an amount in the range of 5 mass% or greater and 99 mass% or less relative to a total mass of the transparent thermoplastic resin layer.

9.  The decorative sheet according to claim 7 or 8, wherein

    the colored thermoplastic resin layer has a thickness in the range of 30 $\mu$m or greater and 150 $\mu$m or less and a specific gravity in the range of 0.90 or greater and 1.20 or less, and

the transparent thermoplastic resin layer has a thickness of 10 $\mu$m or greater and 150 $\mu$m or less and a specific gravity in the range of 0.90 or greater and 0.96 or less.

10. The decorative sheet according to any one of claims 7 to 9, wherein
the surface protective layer contains biomass-derived urethane (meth)acrylate as the biomass-derived material.

11. The decorative sheet according to claim 10, wherein

the biomass-derived urethane (meth)acrylate is a reaction product of a polyol, an isocyanate compound and a hydroxy (meth)acrylate, and
at least one of the polyol, the isocyanate compound and the hydroxy (meth)acrylate contains a biomass-derived component.

12. A decorative sheet comprising:

a colored thermoplastic resin layer;
an adhesive layer; and
a transparent thermoplastic resin layer, which are laminated in this order, wherein
each of the colored thermoplastic resin layer and the transparent thermoplastic resin layer is a resin layer formed of a resin composition containing biomass-derived polypropylene which is obtained by polymerizing a monomer containing biomass-derived propylene.

13. The decorative sheet according to claim 12, wherein

the colored thermoplastic resin layer contains the biomass-derived polypropylene in an amount in the range of 5 mass% or greater and 99 mass% or less relative to a total mass of the colored thermoplastic resin layer, and
the transparent thermoplastic resin layer contains the biomass-derived polypropylene in an amount in the range of 5 mass% or greater and 99 mass% or less relative to a total mass of the transparent thermoplastic resin layer.

14. The decorative sheet according to claim 12 or 13, wherein

the colored thermoplastic resin layer has a thickness in the range of 10 $\mu$m or greater and 150 $\mu$m or less, and
the transparent thermoplastic resin layer has a thickness in the range of 10 $\mu$m or greater and 150 $\mu$m or less.

15. The decorative sheet according to any one of claims 12 to 14, wherein
the transparent thermoplastic resin layer contains the biomass-derived propylene and has a density in the range of 0.90 g/cm$^3$ or greater and 0.96 g/cm$^3$ or less.

16. The decorative sheet according to any one of claims 12 to 15, wherein
the colored thermoplastic resin layer contains the biomass-derived propylene and has a density in the range of 0.90 g/cm$^3$ or greater and 1.40 g/cm$^3$ or less.

17. A decorative sheet comprising:

a colored thermoplastic resin layer;
a pattern layer;
an adhesive layer; and
a transparent thermoplastic resin layer, which are laminated in this order, wherein
each of the colored thermoplastic resin layer and the transparent thermoplastic resin layer is a resin layer formed of a resin composition containing biomass-derived polypropylene which is obtained by polymerizing a monomer containing biomass-derived propylene, and
the pattern layer contains a colorant and a biomass-derived material.

18. The decorative sheet according to claim 17, wherein

the colored thermoplastic resin layer contains the biomass-derived polypropylene in an amount in the range of 5 mass% or greater and 99 mass% or less relative to a total mass of the colored thermoplastic resin layer, and
the transparent thermoplastic resin layer contains the biomass-derived polypropylene in an amount in the range of 5 mass% or greater and 99 mass% or less relative to a total mass of the transparent thermoplastic resin layer.

19. The decorative sheet according to claim 17 or 18, wherein
the pattern layer contains biomass-derived urethane (meth)acrylate as the biomass-derived material.

20. The decorative sheet according to claim 19, wherein

the biomass-derived urethane (meth)acrylate is a reaction product of a polyol, an isocyanate compound and a hydroxy (meth)acrylate, and
at least one of the polyol, the isocyanate compound and the hydroxy (meth)acrylate contains a biomass-derived component.

21. The decorative sheet according to any one of claims 17 to 20, wherein

the colored thermoplastic resin layer has a thickness in the range of 30 μm or greater and 70 μm or less, and
the transparent thermoplastic resin layer has a thickness in the range of 10 μm or greater and 150 μm or less.

22. A decorative sheet comprising:

a colored thermoplastic resin layer;
an adhesive layer; and
a transparent thermoplastic resin layer, which are laminated in this order, wherein
each of the colored thermoplastic resin layer and the transparent thermoplastic resin layer is a resin layer formed of a resin composition containing biomass-derived polypropylene which is obtained by polymerizing a monomer containing biomass-derived propylene,
the colored thermoplastic resin layer further contains an inorganic substance, and
the colored thermoplastic resin layer has a specific gravity in the range of 0.91 or greater and 1.3 or less.

23. The decorative sheet according to claim 22, wherein

the colored thermoplastic resin layer contains the biomass-derived polypropylene in an amount in the range of 5 mass% or greater and 99 mass% or less relative to a total mass of the colored thermoplastic resin layer, and
the transparent thermoplastic resin layer contains the biomass-derived polypropylene in an amount in the range of 5 mass% or greater and 99 mass% or less relative to a total mass of the transparent thermoplastic resin layer.

24. The decorative sheet according to claim 22 or 23, wherein

the colored thermoplastic resin layer has a thickness in the range of 30 μm or greater and 100 μm or less, and
the transparent thermoplastic resin layer has a thickness in the range of 10 μm or greater and 150 μm or less.

25. The decorative sheet according to any one of claims 22 to 24, wherein
the inorganic substance is one or more of calcium carbonate, titanium oxide, carbon black, silica, chromium, antimony, titanium composites, and oxides thereof.

26. The decorative sheet according to any one of claims 22 to 25, wherein
a specific gravity of the entire decorative sheet is in the range of 0.91 or greater and 1.30 or less.

27. A decorative sheet comprising at least a thermoplastic resin layer, wherein
the thermoplastic resin layer is a resin layer formed of a resin composition containing biomass-derived polypropylene which is obtained by polymerizing a monomer containing biomass-derived propylene, the thermoplastic resin layer being colored or colorless transparent.

28. The decorative sheet according to claim 27, further comprising a surface protective layer, wherein

the thermoplastic resin layer is provided with an uneven portion on a first surface thereof, and
the surface protective layer is a resin layer laminated on the first surface of the thermoplastic resin layer and containing a biomass-derived component.

29. The decorative sheet according to claim 27 or 28, wherein
the thermoplastic resin layer contains biomass-derived polypropylene in an amount in the range of 5 mass% or greater and less than 99 mass% relative to a total mass of the thermoplastic resin layer.

30. The decorative sheet according to any one of claims 27 to 29, wherein
the thermoplastic resin layer has a thickness in the range of 50 μm or greater and 300 μm or less and a specific gravity in the range of 0.9 or greater and 1.3 or less.

31. The decorative sheet according to any one of claims 27 to 30, wherein
no pattern layer is laminated on the thermoplastic resin layer.

32. The decorative sheet according to any one of claims 27 to 30, wherein

a pattern layer is laminated on the thermoplastic resin layer, and
the thermoplastic resin layer is colorless and transparent.

33. A decorative sheet comprising at least a transparent thermoplastic resin layer, with no laminate layer made of any other film disposed on front and rear sides of the transparent thermoplastic resin layer, wherein
the transparent thermoplastic resin layer is a resin layer formed of a resin composition containing biomass-derived polypropylene which is obtained by polymerizing a monomer containing biomass-derived propylene.

34. The decorative sheet according to claim 33, wherein
the transparent thermoplastic resin layer contains the biomass-derived polypropylene in an amount of 5 mass% or greater relative to a total mass of the transparent thermoplastic resin layer.

35. The decorative sheet according to claim 33 or 34, wherein
the transparent thermoplastic resin layer contains the biomass-derived propylene and has a density in the range of 0.90 g/cm$^3$ or greater and 0.96 g/cm$^3$ or less.

36. The decorative sheet according to any one of claims 33 to 35, wherein
the transparent thermoplastic resin layer has a tensile modulus of elasticity in the range of 400 MPa or greater and 1,800 MPa or less.

37. The decorative sheet according to any one of claims 33 to 36, wherein
the transparent thermoplastic resin layer has a thickness in the range of 50 μm or greater and 200 μm or less.

38. The decorative sheet according to any one of claims 33 to 37, wherein
the transparent thermoplastic resin layer contains at least one of a UV absorber and a nanoscale nucleating agent.

39. The decorative sheet according to any one of claims 33 to 38, wherein
the transparent thermoplastic resin layer is a monolayer sheet produced by extrusion-molding the resin composition, the monolayer sheet having a configuration of two types of three layers composed of a transparent skin layer, a transparent core layer and a transparent skin layer laminated in this order.

40. The decorative sheet according to claim 39, wherein
the transparent skin layer contains a nanoscale nucleating agent.

41. The decorative sheet according to claim 39 or 40, wherein
the transparent core layer contains a UV absorber.

42. The decorative sheet according to any one of claims 33 to 41, wherein
a pattern layer and a colored layer are disposed in this order on a rear side of the transparent thermoplastic resin layer, and a surface protective layer is disposed on a front side of the transparent thermoplastic resin layer.

43. The decorative sheet according to claim 42, wherein
the pattern layer, the colored layer and a primer layer are formed in this order on a rear side of the transparent thermoplastic resin layer.

44. The decorative sheet according to claim 42 or 43, wherein
an embossed portion matched with the pattern layer is formed on a front side of the transparent thermoplastic resin layer.

45. The decorative sheet according to any one of claims 42 to 44, wherein
a specific gravity of the entire decorative sheet is 0.88 or greater and 1.3 or less.

46. The decorative sheet according to any one of claims 42 to 45, wherein
a thickness of the entire decorative sheet is in the range of 50 $\mu$m or greater and 200 $\mu$m or less.

47. A decorative sheet comprising:

a colored thermoplastic resin layer;
an adhesive layer; and
a transparent thermoplastic resin layer, which are laminated in this order, wherein
the transparent thermoplastic resin layer is formed of a resin composition containing biomass-derived polypropylene which is obtained by polymerizing a monomer containing biomass-derived propylene, and contains a nucleating agent that has been subjected to nanosizing treatment.

48. The decorative sheet according to claim 47, wherein
the transparent thermoplastic resin layer contains the biomass-derived polypropylene in an amount in the range of 5 mass% or greater and 99 mass% or less relative to a total mass of the transparent thermoplastic resin layer.

49. The decorative sheet according to claim 47 or 48, wherein
the transparent thermoplastic resin layer has a thickness in the range of 10 $\mu$m or greater and 150 $\mu$m or less.

50. The decorative sheet according to any one of claims 47 to 49, wherein
the transparent thermoplastic resin layer has a density in the range of 0.90 g/cm$^3$ or greater and 0.96 g/cm$^3$ or less.

51. The decorative sheet according to any one of claims 47 to 50, wherein
the colored thermoplastic resin layer is formed of a resin composition containing a polyolefin.

52. The decorative sheet according to any one of claims 47 to 51, wherein
the colored thermoplastic resin layer has a thickness in the range of 30 $\mu$m or greater and 70 $\mu$m or less.

53. The decorative sheet according to any one of claims 47 to 52, wherein
the colored thermoplastic resin layer has a density in the range of 0.90 g/cm$^3$ or greater and 1.40 g/cm$^3$ or less.

54. A decorative material comprising:

a substrate material; and
the decorative sheet according to claim 31 or 32, the decorative sheet being laminated on at least a first surface of the substrate material, wherein
a phase difference occurs between the substrate material and the pattern layer.

55. A decorative material comprising:

a substrate material; and
the decorative sheet according to any one of claims 1 to 53, the decorative sheet being laminated on at least a first surface of the substrate material.

## FIG.1

FIG.2

FIG.3

FIG.4

FIG.5

# FIG.6

<div align="center">

**INTERNATIONAL SEARCH REPORT**

</div>

| International application No. |
|---|
| **PCT/JP2023/010126** |

### A.    CLASSIFICATION OF SUBJECT MATTER

*B32B 27/32*(2006.01)i; *B27M 3/00*(2006.01)i; *B32B 27/00*(2006.01)i; *C08K 3/01*(2018.01)i; *C08L 23/12*(2006.01)i; *E04F 13/07*(2006.01)n; *E04F 15/02*(2006.01)n; *E04F 15/16*(2006.01)n
FI:    B32B27/32 Z; B27M3/00 N; B32B27/00 E; B32B27/32 E; C08K3/01; C08L23/12 ZAB; E04F13/07 B; E04F13/07 C; E04F15/02 A; E04F15/16 A

According to International Patent Classification (IPC) or to both national classification and IPC

### B.    FIELDS SEARCHED

Minimum documentation searched (classification system followed by classification symbols)

B32B1/00-43/00; C08K3/01; C08L23/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | WO 2018/062340 A1 (DAI NIPPON PRINTING CO., LTD.) 05 April 2018 (2018-04-05) claims, paragraphs [0019], [0025]-[0028], [0052]-[0059], examples 1, 3 | 1-32, 47-55 |
| Y | WO 2016/076360 A1 (TOPPAN COSMO INC.) 19 May 2016 (2016-05-19) claims, paragraphs [0073], [0085], [0088]-[0092], [0099], [0106]-[0117], examples 4, 12 | 1-55 |
| Y | WO 2014/065380 A1 (TOYO KOHAN CO., LTD.) 01 May 2014 (2014-05-01) claims, paragraphs [0008], [0013]-[0018] | 1-55 |
| Y | WO 2021/038972 A1 (TBM CO., LTD.) 04 March 2021 (2021-03-04) claims, paragraphs [0042]-[0049], [0062]-[0065], examples 3-1 to 4-3 | 1-55 |
| Y | JP 2011-38207 A (UNITIKA LTD.) 24 February 2011 (2011-02-24) claims, paragraphs [0003], [0013], examples 4, 5 | 1-55 |
| Y | JP 2020-55165 A (DAI NIPPON PRINTING CO., LTD.) 09 April 2020 (2020-04-09) claims, paragraphs [0034]-[0061] | 7-11, 17-21, 28 |

☐ Further documents are listed in the continuation of Box C.      ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/010126**

| Box No. III | Observations where unity of invention is lacking (Continuation of item 3 of first sheet) |
|---|---|

This International Searching Authority found multiple inventions in this international application, as follows:

Invention 1: The invention in claim 1 as the special technical feature of "a decorative sheet in which a colored thermoplastic resin layer, an adhesion layer, and a transparent thermoplastic resin layer are provided in that order, and the transparent thermoplastic resin layer is a resin layer formed of a resin composition containing biomass-derived polypropylene obtained by polymerizing a monomer containing biomass-derived propylene". Thus, claims 2-26 and 47-53, which have the above special technical feature, and those parts of claim 55 which cite claims 1-26 and 47-53, are classified as invention 1.

Invention 2: The invention in claim 27 has the invention-defining feature of "a decorative sheet provided with at least a thermoplastic resin layer, wherein the thermoplastic resin layer...is a resin layer formed of a resin composition containing biomass-derived polypropylene, and is colored or colorless and transparent", but does not have the above special technical feature. Likewise, the invention in claim 33 has the invention-defining feature of "a decorative sheet provided with at least a transparent thermoplastic resin layer, wherein...a laminate layer comprising another film is not present on either a front side or a back side, and...is a resin layer formed of a resin composition containing biomass-derived polypropylene", but does not have the above special technical feature.

Claims 27 and 33 have in common the technical feature of a decorative sheet provided with a transparent thermoplastic resin layer and having a resin layer formed of a resin composition containing biomass-derived polypropylene. The same applies to claims 28-32 and 34-46, which cite claims 27 and 33, and those parts of claims 54-55 which cite claims 27-43.

Therefore, claims 27-46, claim 54, and those parts of claim 55 which cite claims 27-32 are classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

INTERNATIONAL SEARCH REPORT
Information on patent family members

International application No.

**PCT/JP2023/010126**

| Patent document cited in search report | | | Publication date (day/month/year) | Patent family member(s) | Publication date (day/month/year) |
|---|---|---|---|---|---|
| WO | 2018/062340 | A1 | 05 April 2018 | US 2019/0248100 A1 claims, paragraphs [0034], [0040]-[0044], [0067]-[0074], examples 1, 3 EP 3521018 A1 CN 109789677 A KR 10-2019-0052714 A | |
| WO | 2016/076360 | A1 | 19 May 2016 | US 2018/0186132 A1 claims, paragraphs [0085], [0097], [0100]-[0104], [0115], [0121]-[0133], examples 4, 12 EP 3219488 A1 AU 2015347747 A KR 10-2017-0084083 A CN 107073913 A ES 2926697 T | |
| WO | 2014/065380 | A1 | 01 May 2014 | CN 104837626 A KR 10-2015-0079716 A TW 201422432 A | |
| WO | 2021/038972 | A1 | 04 March 2021 | US 2022/0275168 A1 claims, paragraphs [0059]-[0068], [0089]-[0092], examples 3-1 to 4-3 EP 4023563 A1 CN 114286790 A | |
| JP | 2011-38207 | A | 24 February 2011 | (Family: none) | |
| JP | 2020-55165 | A | 09 April 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014188941 A
- JP 2006110929 A
- JP 2015199313 A
- JP 2016101663 A